# EUROPÄISCHE PATENTSCHRIFT

(11) **EP 1 558 619 B1**
(45) Veröffentlichungstag und Bekanntmachung des Hinweises auf die Patenterteilung: **12.03.2008**
(21) Anmeldenummer: 03753454.2
(22) Anmeldetag: 25.09.2003
(51) Int. Cl.: C07F 15/00

(54) **RHODIUM UND IRIDIUM-KOMPLEXE**
RHODIUM AND IRIDIUM COMPLEXES
COMPLEXES DE RHODIUM ET D'IRIDIUM

(30) Priorität: 26.10.2002 DE 10249926
(43) Veröffentlichungstag der Anmeldung: 03.08.2005
(73) Patentinhaber: Merck Patent GmbH, 64293 Darmstadt (DE)
(72) Erfinder: STÖSSEL, Philipp, 60487 Frankfurt am Main (DE); SPREITZER, Hubert, 68519 Viernheim (DE); BACH, Ingrid, 65719 Hofheim (DE)
(86) Internationale Anmeldenummer: PCT/EP2003/010652
(87) Internationale Veröffentlichungsnummer: WO 2004/037836

(56) Entgegenhaltungen:
- EP-A- 1 191 613
- JP-A- 2003 073 387

## Beschreibung

Metallorganische Verbindungen - speziell Verbindungen der d⁸-Metalle-werden in naher Zukunft als Wirkkomponenten (= Funktionsmaterialien) in einer Reihe von verschiedenartigen Anwendungen, die im weitesten Sinne der Elektronik-industrie zugerechnet werden können, Einsatz als funktionelle Komponenten finden. Bei den auf organischen Komponenten basierenden Organischen-Elektro-lumineszenz-Vorrichtungen (allg. Beschreibung des Aufbaus vgl.
US-A-4,539,507 und US-A-5,151,629) bzw. deren Einzelbauteilen, den Organischen-Lichtemittierenden-Dioden (OLEDs) ist die Markteinführung bereits erfolgt, wie die erhältlichen Auto-Radios mit "Organischem Display" der Firma Pioneer belegen. Weitere derartige Produkte stehen kurz vor der Einführung. Trotz allem sind hier noch deutliche Verbesserungen nötig, um diese Displays zu einer echten Konkurrenz zu den derzeit marktbeherrschenden Flüssigkristallanzeigen (LCD) zu machen bzw. diese zu überflügeln. Eine Entwicklung hierzu, die sich in den letzten Jahren abzeichnet, ist der Einsatz von metallorganischen Komplexen, die Phosphoreszenz statt Fluoreszenz zeigen [M. A. Baldo, S. Lamansky, P. E. Burrows, M. E. Thompson, S. R. Forrest, Applied Physics Letters, 1999, 75, 4-6].
Aus theoretischen Spin-statistischen Gründen ist unter Verwendung metall-organischer Verbindungen als Phosphoreszenz-Emittern eine bis zu vierfache Energie- und Leistungseffizienz möglich. Ob sich diese neue Entwicklung durchsetzten wird, hängt stark davon ab, ob entsprechende Device-Kompositionen gefunden werden können, die diese Vorteile (Triplett-Emission = Phosphoreszenz gegenüber Singulett-Emission = Fluoreszenz) auch in den OLEDs umsetzen können. Als wesentliche Bedingungen für praktische Anwendung sind hier insbesondere eine hohe operative Lebensdauer, eine hohe Stabilität gegenüber Temperaturbelastung und eine niedrige Einsatz- und Betriebsspannung, um mobile Applikationen zu ermöglichen, zu nennen.
Daneben muß der effiziente chemische Zugang zu den entsprechenden Organo-MetallVerbindungen gegeben sein. Von besonderem Interesse sind dabei Organo-Rhodium- und Iridium-Verbindungen. Bei diesen ist vor allem unter Berück-sichtigung des Rhodium- bzw. des Iridiumpreises von maßgebender Bedeutung, daß hier ein effizienter Zugang zu entsprechenden Derivaten ermöglicht wird.

Mono-, Di-, Tri-, Tetra- und -Hexa-Nitro-funktionalisierte bis- und tris-orthometallierte Organo-Rhodium- und Organo-Iridium-Verbindungen, die Gegenstand der vorliegenden Erfindung sind, werden zentrale Schlüsselbausteine zur Erzeugung hocheffizienter Triplett-Emitter sein, da die Nitrofunktion mit Hilfe von gängigen, in der Literatur beschriebenen Methoden in eine Vielzahl von Funktionen (z.B. die Amino-, Nitroso-, Hydroxylamino-, Azo- und die Azoxy-Funktion) umgewandelt werden kann. Damit ist nicht nur der kovalente Einbau dieser aktiven, lichtemittierenden Zentren in eine Vielzahl von Polymeren möglich, sondern auch das Maßschneidern der optoelektronischen Eigenschaften dieser Bausteine. So führen typische Reduktionsreaktionen ausgehend von den Nitroverbindungen zu den oben genannten Amino-, Nitroso-, Hydroxylamino-, Azo- und die Azoxy-Verbindungen, die dann unter C-N-Verknüpfungsreaktionen (z. B. Iminbildung oder Hartwig-Buchwald-Kopplung) entweder weiter funktionalisiert werden können, oder auch als (Co)monomere bei der Darstellung von entsprechenden Polymeren verwendet werden können.
Mono-, Di-, Tri-, Tetra- und Hexa-Nitro-funktionalisierte bis- und tris-orthometallierte Organo-Rhodium- und Organo-Iridium-Verbindungen sind bisher in der Literatur nicht beschrieben worden, ihre effiziente Darstellung und Verfügbarkeit als Reinstoffe ist aber für verschiedene elektro-optische Anwendungen von großer Bedeutung.
Auch wenn die obigen Ausführungen hauptsächlich einen Einsatz der erfindungsgemäßen Mono-, Di-, Tri-, Tetra- und -Hexa-Nitro-funktionalisierten bis- und tris-orthometallierten Organo-Rhodium- und Organo-Iridium-Verbindungen in OLED Vorrichtungen beschreiben, sei darauf hingewiesen, daß diese Verbindungen ebenfalls sehr gut in folgenden Vorrichtungen Verwendung finden können:
1. Verwendung in photovoltaischen Vorrichtungen, wie organischen Photodetektoren oder organischen Solarzellen, z.B. als Elektronenakzeptor- bzw. -transportmaterial.
2. Verwendung in organischen integrierten Schaltungen (O-ICs).
3. Verwendung in organischen Feld-Effekt-Transistoren (OFETs).
4. Verwendung in organischen Dünnfilmtransistoren (OTFTs = Organic Thin Film Transistor).
5. Verwendung in Organischen-Feststofflasern.

In der EP 1191613 werden ortho-metallierte Iridiumkomplexe offenbart, welche mit elektronenziehenden Substituenten, unter anderem mit Nitrogruppen, substituiert sind.

In der WO 02/060910 wird ein allgemeines Verfahren zur Herstellung ortho-metallierter Iridiumkomplexe offenbart, wobei diese Iridiumkomplexe neben etlichen anderen Substituenten auch durch Nitrogruppen substituiert sein können.

In der WO 02/068435 werden halogen-substituierte ortho-metallierter Iridiumkomplexe offenbart, welche auch zusätzlich durch Nitrogruppen substituiert sein können.

Als nächstliegender Stand der Technik zur Synthese der Nitroverbindungen (1) bis (32) kann die Nitrierung von neutralen Ruthenium(II)- bzw. Osmium(II)komplexen, die neben dem orthometallierten 2-Phenylpyridin- bzw. 2-(1'-naphthyl)pyridin- bzw. 2-Phenylchinolin-Liganden noch weitere einzähninge Liganden tragen, gesehen werden [A. M. Clark, C. E. F. Rickard, W. R. Roper, L. J. Wright Organometallics. 1999, 18, 2813-2820 und A. M. Clark, C. E. F. Rickard, W. R. Roper, L. J. Wright J. Organomet. Chem., 2000, 598, 262-275].

Als Nitrierungsagens wird Kupfer(II)nitrat in Essigsäureanhydrid verwendet. Nach chromatographischer Reinigung werden die entsprechenden, nitrierten Produkte in Ausbeuten von 10% bis 40% - in Einzelfällen bis zu 87% - erhalten.

Diese beiden Stellen weisen folgende Nachteile auf:
(1) Es wird nur die Derivatisierung von Ru- oder Os-Komplexen, nicht aber diejenige von Rh- oder Ir-Verbindungen beschrieben.
(2) Es wird keine sinnvolle Lehre erteilt, wie man - beim Vorliegen von mehreren substituierbaren Stellen - gezielt zu den gewünschten Mono- oder Di- oder Tri-, Tetra- oder Hexa-funktionalisierten Verbindungen gelangt, da in beiden Fällen jeweils nur eine Nitrierung in para- bzw. ortho-Stellung zum Metallatom pro Komplex-Molekül möglich ist.

Dagegen ist die Mono-, Di-, Tri-, Tetra- und Hexa-Nitrierung von bis- und tris-orthometallierten Organo-Rhodium- und Organo-Iridium-Verbindungen in der Literatur bisher nicht beschrieben worden.
Es wurde nun überraschend gefunden, daß die Verbindungen (1) bis (32) ausgehend von den bis- bzw. tris-orthometallierten Organo-Rhodium bzw. Organo-Iridium-Verbindungen (33) bis (64) mit einem Nitrierungsagens, unter geeigneter Wahl des stöchiometrischen Verhältnisses des entsprechenden Nitrierungsagens zu den Verbindungen (33) bis (64) sowie unter geeigneter Wahl der Reaktionsparameter wie Reaktionstemperatur, Reaktionsmedium, Konzentration und Reaktionszeiten reproduzierbar in etwa 70 - 98 % iger Ausbeute, ohne Verwendung chromatographischer Reinigungsverfahren, gegebenenfalls nach Umkristallisation, in Reinheiten von > 99 % nach NMR bzw. HPLC erhalten werden (siehe Beispiel 1, 2 und 3).
Die Darstellung der Ausgangsverbindungen (33) bis (64) kann zum Teil nach gängigen Literaturmethoden aber insbesondere auch nach den offengelegten bzw. die nicht offengelegten Anmeldung WO 02/060910, DE 10223337.3, WO 02/068435, DE 10155064.2, DE 10223337.3, DE 10215010.9 und DE 10238903.9 erfolgen.

Das oben beschriebene Verfahren zeichnet sich durch drei Eigenschaften besonders aus, die in dieser Form bisher nicht in der Literatur beschrieben wurden:

Erstens ist die selektive Mono-, Di-, Tri-, Tetra- und Hexa-Nitrierung von bis - und tris-orthomatallierten Rhodium- und Iridiumverbindungen unerwartet und in dieser Form nicht bekannt. Vermutlich resultiert sie aus der Aktivierung, die die zum Rhodium- bzw. Iridium-Atom para- bzw. ortho-ständige Position(en) am koordinierten Phenylring durch dieses erfährt. Die unerwartet hohe Aktivität dieser Positionen gegenüber einer elektrophilen Substitution, hier der Nitrierung, wird durch den Einsatz milder Nitrierungsagentien gezielt ausgenutzt. Zusätzlich findet man eine hohe Selektivität der Nitrierung der zum Metall paraständigen Position im Vergleich zur ebenfalls möglichen ortho-Substitution, d.h. in einem gegebenen Molekül werden stets erst alle para-Positionen nitriert, bevor unter geeigneten Bedingungen, die Nitrierung in der ortho-Positionen erfolgt.

Zweitens ist der hohe erzielte Umsatz, der sich in den reproduzierbar sehr guten Ausbeuten an isoliertem Produkt widerspiegelt, unerwartet und einzigartig für die Nitrierung von orthometallierten Liganden, gebunden an Metalle der 9ten Gruppe.

Drittens fallen die erhaltenen Verbindungen - gegebenenfalls nach Umkristallisation -, aber ohne aufwendige chromatographische Reinigung, in sehr guten Reinheiten von > 99 % nach NMR bzw. HPLC an. Dies ist für die Verwendung in opto-elektronischen Bauelementen, bzw. der Benutzung als Zwischenprodukte für die Darstellung entsprechender Verbindungen essentiell.

Wie oben geschildert, sind die erfindungsgemäßen Verbindungen nicht vorbeschrieben und damit neu.

Gegenstand der vorliegenden Erfindung sind die tris-orthometallierten Verbindungen (6) bis (8) gemäß Schema 1, 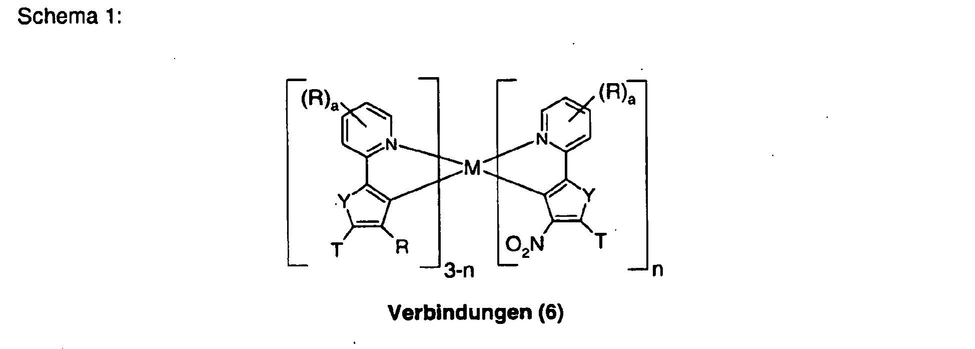 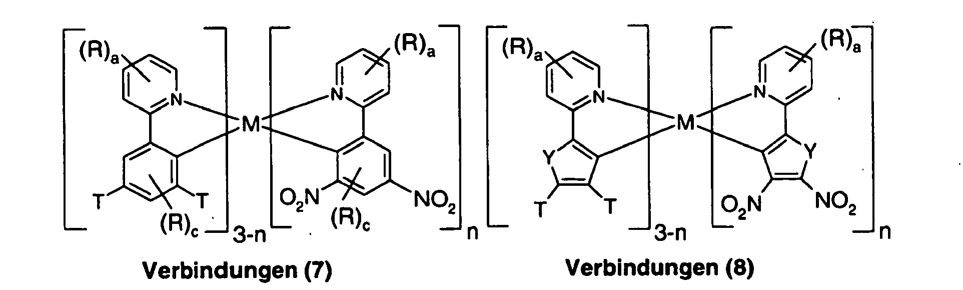 wobei die Symbole und Indizes folgende Bedeutung haben:
- M: Rh, Ir;
- Y: O, S, Se, NR¹;
- R: ist gleich oder verschieden bei jedem Auftreten H, F, Cl, Br, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹- oder -CONR' - ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
- T: ist gleich oder verschieden bei jedem Auftreten F, Cl, Br, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹- oder -CONR¹- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
- R¹: ist gleich oder verschieden bei jedem Auftreten, H oder ein aliphatischer oder aromatischer Kohlenwasserstoffrest mit 1 bis 20 C-Atomen;
- a: ist 0, 1, 2, 3 oder 4, bevorzugt 0, 1 oder 2;
- b: ist 0, 1, 2 oder 3, bevorzugt 0 oder 1;
- c: ist 0, 1 oder 2;
- m: ist 1 oder 2;
- n: ist 1, 2 oder 3.
Bei den Verbindungen (6) bis (8) sind die homoleptischen Verbindungen bevorzugt.

Eine weitere Ausführungsform der Erfindung sind solche Rh- bzw. Ir-komplexe, die gleichzeitig Liganden vom Typ wie bei den unten aufgeführten Verbindungen (1) und solche von Verbindungen (2) aufweisen, d.h. gemischte Ligandensysteme. Diese werden durch die Verbindungen (5a) bis (8a) gemäß Schema 2 beschrieben: 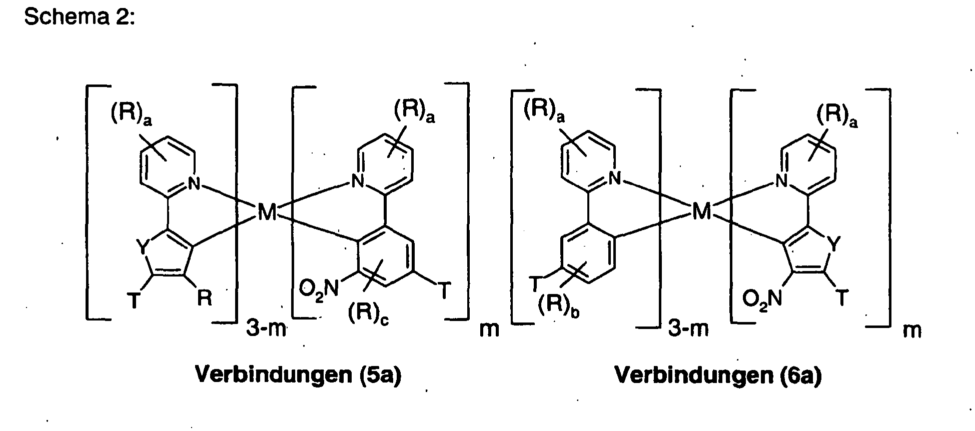 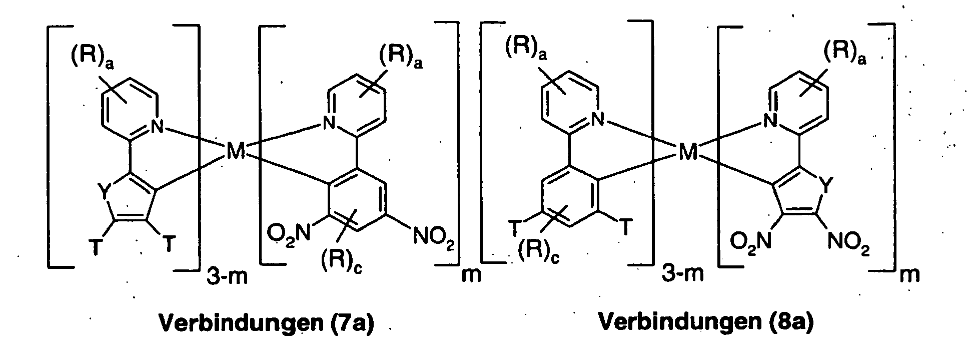 wobei die Symbole und Indizes die unter den Verbindungen (6) bis (8) genannten Bedeutungen haben.

Ebenfalls Gegenstand der vorliegenden Erfindung sind die heteroleptischen, bis-orthometallierten Verbindungen (13) bis (16) gemäß Schema 3, 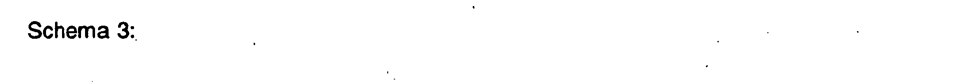 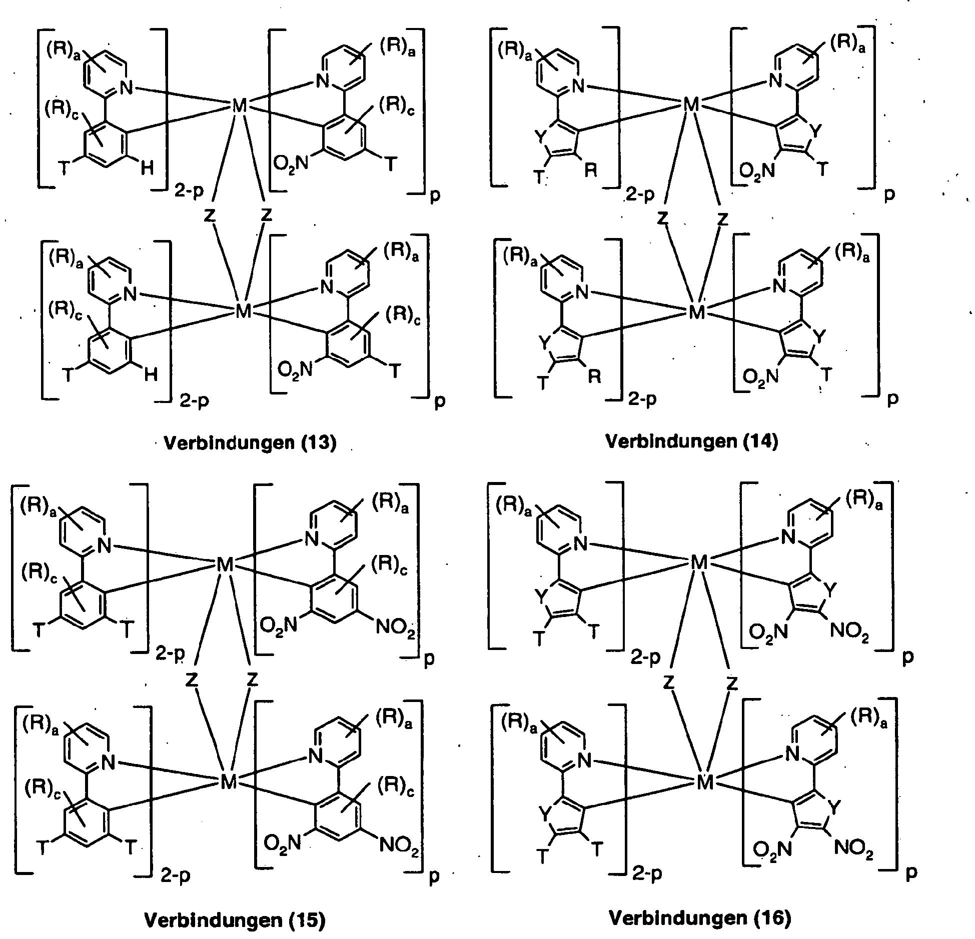 wobei die Symbole und Indizes folgende Bedeutung haben:
- M: Rh, Ir;
- Y: O, S, Se, NR¹;
- Z: ist gleich F, Cl, Br, l, O-R¹, S-R¹, N(R¹)₂;
- R: ist gleich oder verschieden bei jedem Auftreten H, F, Cl, Br, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹-, oder -CONR²- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
- T: ist gleich oder verschieden bei jedem Auftreten F, Cl, Br, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹-, oder -CONR² - ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
- R¹: ist gleich oder verschieden bei jedem Auftreten H oder ein aliphatischer oder aromatischer Kohlenwasserstoffrest mit 1 bis 20 C-Atomen,
- a: ist 0, 1, 2, 3 oder 4, bevorzugt 0, 1 oder 2;
- b: ist 0, 1, 2 oder 3, bevorzugt 0 oder 1;
- c: ist 0, 1 oder 2;
- p: ist 1 oder 2.

Ebenfalls Gegenstand der vorliegenden Erfindung sind die heteroleptischen, bis-orthometallierten Verbindungen (25) bis (32) gemäß Schema 4: 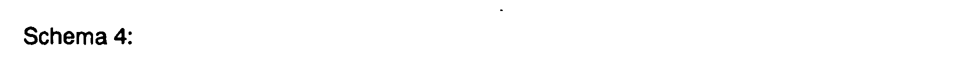 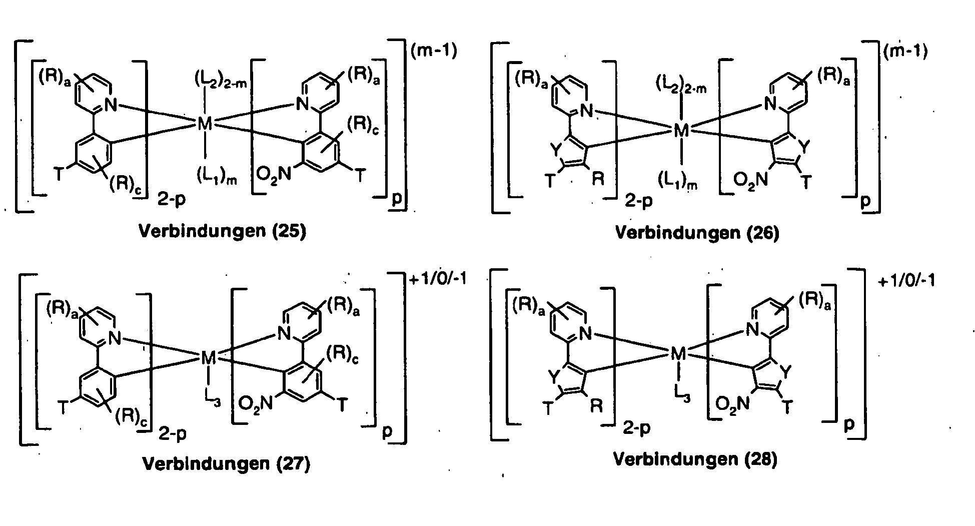 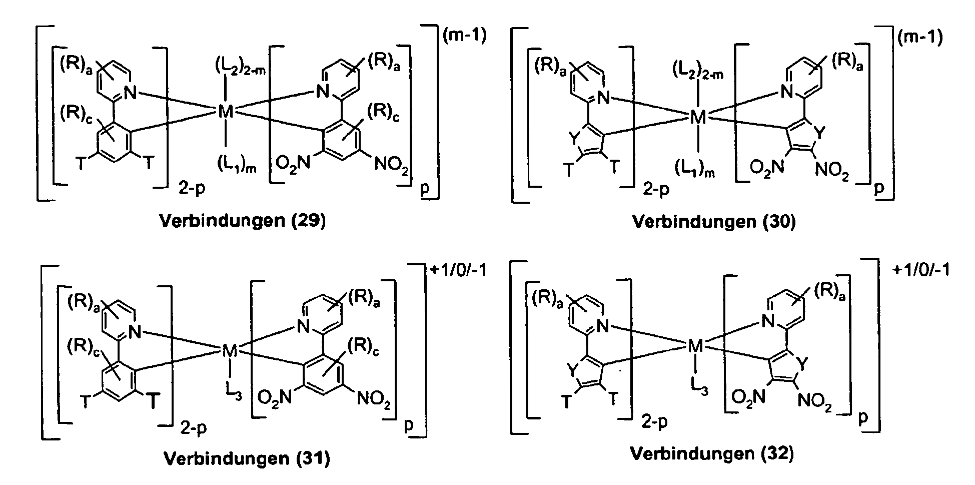 wobei die Symbole und Indizes folgende Bedeutung haben:
- M: Rh, Ir;
- Y: O, S, Se, NR¹;
- R: ist gleich oder verschieden bei jedem Auftreten H, F, Cl, Br, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -NR¹-, oder -CONR²- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
- T: ist gleich oder verschieden bei jedem Auftreten F, Cl, Br, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹-, oder -CONR²- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
- R¹: ist gleich oder verschieden bei jedem Auftreten H oder ein aliphatischer oder aromatischer Kohlenwasserstoffrest mit 1 bis 20 C-Atomen;
- L₁: ist ein neutraler, einzähniger Ligand;
- L₂: ist ein monoanionischer, einzähniger Ligand;
- L₃: ist ein neutaler oder mono- oder dianionischer zweizähniger Ligand;
- a: ist 0, 1, 2, 3 oder 4, bevorzugt 0, 1 oder 2;
- b: ist 0, 1, 2 oder 3, bevorzugt 0 oder 1;
- m: ist 0, 1 oder 2;
- p: ist 1 oder 2.

Erfindungsgemäße neutrale, einzähnige Liganden L₁ sind Kohlenmonoxid, Isonitrile wie z.B. *tert*-Butyl-isonitril, Cyclohexylisonitril, Adamantylisonitril, Amine wie z.B. Trimethylamin, Triethylamin, Morpholin, Phosphine wie z.B. Trifluorphosphin, Trimethylphosphin, Tricyclohexylphosphin, Tri-*tert*-butylphosphin, Triphenylphosphin, Tris(pentafluorphenyl)phosphin, Phosphite wie z.B. Trimethylphosphit, Triethylphosphit, Arsine wie z.B. Trifluorarsin, Trimethylarsin, Tricyclohexylarsin, Tri-*tert*-butylarsin, Triphenylarsinin, Tris(pentafluorphenyl)arsin, Stibine wie z.B. Trifluorstibin, Trimethylstibin, Tricyclohexylstibin, Tri-*tert*-butylstibin, Triphenylstibin, Tris(pentafluorphenyl)stibin und stickstoffhaltige Heterocyclen wie z.B. Pyridin, Pyridazin, Pyrazin, Triazin.

Erfindungsgemäße monoanionische, einzähnige Liganden L₂ sind die Halogenide F, Cl, Br, I und Cyanid, Cyanat, Iso-cyanat, Thiocyanat, Iso-thiocyanat, Alkoholate wie z.B. Methanolat, Ethanolat, Propanolat, *iso*-Propanolat, *tert*-Butylat, Phenolat, Thioalkoholate wie z. B. Methanthiolat, Ethanthiolat, Propanthiolat, *iso-*Propanthiolat, *tert*-Thiobutylat, Thiophenolat, Amide wie z.B. Dimethylamid, Diethylamid, Di-*iso*-propylamid, Morpholid, Carboxylate wie z.B. Acetat, Trifluoracetat, Propionat, Benzoat und anionische, stickstoffhaltige Heterocyclen wie Pyrrolid, Imidazolid, Pyrazolid.

Erfindungsgemäße neutrale oder mono- oder dianionische zweizähnige Liganden L₃ sind Diamine wie z. B. Ethylendiamin, N,N,N',N'-Tetramethylethylendiamin, Propylendiamin, N,N,N',N'-Tetramethylpropylendiamin, cis-, trans-Diaminocyclohexan, cis-, trans-N,N,N',N'-Tetramethyldiaminocyclohexan, Imine wie z.B. 2[(1-(Phenylimino)ethyl]pyridin, 2[(1-(2-Methylphenylimino)ethyl]pyridin, 2[(1-(2,6-Di-*iso-*propylphenylimino)ethyl]pyridin, 2[(1-(Methylimino)ethyl]pyridin, 2[(1-(ethylimino)ethyl]pyridin, 2[(1-(*Iso*-Propylimino)ethyl]pyridin, 2[(1-(*Tert-*Butylimino)ethyl]pyridin, Dimine wie z.B. 1,2-Bis(methylimino)ethan, 1,2-Bis(ethylimino)ethan, 1,2-Bis(iso-propylimino)ethan, 1,2-Bis(*tert*-butylimino)ethan, 2,3-Bis(methylimino)butan, 2,3-Bis(ethylimino)butan, 2,3-Bis(*iso*-propylimino)butan, 2,3-Bis(*tert*-butylimino)butan, 1,2-Bis(phenylimino)ethan, 1,2-Bis(2-methylphenylimino)ethan, 1,2-Bis(2,6-di-*iso*-propylphenylimino)ethan, 1,2-Bis(2,6-di-*tert-*butylphenylimino)ethan, 2,3-Bis(phenylimino)butan, 2,3-Bis(2-methylphenylimino)butan, 2,3-Bis(2,6-di-iso-propylphenylimino)butan, 2,3-Bis(2,6-di-*tert*-butylphenylimino)butan, Heterocyclen enthaltend zwei Stickstoffatome wie z.B. 2,2'-Bipyridin, o-Phenanthrolin, Diphosphine wie z.B. Bis-diphenylphosphinomethan, Bis-diphenylphosphinoethan, Bis(diphenylphosphino)propan, wie Bis(dimethylphosphino)methan, wie Bis(dimethylphosphino)ethan, Bis(dimethylphosphino)propan, wie Bis(diethylphosphino)methan, Bis(diethylphosphino)ethan, Bis(diethylphosphino)propan, Bis(di-*tert*-butylphosphino)methan, wie Bis(di-*tert*-butylphosphino)ethan, Bis(*tert-*butylphosphino)propan, 1,3-Diketonate abgeleitet von 1,3-Diketonen wie z.B. Acetylaceton, Benzoylaceton, 1,5-Diphenylacetylaceton, Dibenzolymethan, Bis(1,1,1-tri-fluoracetyl)methan, 3-Ketonate abgeleitet von 3-Ketoestern wie z.B. Acetessigsäureethylester, Carboxylate abgeleitet von Aminocarbonsäuren wie z.B. Pyridin-2-carbonsäure, Chinolin-2-carbonsäure, Glycin, Dimethylglycin, Alanin, Dimethylaminoalanin, Salicyliminate abgeleitet von Salicyliminen wie z.B. Methylsalicylimin, Ethylsalicylimin, Phenylsalicylimin, Dialkoholate abgeleitet von Dialkoholen wie z.B. Ethylenglykol, 1,3-Propylenglykol, Dithiolate abgeleitet von Dithiolen wie z.B. 1,2-Ethylendithiol, 1,3-Propylendithiol.

Ein weiterer Gegenstand der vorliegenden Erfindung sind Verfahren zur Herstellung der Verbindungen (1) bis (32) und (1a) bis (8a): 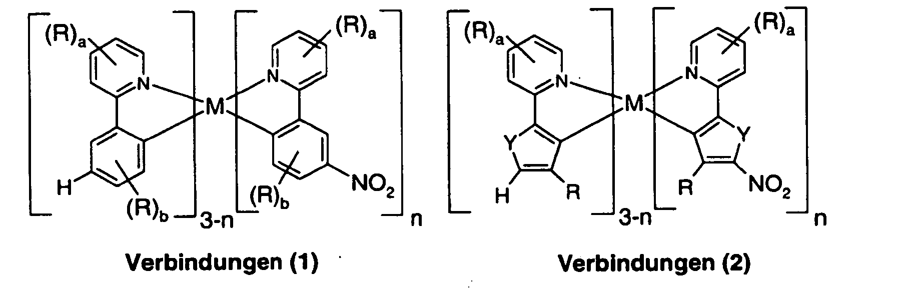 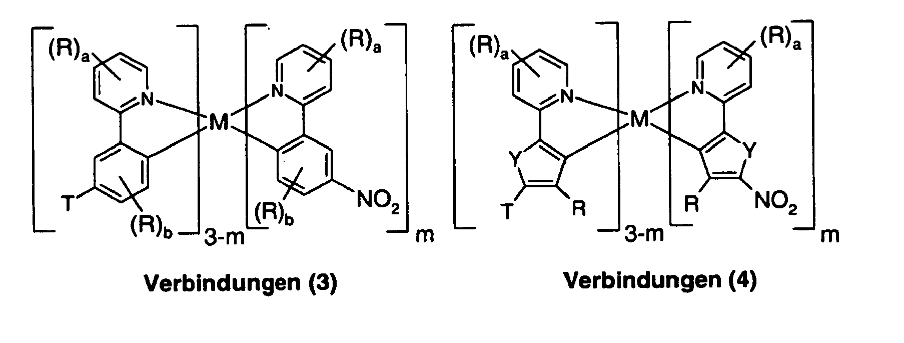 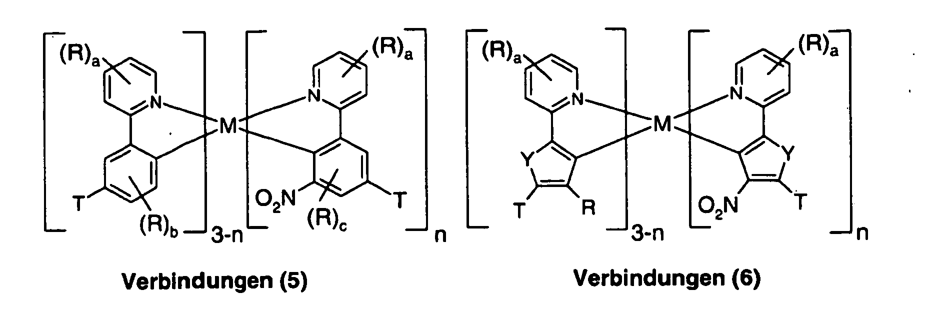 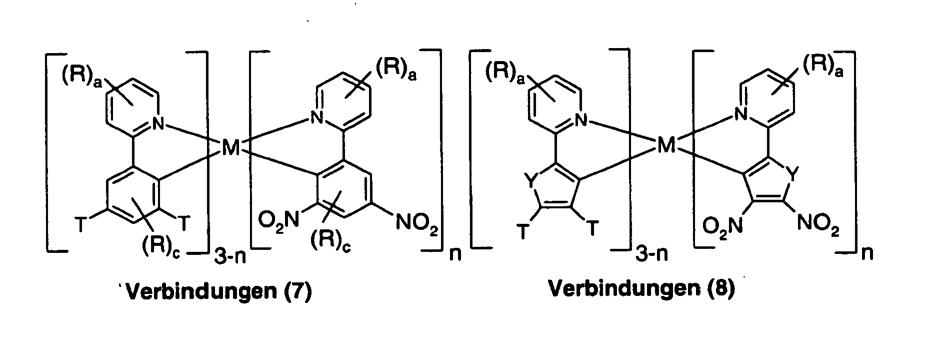 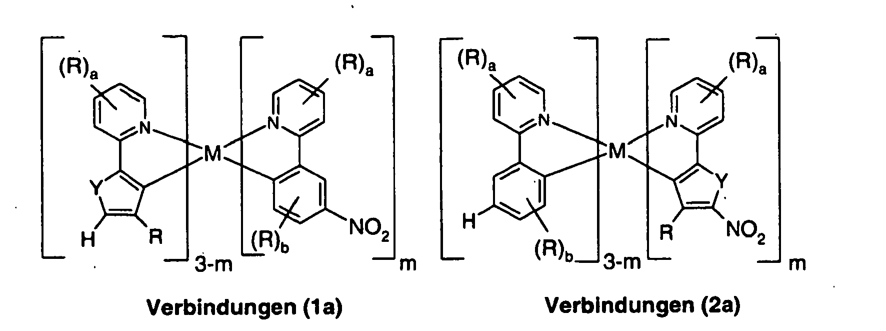 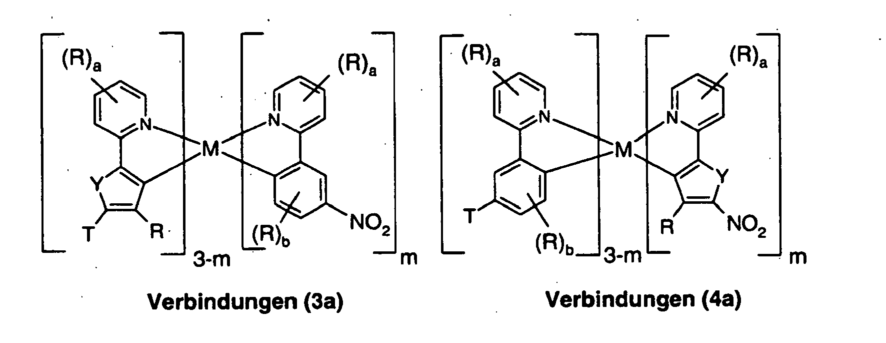 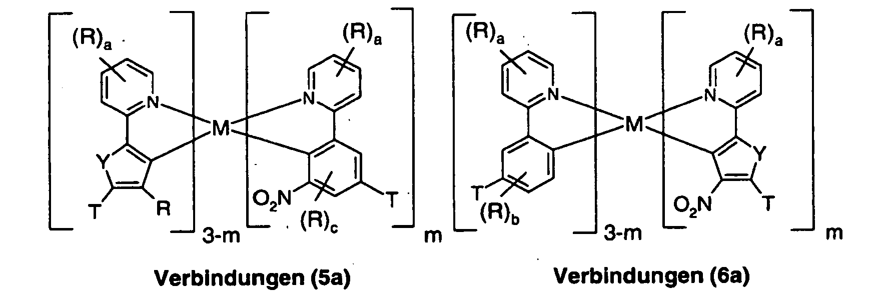 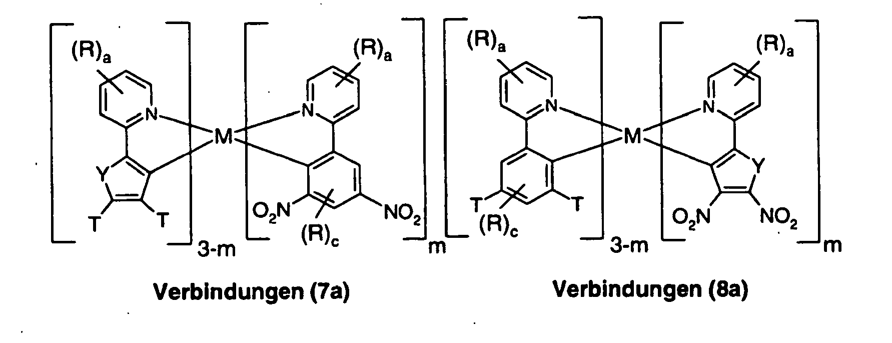 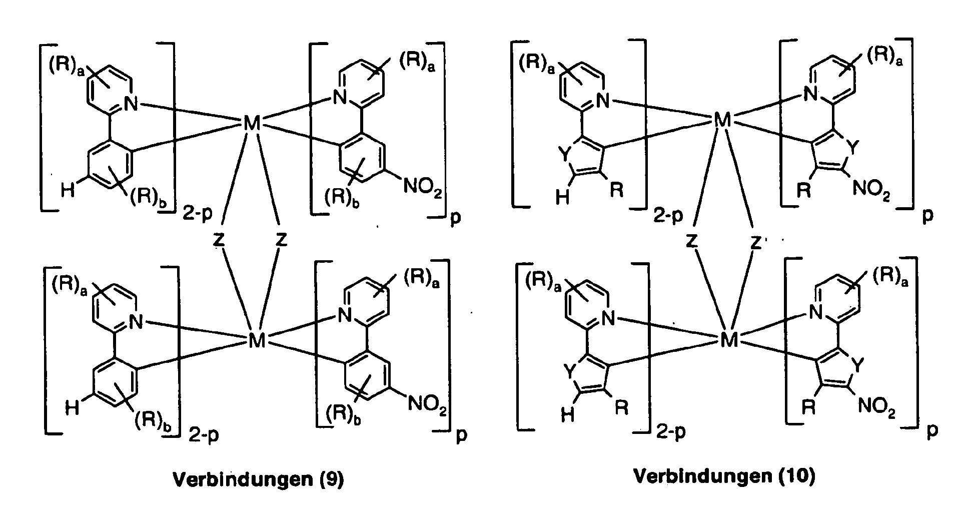 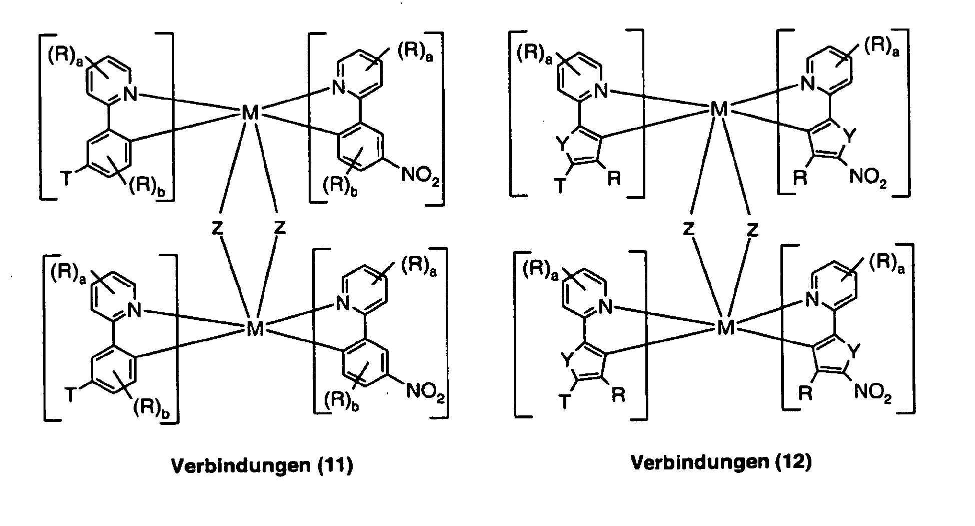 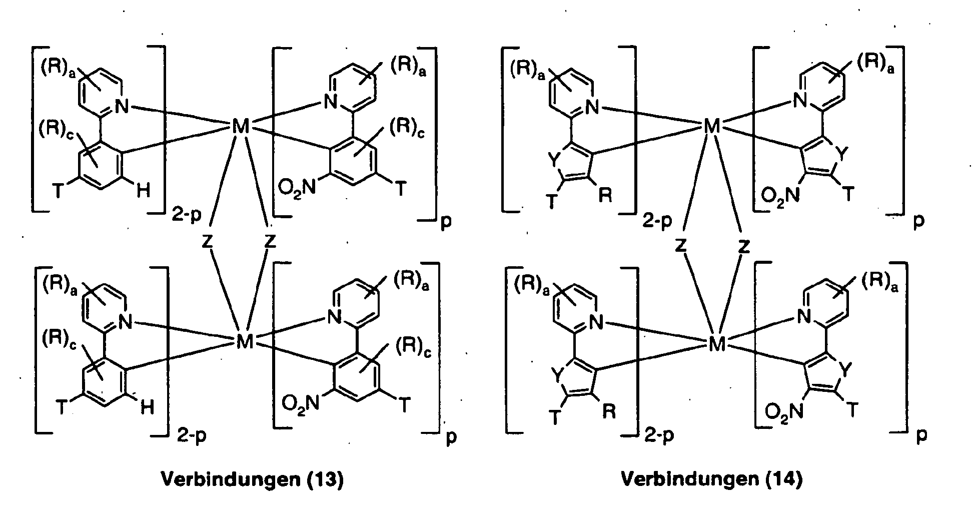 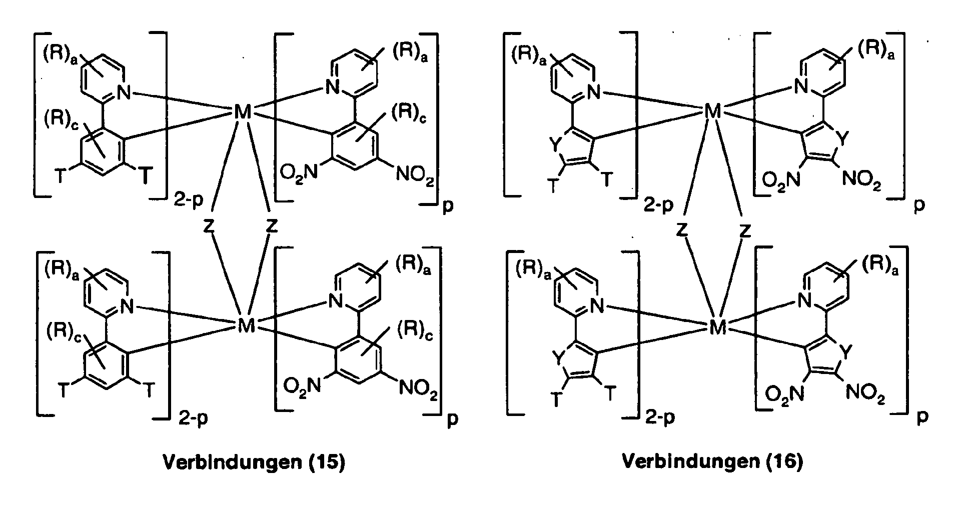 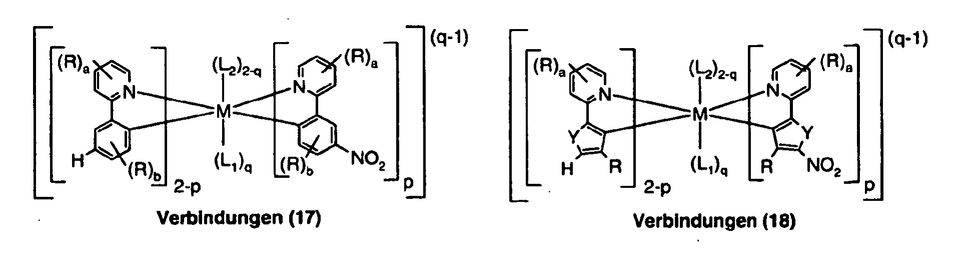 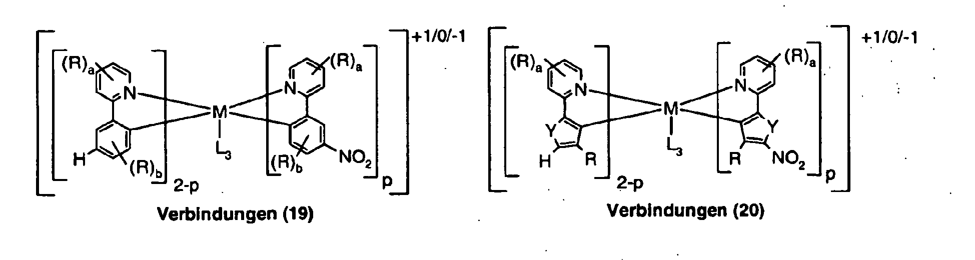 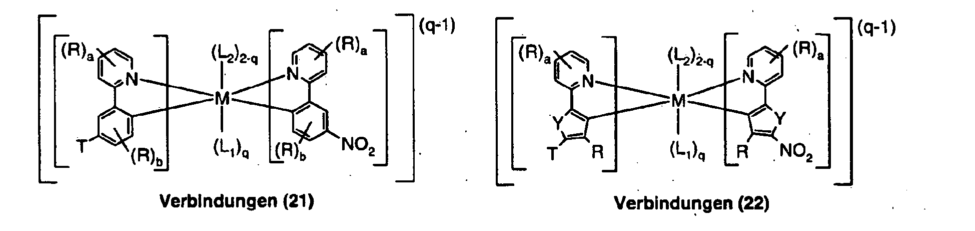 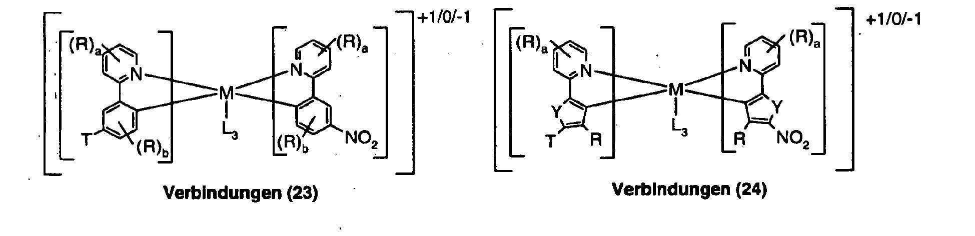 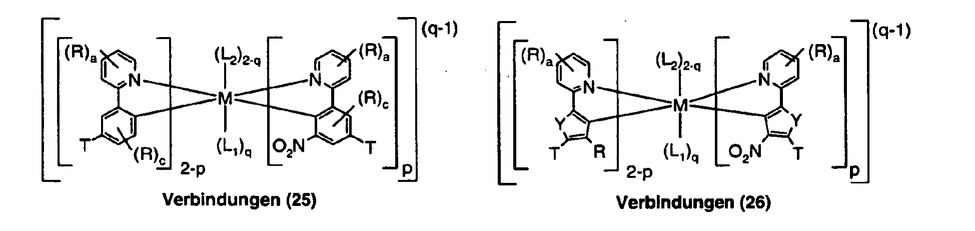 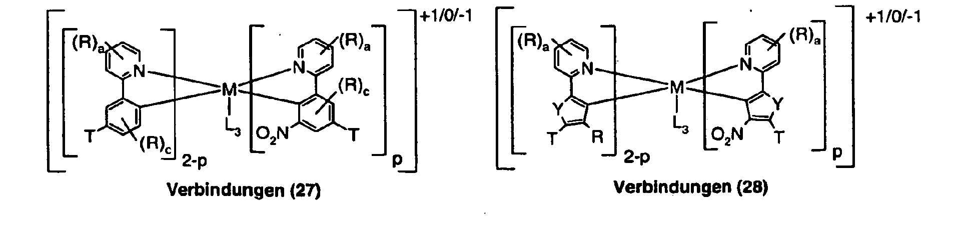 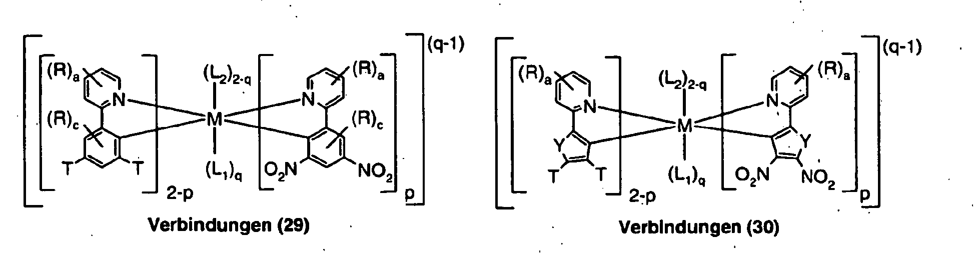 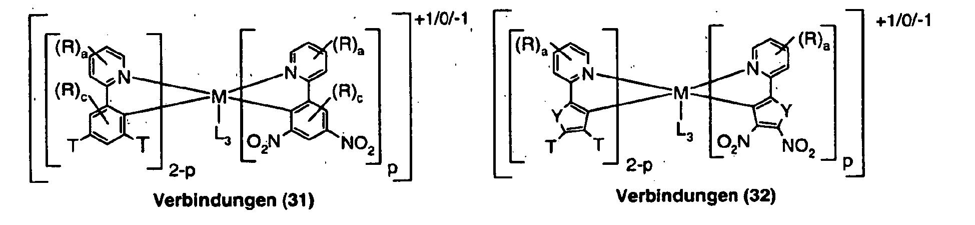 wobei die Symbole und Indizes die oben genannten Bedeutungen haben,
durch Umsetzung der Verbindungen (33) bis (64) gemäß Schema 5: 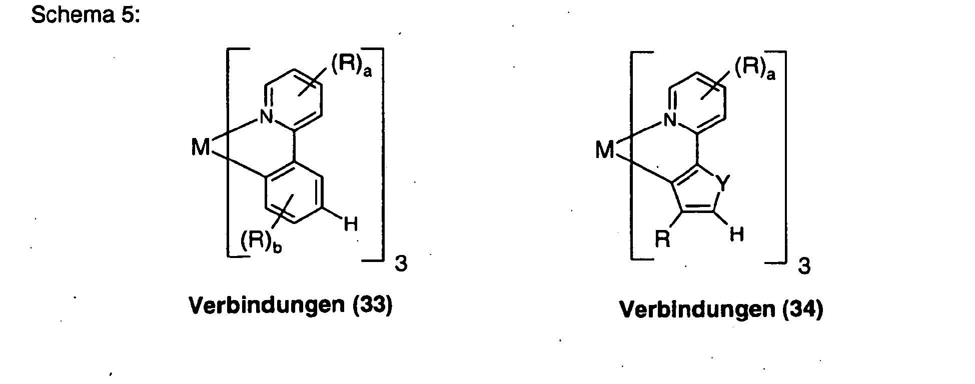 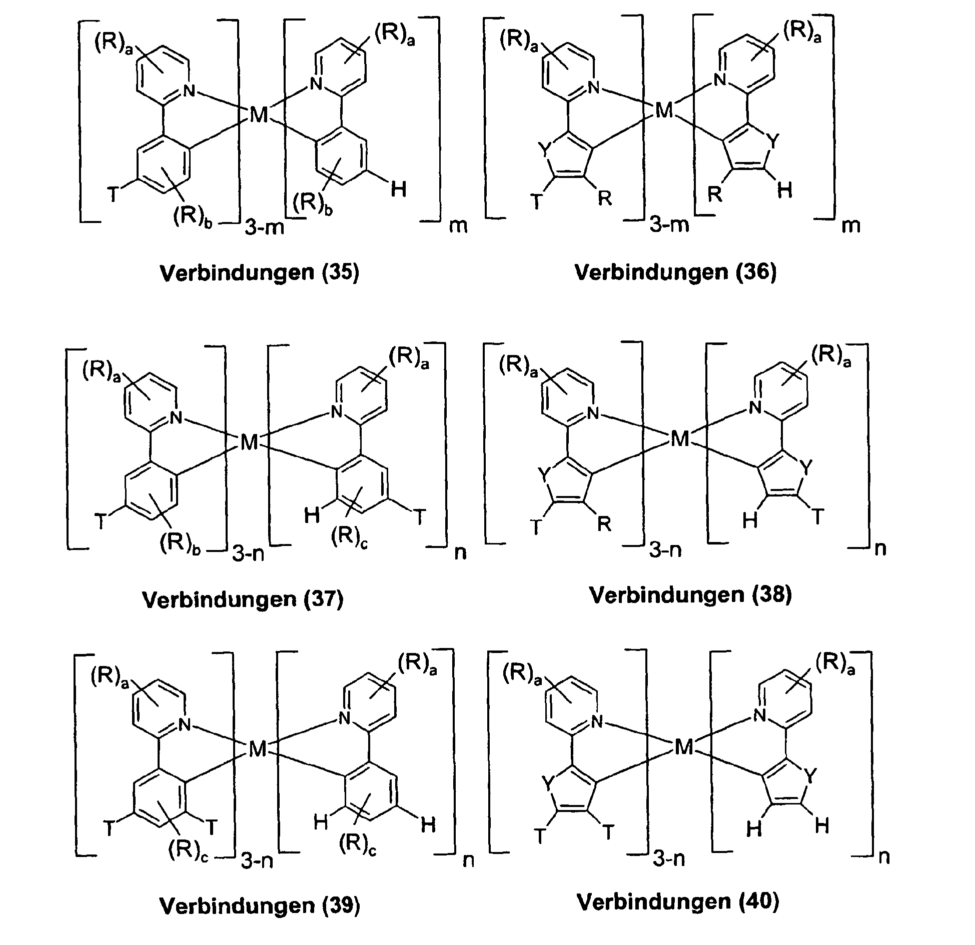 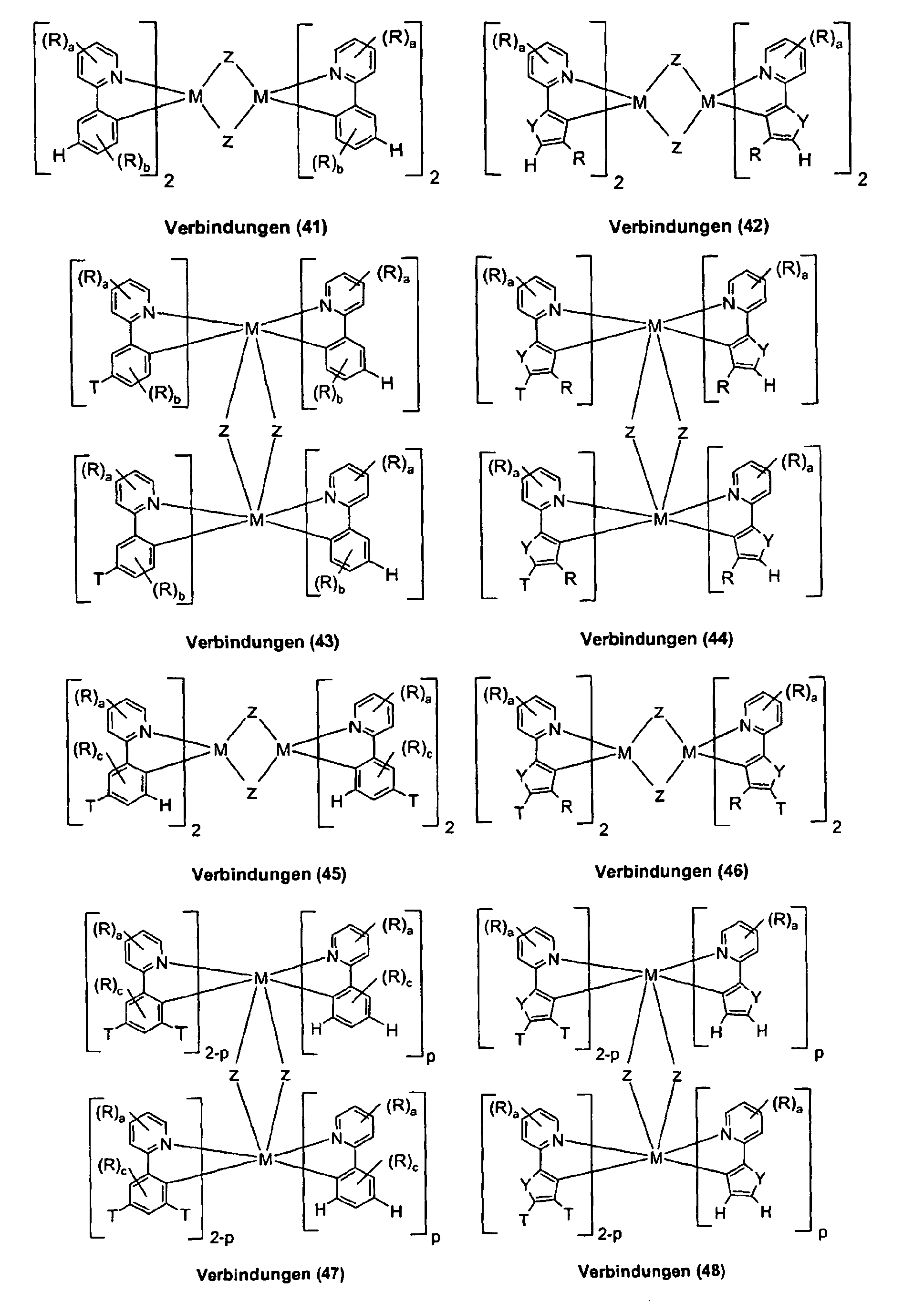 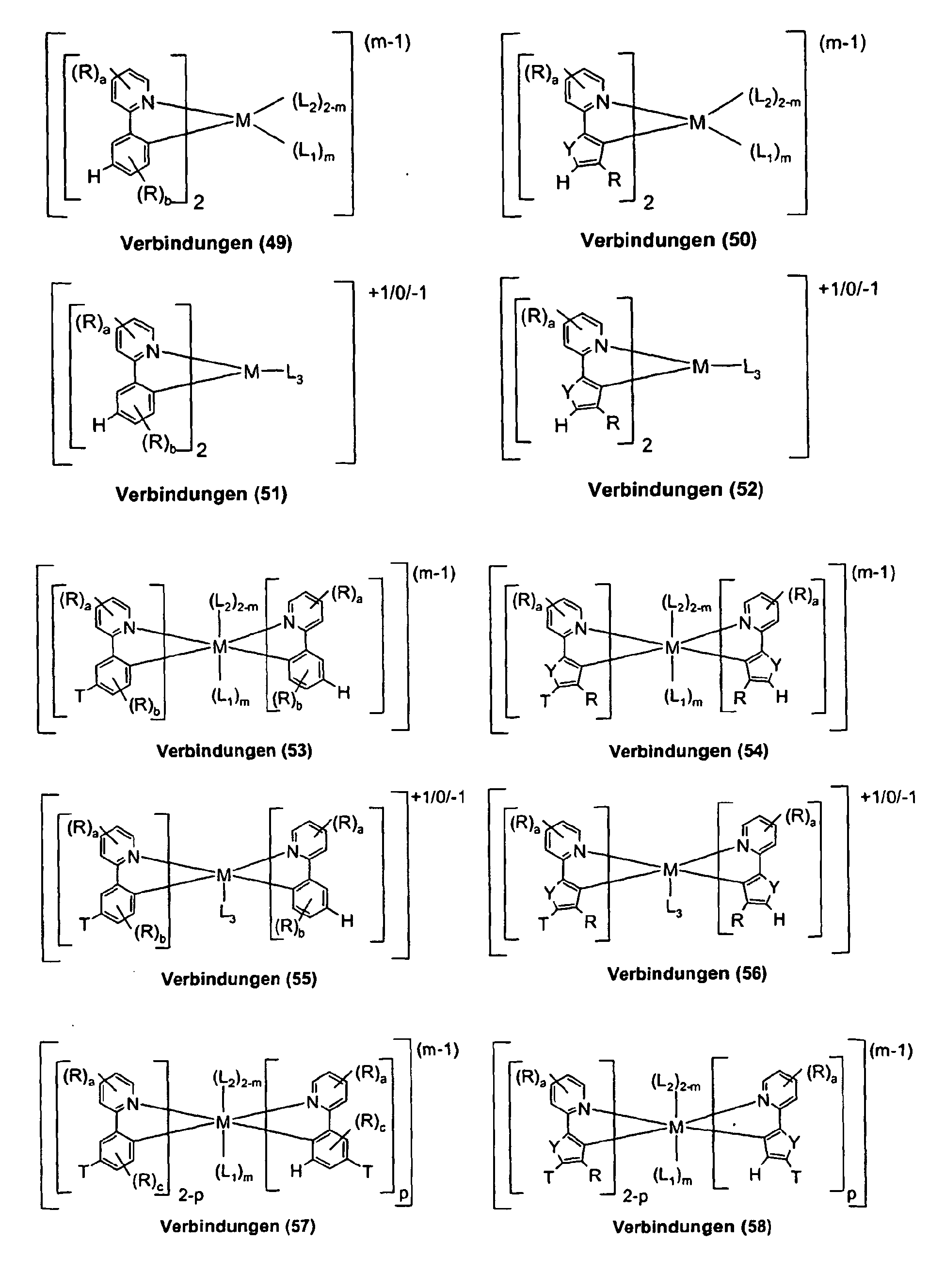 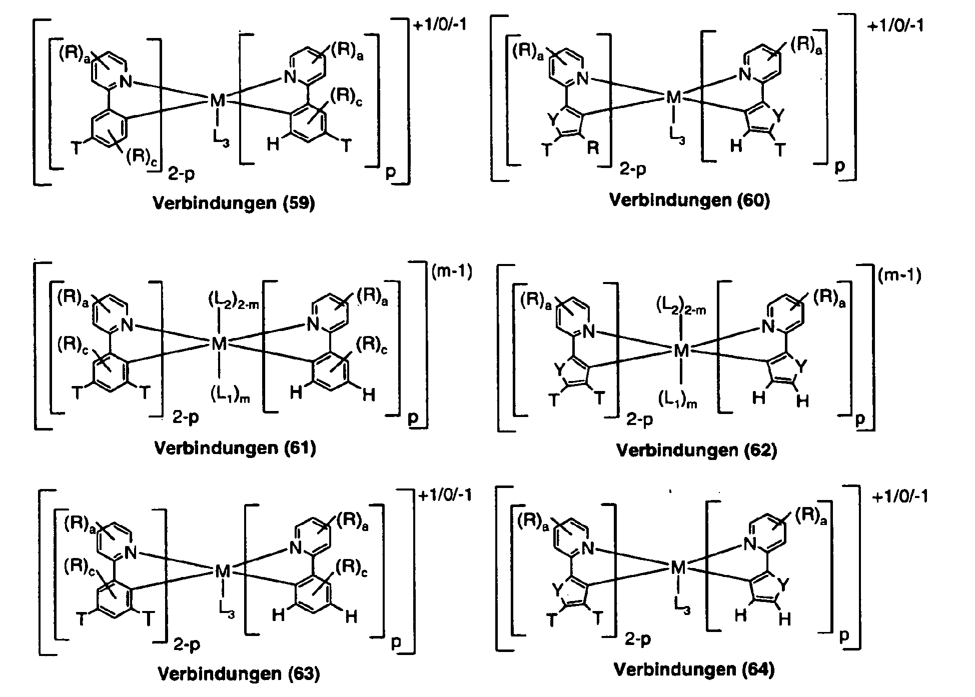 worin M und die Reste und Indizes Y, Z, R, T, R¹, L₁, L₂, L₃, a, b, c, m und p die oben genannten Bedeutungen haben, mit Nitrierungsagentien.
In völlig analoger Weise gehen die erfindungsgemäßen Verbindungen mit gemischtem Ligandensatz (1a) bis (8a) aus den entsprechenden nicht nitrierten Ausgangsverbindungen mit gemischtem Ligandensatz, die hier im Einzelnen nicht graphisch dargestellt sind, hervor.

Die erfindungsgemäßen Verbindungen (6) bis (8), (5a) bis (8a), (13) bis (16) und (25) bis (32) zeichnen sich durch die folgenden Eigenschaften besonders aus:
1) Wie bereits beschrieben sind sie wertvolle Intermediate, da die Nitro-Gruppierung durch eine Vielzahl gängiger organischer Reaktionen in vielseitige Funktionen wie z.B. die Amino-, Nitroso-, Hydroxylamino-, Azo-, Azoxy-Funktion, um nur einige Beispiele zu nennen, umgewandelt werden kann. Damit ist nicht nur ein Maßschneidern der physikalischen, elektrischen und optischen Eigenschaften dieser Rhodium- und Iridiumbausteine, sondern auch ein Einbinden dieser in eine Vielzahl von Polymeren, möglich.
2) Die Nitro-Gruppe nimmt am konjungierten System der Rhodium- bzw. Iridium-Komplexe teil, so daß sie einen maßgeblichen Einfluß auf die elektrischen und optischen Eigenschaften dieser Verbindungen hat. So können z.B. die Lage des HOMO und LUMO und damit das Oxidations- und Reduktionspotential, das Absorptiosspektrum, das Emissionsspektrum, die Triplettlebensdauer und die Triplettquantenausbeute, um nur einige Eigenschaften zu nennen, gezielt beeinflußt werden.
3) Die Nitro-Gruppe besitzt außerdem ein hohes Akzeptorpotential, so daß sich die erfindungsgemäßen Verbindungen hervorragend zu Ladungstrennung eigenen. Dieses Verhalten macht die erfindungsgemäßen Verbindungen unter anderem zu potentiellen Schlüsselbausteinen in photovoltaischen Vorrichtungen.

Das erfindungsgemäße Verfahren wird durch Schema 6 exemplarisch an der Umsetzung der homoleptischen, tris-orthometallierten Verbindungen (33) bis (40) zu den nitrierten, homoleptischen, tris-orthometallierten Verbindungen (1) bis (8) erläutert, es gilt aber in dieser Form auch für die Umsetzung der heteroleptischen, tris-orthomatallierten Verbindungen (33a) bis (40a) und den bis-orthometallierten Verbindungen (41) bis (64) zu den nitrierten, heteroleptischen, tris-orthometallierten Verbindungen (1a) bis (8a) und den bis-orthometallierten Verbindungen (9) bis (32), wobei stets die Verbindung (A+32 mit A = 1 bis 32) als Edukt zur Darstellung der Verbindung (A) dient.

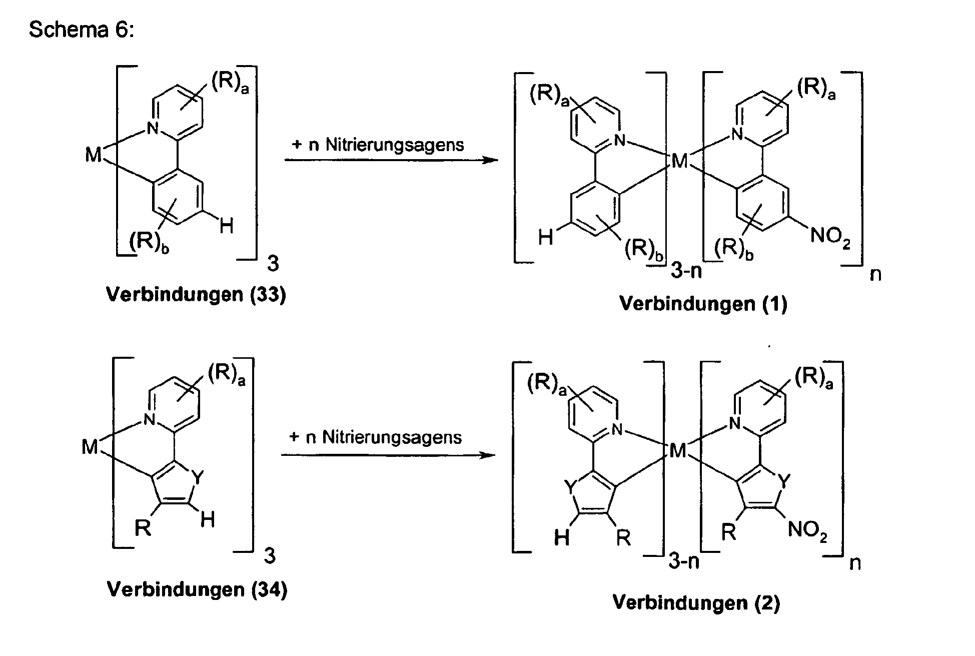

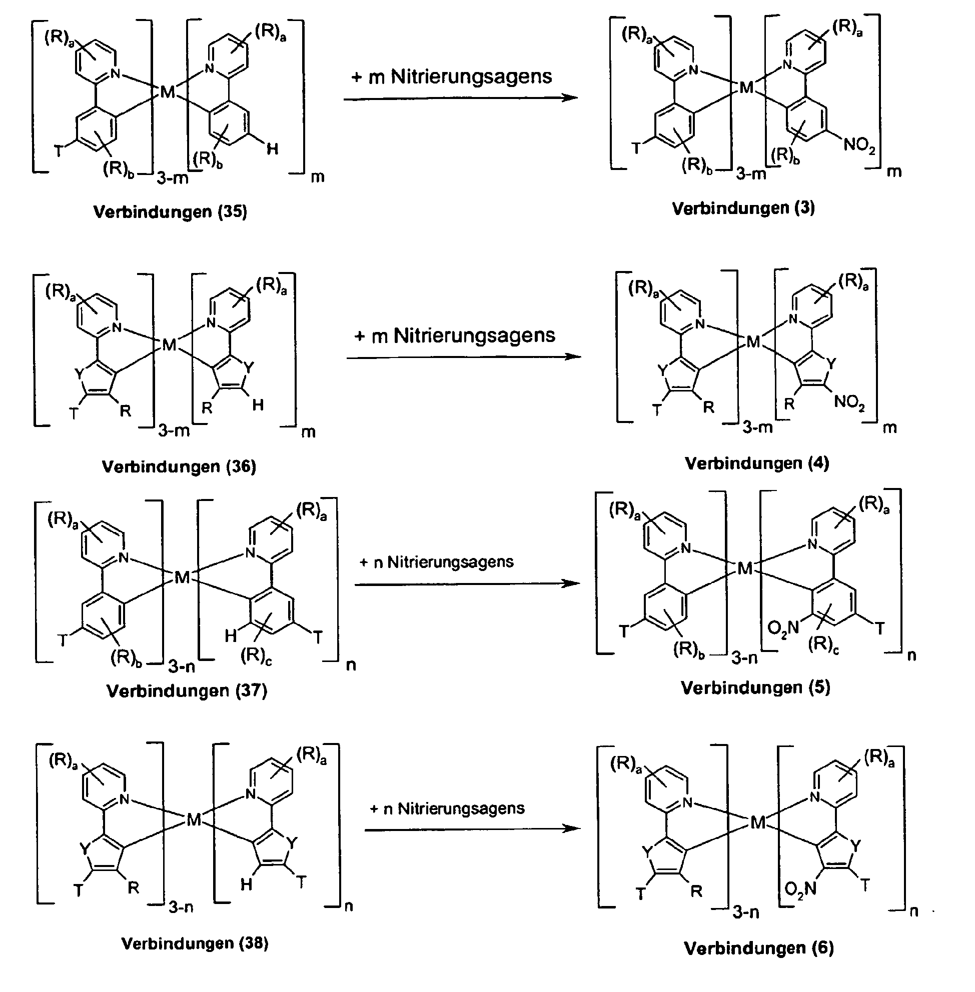

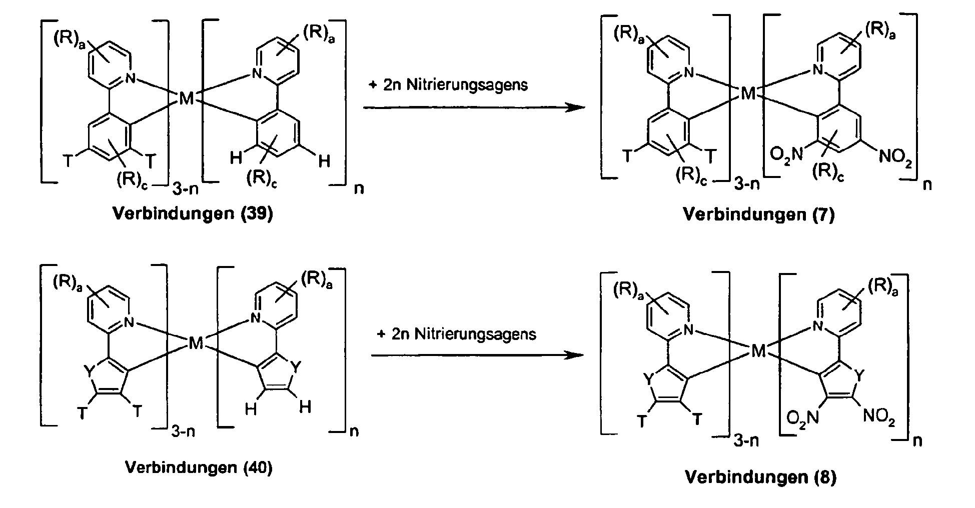

Erfindungsgemäße Nitrierungsagentien sind Salpetersäure, gegebenenfalls in Kombination mit einer weiteren Säure wie z.B. Schwefelsäure oder Phosphorsäure, Distickstofftetroxid, Distickstoffpentoxid, Nitroniumsalze des Typs NO₂A, wobei A ein geeignetes inertes Anion wie BF₄⁻, PF₆⁻, SbF₆⁻ oder CF₃SO₃⁻ ist, Alkali- oder Erdalkalinitrate wie Lithium-, Natrium-, Kaliumnitrat, Magnesiumnitrat, gegebenfalls in Gegenwart einer Säure wie Schwefelsäure, Phosphorsäure, Essigsäure, Propionsäure oder Trifluoressigsäure bzw. deren Mischungen und/oder eines Carbonsäureanhydrids wie Essigsäureanhydrid oder Propionsäureanhydrid, Übergangsmetallnitrate wie Eisen(II)-, Eisen(III)-, Kobalt(II)-, Kobalt(III)-, Nickel(II)- oder Kupfer(II)-nitrit oder -nitrat, gegebenfalls in Gegenwart einer Säure wie Schwefelsäure, Phosphorsäure, Essigsäure, Propionsäure oder Trifluoressigsäure und/oder eines Carbonsäureanhydrids wie Essigsäureanhydrid oder Propionsäureanhydrid bzw. deren Mischungen.

Die erfindungsgemäßen Nitrierungsagentien können in solche, die zu einer selektiven Nitierung der para-Positionen (entspricht der 5'-Stellung gemäß Schema 7) und solche, die zu einer Pernitrierung der ortho- und para-Positionen (entspricht den Positionen 3'und 5' bei Phenylpyridinliganden und den Positionen 4' und 5' bei den Thiophenylpyridinen gemäß Schema 7) führen, unterteilt werden.
Zu ersteren gehören verdünnte Salpetersäure und stöchiömetrisch eingesetzte Nitroniumsalze bzw. auch die Alkali- und Erdalkalinitrate in Organocarbonsäuren und deren Anhydride, insbesondere bei Temperaturen kleiner oder gleich Raumtemperatur.
Zu letzteren gehören konzentrierte Salpetersäure, gegebenenfalls in Kombination mit einer weiteren Säure, Nitroniumsalze und auch die Alkali- und Erdalkalinitrate in Organocarbonsäuren und deren Anhydride sofern sie in überstöchiometrischen Mengen und bei Temperaturen oberhalb von Raumtemperatur eingesetzt werden.

Im erfindungsgemäßen Verfahren führt ein stöchiometrisches Verhältnis der Nitrierungsagentien - bezogen auf den Gehalt an aktivem NO₂⁺ oder der entsprechenden nitrierenden Spezies - zu den Verbindungen (33) oder (34) von 1 : 1 selektiv zu den Verbindungen (1) oder (2) mit n = 1. Dies ist ein überraschendes und nicht vorhersehbares Ergebnis.

Im erfindungsgemäßen Verfahren führt ein stöchiometrisches Verhältnis der Nitrierungsungsagentien - bezogen auf den Gehalt an aktivem NO₂⁺ oder der entsprechenden nitrierenden Spezies - zu den Verbindungen (33) oder (34) von 2 : 1 selektiv zu den Verbindungen (1) oder (2) mit n = 2. Dies ist ein überraschendes und nicht vorhersehbares Ergebnis.

Im erfindungsgemäßen Verfahren führt ein stöchiometrisches Verhältnis der Nitrierungsagentien, die zur ausschließlichen para-Nitrierung führen, - bezogen auf den Gehalt an aktivem NO₂⁺ oder der entsprechenden nitrierenden Spezies - zu den Verbindungen (33) oder (34) von 3 : 1 bis 1000 : 1 selektiv zu den Verbindungen (1) oder (2) mit n = 3. Dies ist ein überraschendes und nicht vorhersehbares Ergebnis.

Im erfindungsgemäßen Verfahren führt ein stöchiometrisches Verhältnis der Nitrierungsagentien - bezogen auf den Gehalt an aktivem NO₂⁺ oder der entsprechenden nitrierenden Spezies - zu den Verbindungen (35) oder (36) von 1 : 1 selektiv zu den Verbindungen (3) oder (4) mit m = 1. Dies ist ein überraschendes und nicht vorhersehbares Ergebnis.

Im erfindungsgemäßen Verfahren führt ein stöchiometrisches Verhältnis der Nitrierungsungsagentien - bezogen auf den Gehalt an aktivem NO₂⁺ oder der entsprechenden nitrierenden Spezies - zu den Verbindungen (35) oder (36) von 2 : 1 bis 1000 : 1 selektiv zu den Verbindungen (3) oder (4) mit m = 2. Dies ist ein überraschendes und nicht vorhersehbares Ergebnis.

Im erfindungsgemäßen Verfahren führt ein stöchiometrisches Verhältnis der Nitrierungsagentien - bezogen auf den Gehalt an aktivem NO₂⁺ oder der entsprechenden nitrierenden Spezies - zu den Verbindungen (37) oder (38) von 1 : 1 selektiv zu den Verbindungen (5) oder (6) mit n = 1. Dies ist ein überraschendes und nicht vorhersehbares Ergebnis.

Im erfindungsgemäßen Verfahren führt ein stöchiometrisches Verhältnis der Nitrierungsungsagentien - bezogen auf den Gehalt an aktivem NO₂⁺ oder der entsprechenden nitrierenden Spezies - zu den Verbindungen (37) oder (38) von 2 : 1 selektiv zu den Verbindungen (5) oder (6) mit n = 2. Dies ist ein überraschendes und nicht vorhersehbares Ergebnis.

Im erfindungsgemäßen Verfahren führt ein stöchiometrisches Verhältnis der Nitrierungsagentien - bezogen auf den Gehalt an aktivem NO₂⁺ oder der entsprechenden nitrierenden Spezies - zu den Verbindungen (37) oder (38) von 3 : 1 bis 1000 : 1 selektiv zu den Verbindungen (5) oder (6) mit n = 3. Dies ist ein überraschendes und nicht vorhersehbares Ergebnis.

Im erfindungsgemäßen Verfahren führt ein stöchiometrisches Verhältnis der Nitrierungsagentien, die zur ortho- und para-Nitrierung führen, - bezogen auf den Gehalt an aktivem NO₂⁺ oder der entsprechenden nitrierenden Spezies - zu den Verbindungen (39) oder (40) von 2 : 1 selektiv zu den Verbindungen (7) oder (8) mit n = 1. Dies ist ein überraschendes und nicht vorhersehbares Ergebnis.

Im erfindungsgemäßen Verfahren führt ein stöchiometrisches Verhältnis der Nitrierungsungsagentien, die zur ortho- und para-Nitrierung führen, - bezogen auf den Gehalt an aktivem NO₂⁺ oder der entsprechenden nitrierenden Spezies - zu den Verbindungen (39) oder (40) von 4 : 1 selektiv zu den Verbindungen (7) oder (8) mit n = 2. Dies ist ein überraschendes und nicht vorhersehbares Ergebnis.

Im erfindungsgemäßen Verfahren führt ein stöchiometrisches Verhältnis der Nitrierungsagentien, die zur ortho- und para-Nitrierung führen, - bezogen auf den Gehalt an aktivem NO₂⁺ oder der entsprechenden nitrierenden Spezies - zu den Verbindungen (39) oder (40) von 6 : 1 bis 1000 : 1 selektiv zu den Verbindungen (7) oder (8) mit n = 3. Dies ist ein überraschendes und nicht vorhersehbares Ergebnis.

Die oben für die homoleptischen, tris-orthometalliereten Verbindungen beschriebenen stöchiometrischen Verhältnisse gelten in analoger Weise auch für die heteroleptischen, bis-und tris-orthometallierten Verbindungen und sind dem Fachmann ohne weiteres erfinderisches Zutun ersichtlich. Aus diesem Grund wird an dieser Stelle auf eine Beschreibung verzichtet.

Außerdem sind die hier beschriebenen stöchiometrischen Verhältnisse bevorzugte Ausführungsformen der vorliegenden Erfindung, da sie zu einheitlich substituierten Produkten führen. Es ist selbstverständlich, daß leichte Abweichungen von den o. g. Verhältnissen immer noch zu guten bis akzeptablen Ergebnissen führen.

Erfindungsgemäße Reaktionsmedien sind protische oder aprotische, halogenfreie oder halogenierte Lösemittel so z.B. Carbonsäuren wie Essigsäure oder Propionsäure, Carbonsäureanhydride wie Essigsäureanhydrid oder Propionsäureanhydrid, Nitrile wie Acetonitril, Propionitril oder Benzonitril, Ether wie Diethylether, THF oder Dioxan, bezüglich der Nitrierung desaktivierte aromatische Kohlenwasserstoffe wie Benzonitril, Nitrobenzol oder Chlorbenzol, Sulfone wie Dimethylsulfon oder Sulfolan, halogenierte Kohlenwasserstoffe wie Dichlormethan, Trichlormethan, 1,1-Dichlorethan, 1,2-Dichlorethan, 1,1,2,2-Tetrachlorethan.

Erfindungsgemäß wird die Umsetzung im Temperaturbereich von - 78°C bis 150°C, bevorzugt bei -30°C bis 100°C, ganz bevorzugt bei 0°C bis 60°C durchgeführt.

Erfindungsgemäß liegt die Konzentration der Rhodium-haltigen bzw. Iridium-haltigen Edukte - Verbindungen (33) bis (64) - im Bereich von 0.0005 mol/l bis 2 mol/l, besonders bevorzugt im Bereich von 0.002 mol/l bis 0.1 mol/l.

Erfindungsgemäß können die Rhodium-haltigen bzw. Iridium-haltigen Edukte gelöst oder suspendiert im Reaktionsmedium vorliegen.

Erfindungsgemäß wird die Reaktion innerhalb von 10 Minuten bis zu 100 Stunden durchgeführt, bevorzugt innerhalb von 1 h bis 40 h.

Mit den hier erläuterten Synthesemethoden lassen sich unter anderem die im folgenden dargestellten Beispiele für Verbindungen (1) bis (32) herstellen.

| | | | | |
|---|---|---|---|---|
| 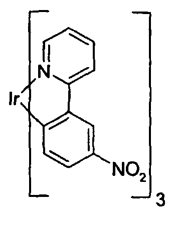 | 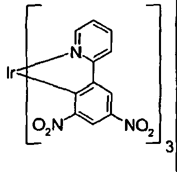 | 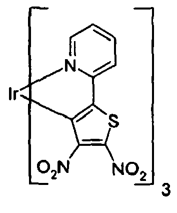 | 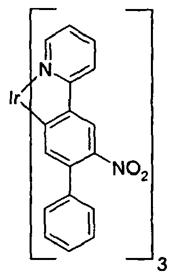 | 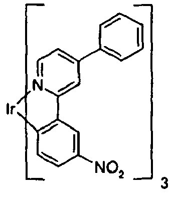 |
| Beispiel 1 | Beispiel 2 | Beispiel 3 | Beispiel 4 | Beispiel 5 |
| 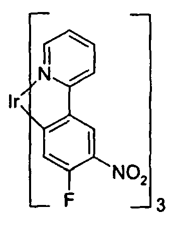 | 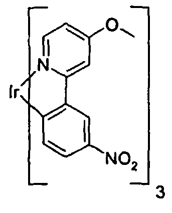 | 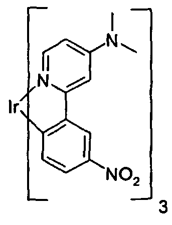 | 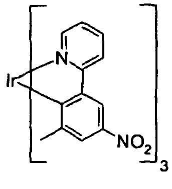 | 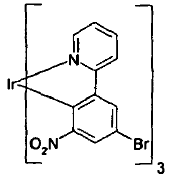 |
| Beispiel 6 | Beispiel 7 | Beispiel 8 | Beispiel 9 | Beispiel 10 |
| 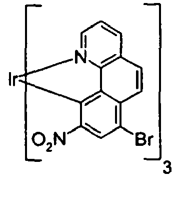 | 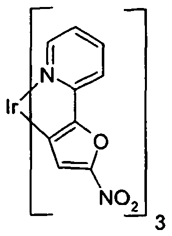 | 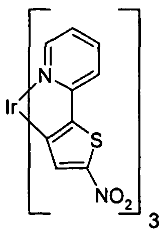 | 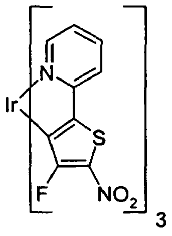 | 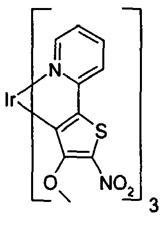 |
| Beispiel 11 | Beispiel 12 | Beispiel 13 | Beispiel 14 | Beispiel 15 |
| 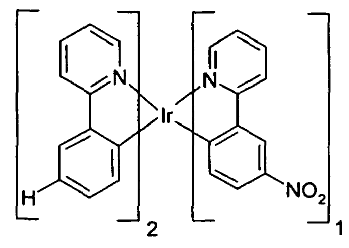 | | 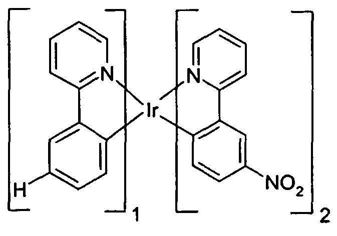 | | 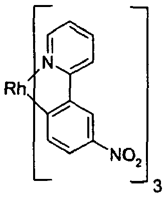 |
| Beispiel 16 | | Beispiel 17 | | Beispiel 18 |
| 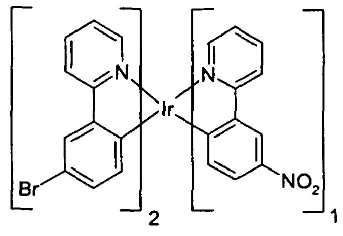 | | 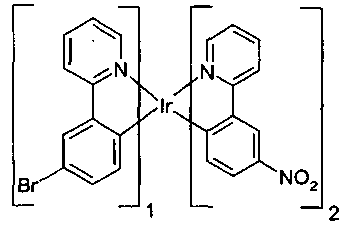 | | 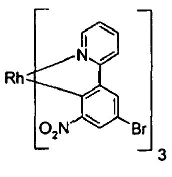 |
| Beispiel 19 | | Beispiel 20 | | Beispiel 21 |
| 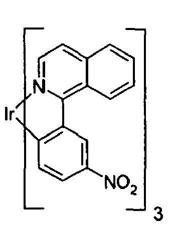 | 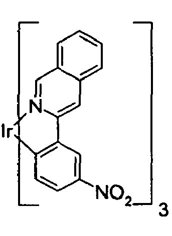 | 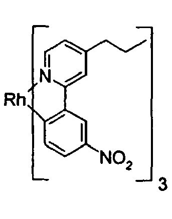 | 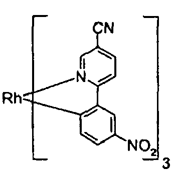 | 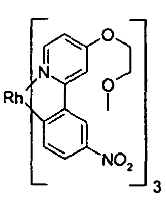 |
| Beispiel 22 | Beispiel 23 | Beispiel 24 | Beispiel 25 | Beispiel 26 |
| 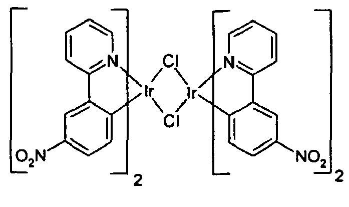 | | 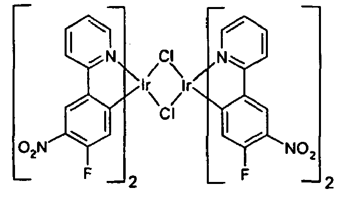 | | 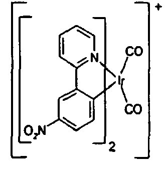 |
| Beispiel 27 | | Beispiel 28 | | Beispiel 29 |
| | | | | |
| 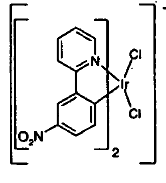 | 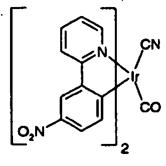 | 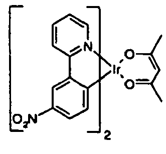 | 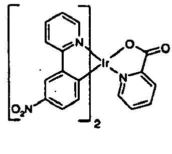 | 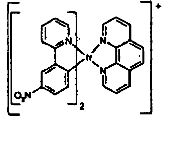 |
| Beispiel 30 | Beispiel 31 | Beispiel 33 | Beispiel 34 | Beispiel 35 |

Die erfindungsgemäßen nitrosubstituierten Metallkomplexe finden Verwendung als aktive Komponenten in elektronischen Bauteilen, wie z. B. organischen Leuchtdioden (OLEDs), organischen integrierten Schaltungen (O-ICs), organischen Feld-Effekt-Transistoren (O-FETs), organischen Dünnfilmtransistoren (O-TFTs), organischen Solarzellen (O-SCs) oder auch organische Laserdioden (O-Laser).

Gegenstand der Erfindung sind daher auch elektronische Bauteile, wie z. B. organische oder polymere Leuchtdioden (OLEDs oder PLEDs), organische integrierte Schaltungen (O-ICs), organische Feld-Effekt-Transistoren (O-FETs), organische Dünnfilmtransistoren (O-TFTs), organische Solarzellen (O-SCs) oder organische Laserdioden (O-Laser), enthaltend ein oder mehrere erfindungsgemäße nitrosubstituierte Metallkomplexe.

Die erfindungsgemäßen Verbindungen können natürlich auch durch gängige organische Reaktionstypen weiter funktionalisiert werden, und so zu erweiterten niedermolekularen Rh- oder Ir-Komplexen umgesetzt werden. Hier ist als Beispiel die Reduktion der Nitrogruppen zu Amino-, Nitroso-, Hydroxylamino-, Azo- und Azoxy-Funktionen zu nennen.

Die vorliegende Erfindung wird durch die folgenden Beispiele näher erläutert; ohne sie darauf beschränken zu wollen. Der Fachmann kann aus den Schilderungen ohne erfinderisches Zutun weitere erfindungsgemäße Komplexe herstellen bzw. das erfindungsgemäße Verfahren anwenden.

### Beispiele

### Synthese von symmetrisch und asymmetrisch funktionalisierten tris-orthometallierten Organo-Rhodium- bzw. Organo-Iridium-Verbindungen:

Die nachfolgenden Synthesen wurden - sofern nicht anders angegeben - an Luft unter Verwendung handelsüblicher Lösungsmittel durchgeführt. Die Edukte wurden von ALDRICH bezogen. *fac-*Tris[2-(2-pyridinyl-κN)phenyl-κC]-iridiurn(III) wurde wie in der offengelegten Anmeldung WO 02/060910 beschrieben dargestellt.

Numerierungsschema für die Zuordnung der ¹H-NMR-Signale [nach: C. Coudret, S. Fraysse, J.-P- Launay, Chem. Commun., 1998, 663-664]:

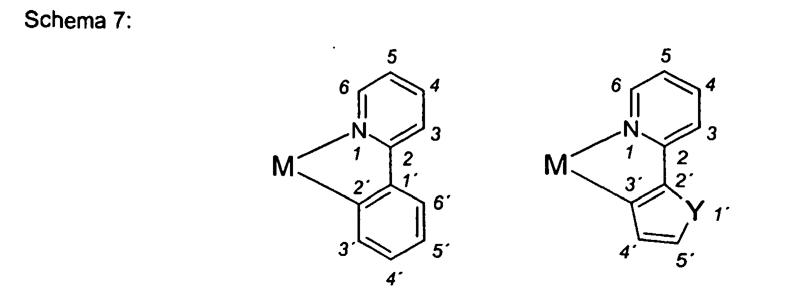

### Beispiel 1: fac-Tris[2-(2-pyridinyl-κN)(5-nitrophenyl)-κC]-iridium(III)

2.08 g rauchende Salpetersäure, 100%, P.A. (Merck) wurden mit 0.2 ml Wasser verdünnt. Diese Mischung wurde zu einer gut gerührten, auf 0°C gekühlten Lösung von 6.548 g (10.0 mmol) *fac*-Tris[2-(2-pyridinyl-κN)phenyl-κC]-iridium(III) in 1500 ml Dichlormethan gefügt. Die Reaktionsmischung wurde weitere 3 h bei 0°C gerührt. Nach Zugabe von 200 ml gesättigter Natriumcarbonatlösung wurde die wässrige Phase abgetrennt, die organische Phase wurde zweimal mit je 100 ml Wasser gewaschen, auf 300 ml eingeengt und dann mit 500 ml Ethanol versetzt. Anschließend wurde der mikrokristalline Niederschlag abfiltriert (P4), dreimal mit 50 ml Ethanol gewaschen, aus DMSO/Ethanol umkristallisiert und dann im Vakuum (60°C, 10⁻⁴ mbar) getrocknet. Die Ausbeute - bei einer Reinheit von > 99.5% nach ¹H-NMR - betrug 6.693 g - 6.814 g entsprechend 85.0% - 86.6%.
¹H-NMR (DMSO-d6): [ppm] = 8.34 (br. dd, 3 H, ³J_{HH} = 8.4 Hz, ⁴J_{HH} = 1.2 Hz , H6), 8.03 (d, 3 H, ⁴J_{HH} = 2.0 Hz, H6'), 7.95 (ddd, 3 H, ³J_{HH} = 8.4 Hz, ³J_{HH} = 8.4 Hz, ⁴J_{HH} = 1.6 Hz, H5), 7.69 (dd, 3 H, ³J_{HH} = 5.4 Hz,⁴J_{HH} = 1.6 Hz, H3), 7.28 (ddd, 3 H, ³J_{HH} = 8.4 Hz, ³J_{HH} = 5.4 Hz, ⁴J_{HH} = 1.2 Hz, H4), 6.99 (dd, 3 H, ³J_{HH} = 8.1 Hz, ⁴J_{HH} = 2.0 Hz, H4'), 6.73 (d, 3 H, ³J_{HH} = 8.1 Hz, H3').

### Beispiel 2: fac-Tris[2-(2-pyridinyl-κN)(3,5-dinitrophenyl)-κC]-iridium(III)

6.27 g rauchende Salpetersäure, 100%, P.A. (Merck) wurden bei Raumtemperatur zu einer gut gerührten Lösung von 6.548 g (10.0 mmol) *fac*-Tris[2-(2-pyridinyl-κN)phenyl-κC]-iridium(III) in 1500 ml Dichlormethan gefügt. Die Reaktionsmischung wurde weitere 3 h bei 0°C gerührt. Anschließend wurde der mikrokristalline Niederschlag abfiltriert (P4), dreimal mit 50 ml Ethanol/Wasser (1:1 v:v) und drei mal mit 50 ml Ethanol gewaschen und dann im Vakuum (60°C, 10⁻⁴ mbar) getrocknet. Die Ausbeute - bei einer Reinheit von > 99.4% nach ¹H-NMR - betrug 8.150 g - 8.291 g entsprechend 88.1 % - 89.6%.
¹H-NMR (DMSO-d6): [ppm] = 8.83 (d, 31 H, ⁴J_{HH} = 2.3 Hz, H4 oder H6'), 8.73 (m, 3 H, H3 oder H6), 8.11 (m, 3 H, H4 oder H5), 7.83 (d, 3 H, ⁴J_{HH} = 2.3 Hz, H6' oder H4'), 7.35 (m, 3 H, H5 oder H4), 7.21 (m, 3 H, H6 oder H3).

### Beispiel 3: fac-Tris[2-(2-pyridinyl-κN)(3,5-dinitrophenyl)-κC]-iridium(III)

Zu einer gut gerührten, auf 0°C gekühlten Suspension von 6.548 g (10.0 mmol) *fac*-Tris[2-(2-pyridinyl-κN)phenyl-κC]-iridium(III) in 300 ml Essigsäureanhydrid wurden 12.378 g (66 mmol) Kupfer(II)nitrat gefügt. Die Reaktionsmischung wurde auf Raumtemperatur erwärmt und dann weitere 3 h bei 30°C gerührt. Nach Zugabe von 2000 ml gesättigter Natriumcarbonatlösung wurde vom mikrokristallinen Niederschlag abfiltriert (P4). Dieser wurde dreimal mit 50 ml Ethanol gewaschen. Nach Umkristallisation des Rohprodukts aus DMSO/Ethanol und Trocknen im Vakuum (60°C, 10⁻⁴ mbar) betrug die Ausbeute - bei einer Reinheit von > 99.6% nach ¹H-NMR - 8.341 g - 8.702 g entsprechend 90.1 % - 94.1 %.
¹H-NMR siehe Beispiel 2.

## Patentansprüche

1. Verfahren zur Herstellung der Verbindungen gemäß Formel (1) bis (32) und (1a) bis (8a): 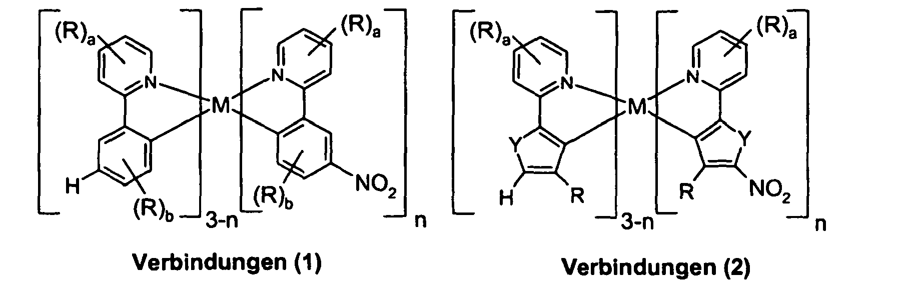 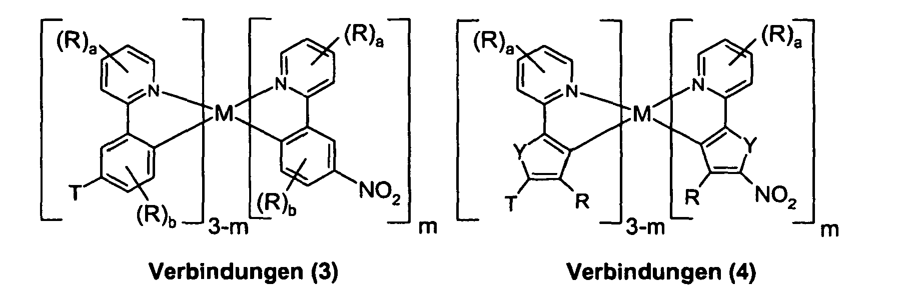 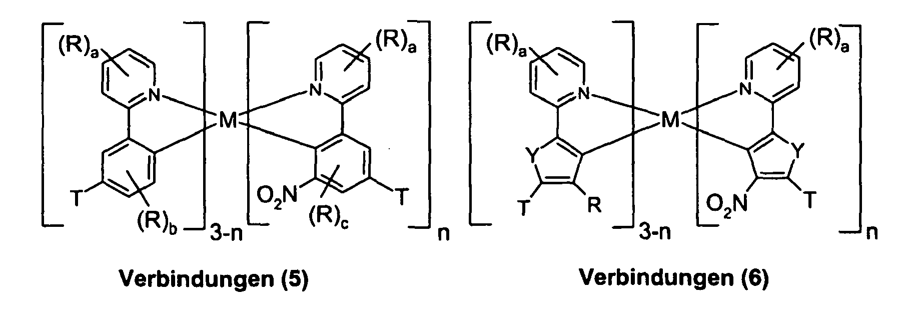 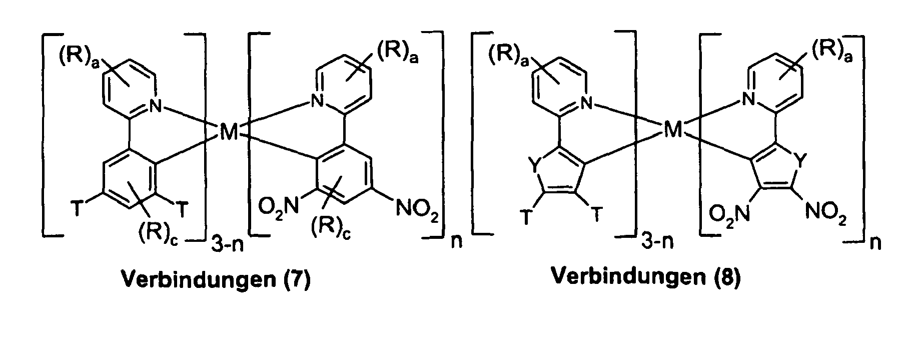 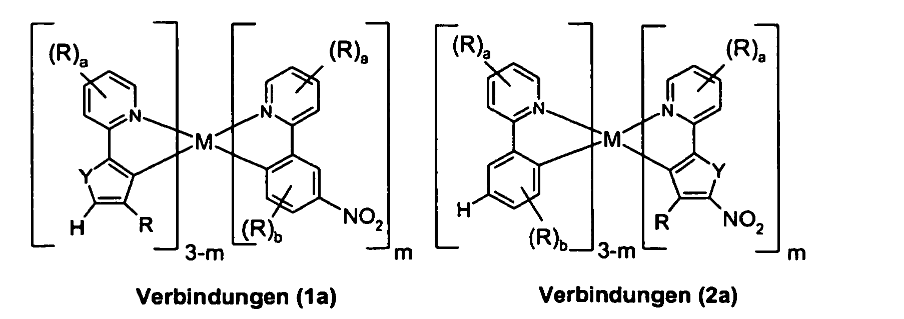 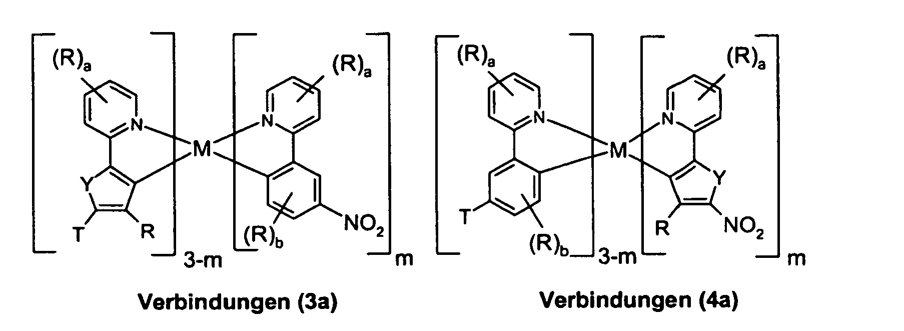 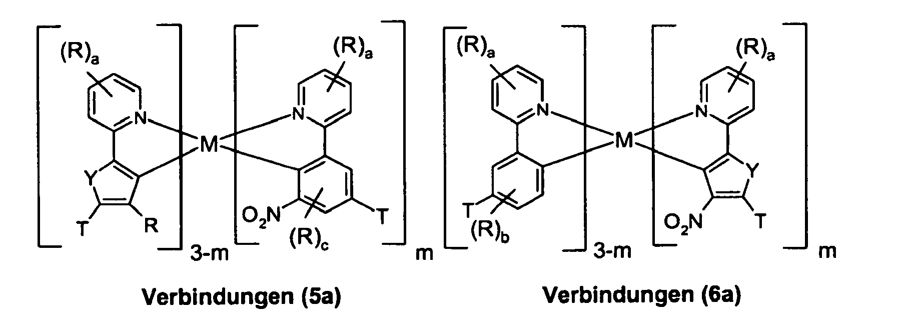 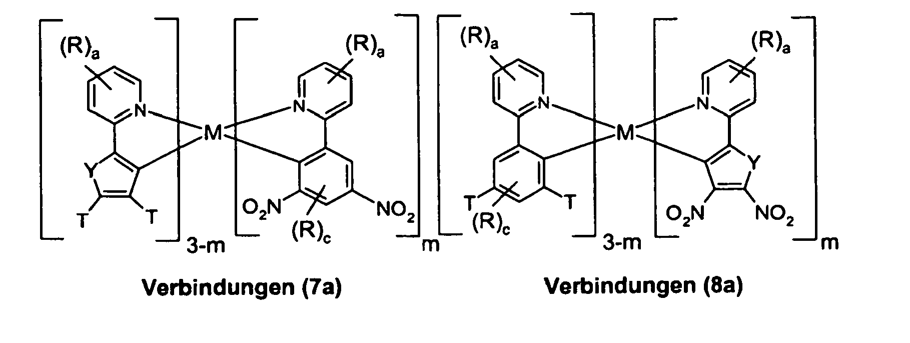 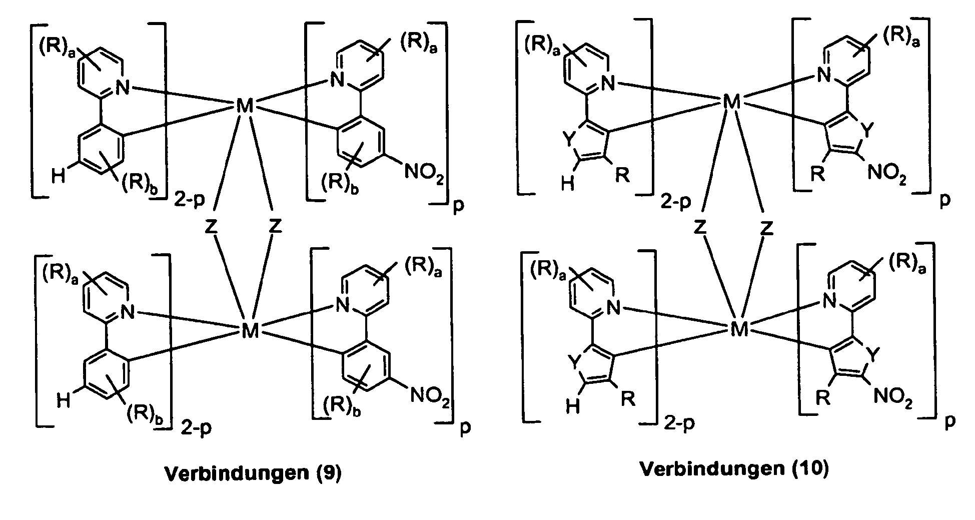 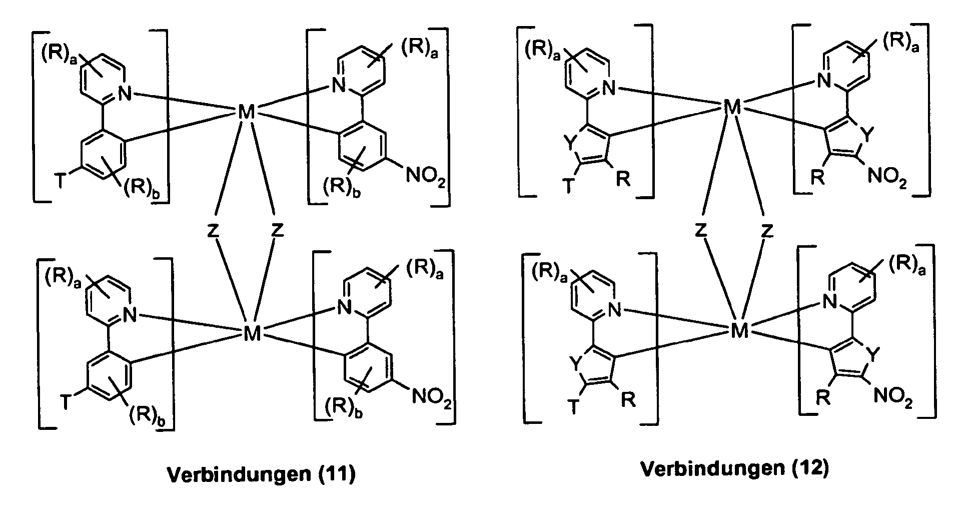 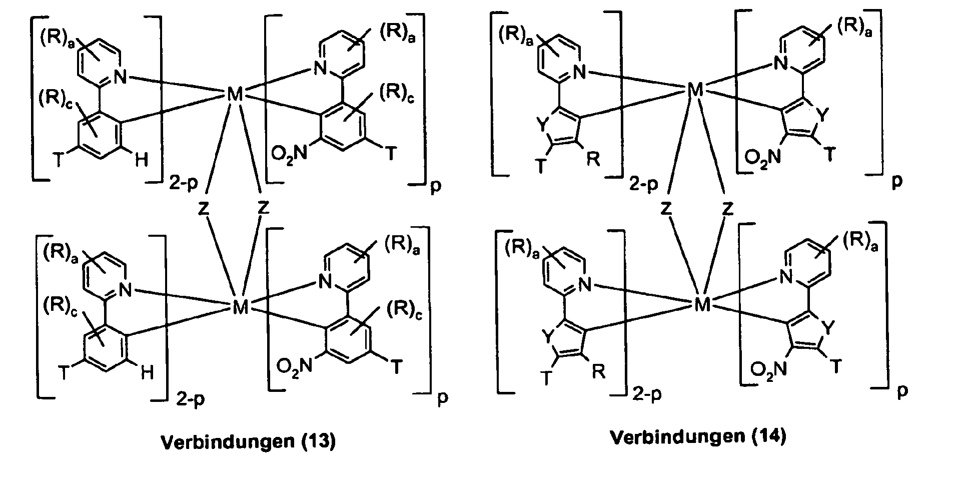 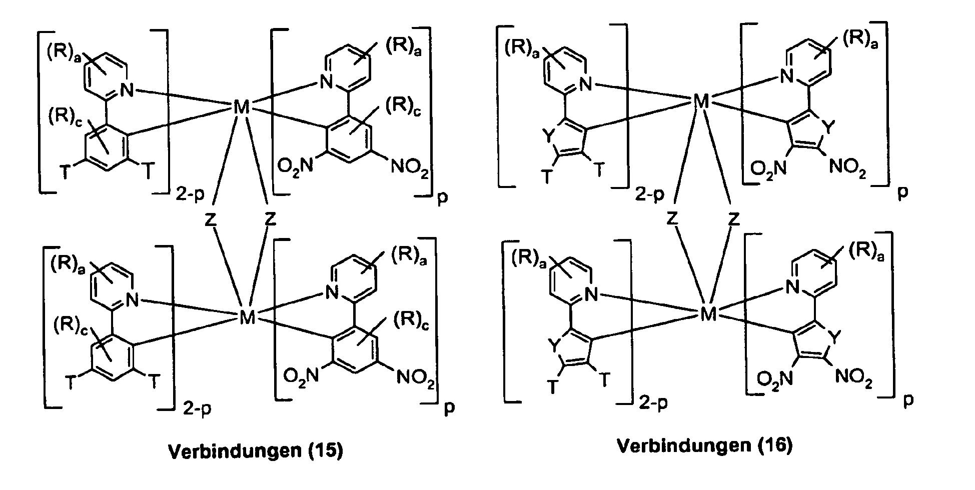 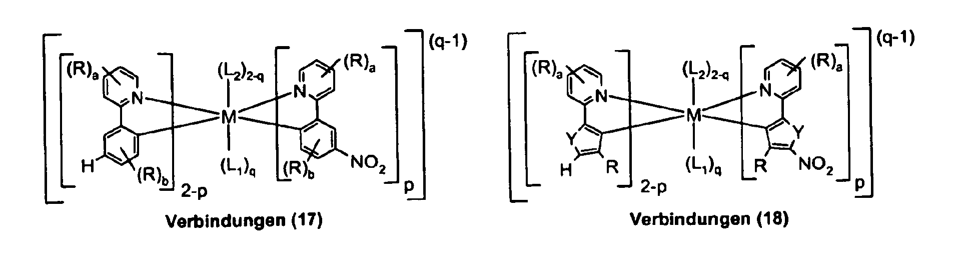 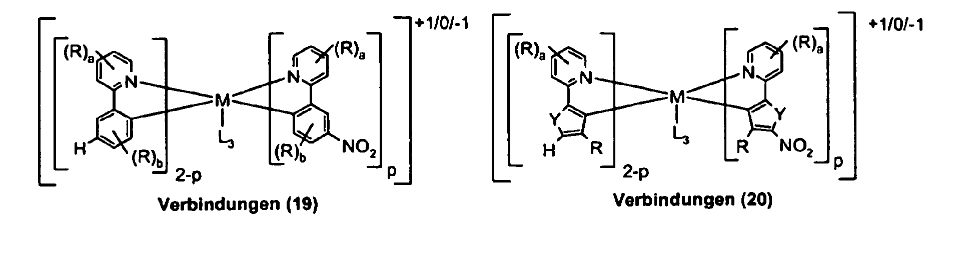 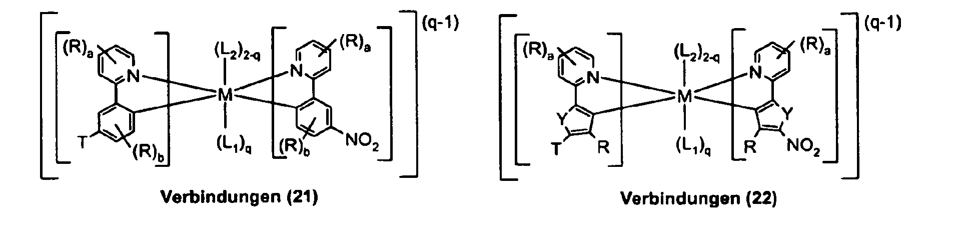 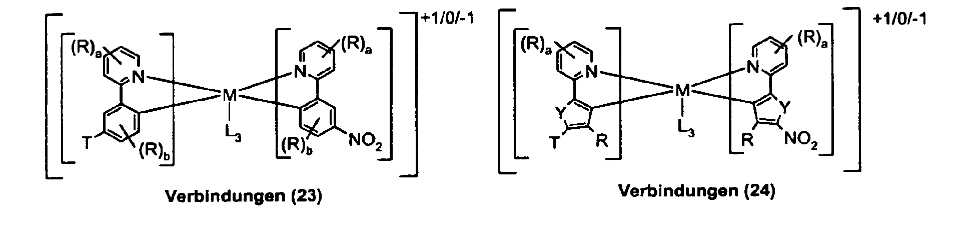 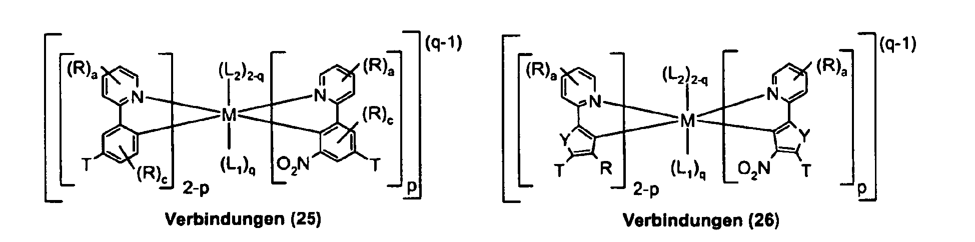 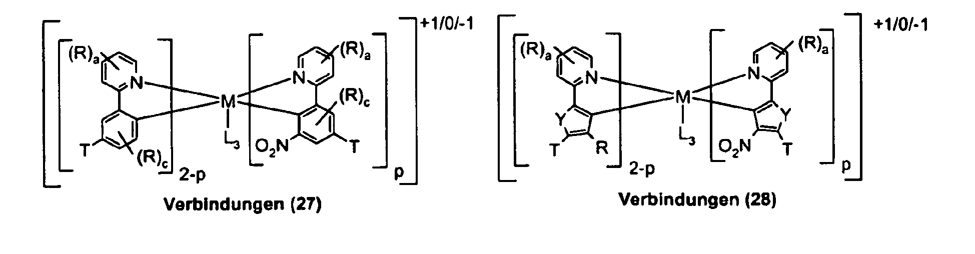 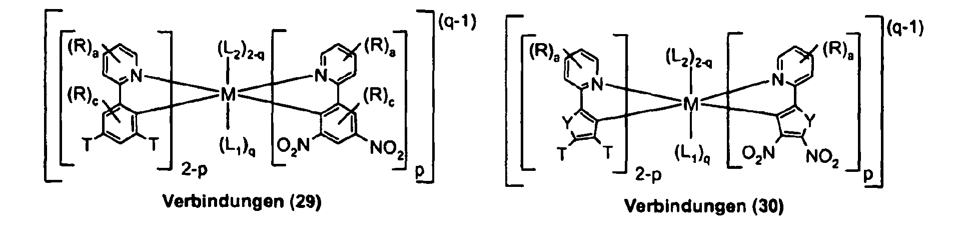 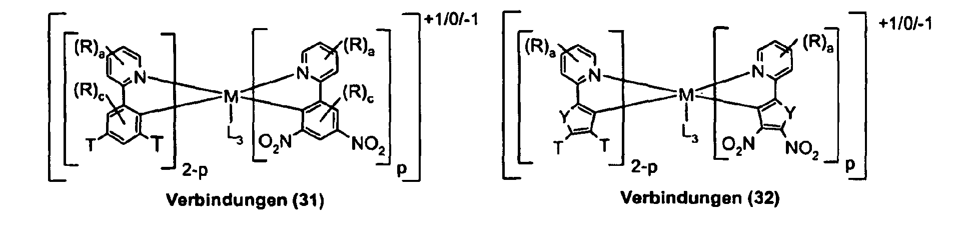 wobei die Symbole und Indizes folgende Bedeutung haben:
M Rh, Ir;
Y O, S, Se, NR¹;
Z ist gleich F, Cl, Br, I, O-R¹, S-R¹, N(R¹)₂;
R ist gleich oder verschieden bei jedem Auftreten H, F, Cl, Br, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹- oder -CONR¹- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
T ist gleich oder verschieden bei jedem Auftreten F, Cl, Br, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹- oder -CONR¹- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
R¹ ist gleich oder verschieden bei jedem Auftreten H oder ein aliphatischer oder aromatischer Kohlenwasserstoffrest mit 1 bis 20 C-Atomen;
L₁ ist ein neutraler, einzähniger Ligand;
L₂ ist ein monoanionischer, einzähniger Ligand;
L₃ ist ein neutraler oder mono- oder dianionischer zweizähniger Ligand;
a ist 0, 1, 2, 3 oder 4;
b ist 0, 1, 2 oder 3;
c ist 0, 1 oder 2;
m ist 1 oder 2;
n ist 1, 2 oder 3;
p ist 1 oder 2;
q ist 0, 1 oder 2;
durch Umsetzung der Verbindungen (33) bis (64): 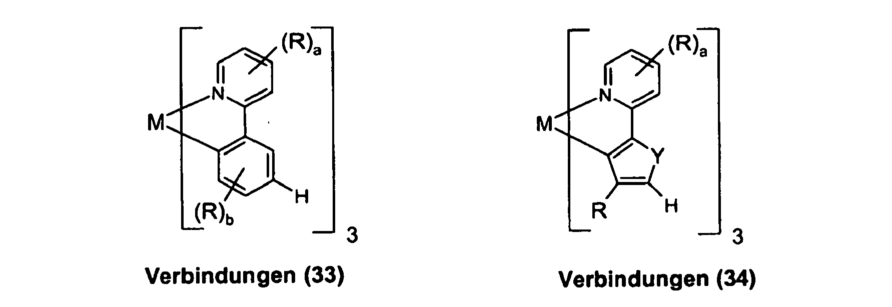 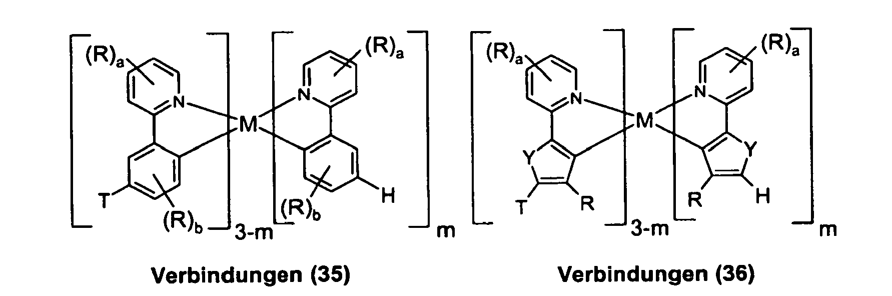 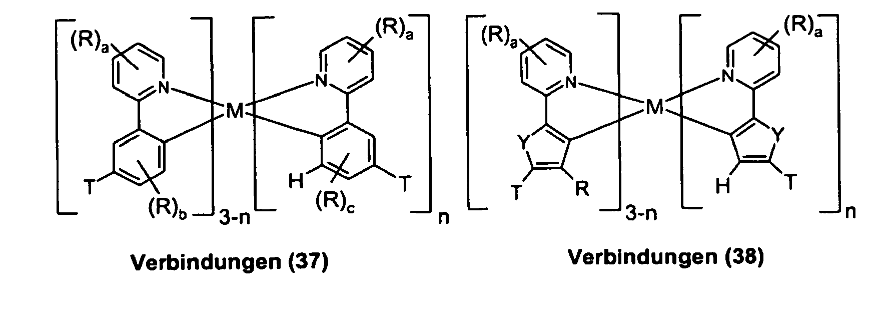 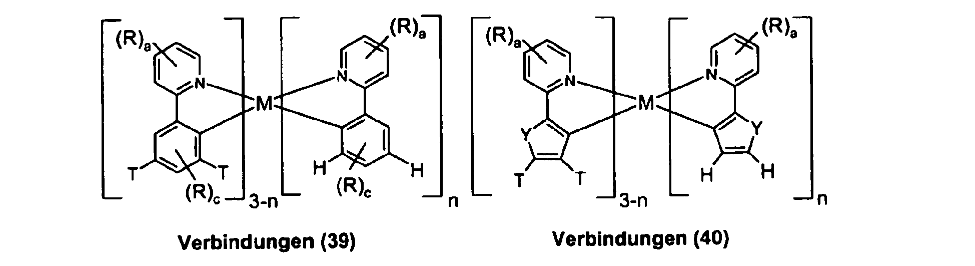 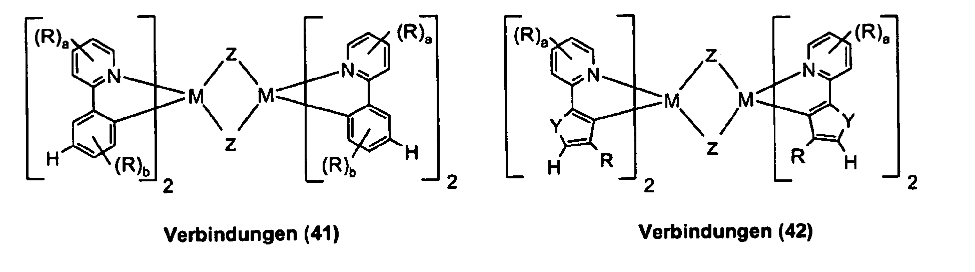 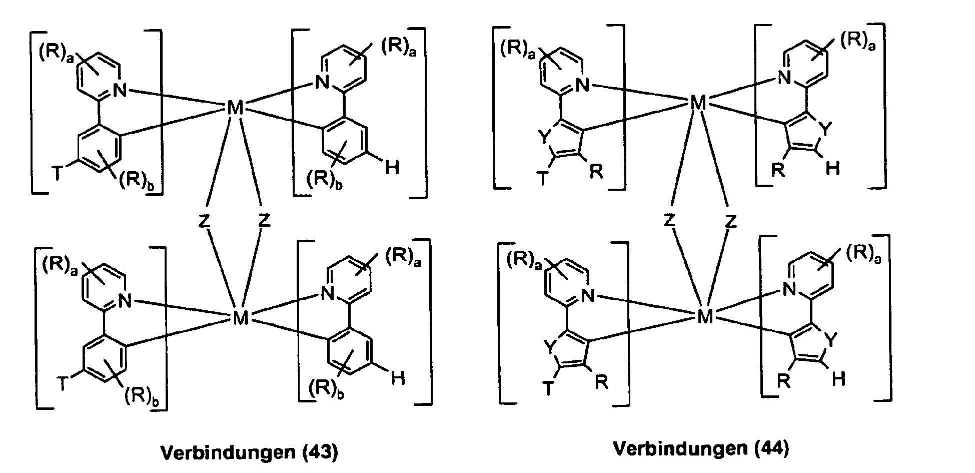 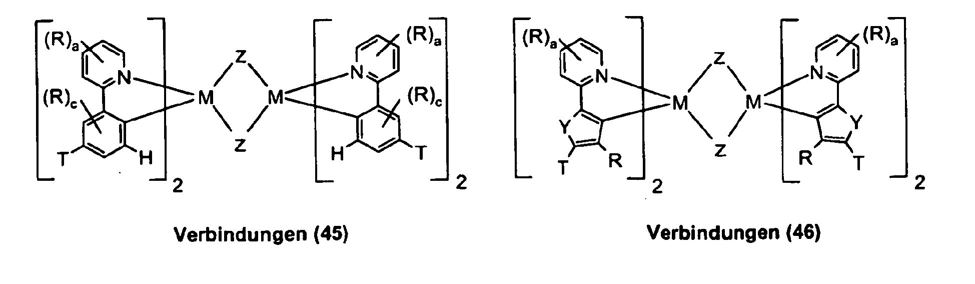 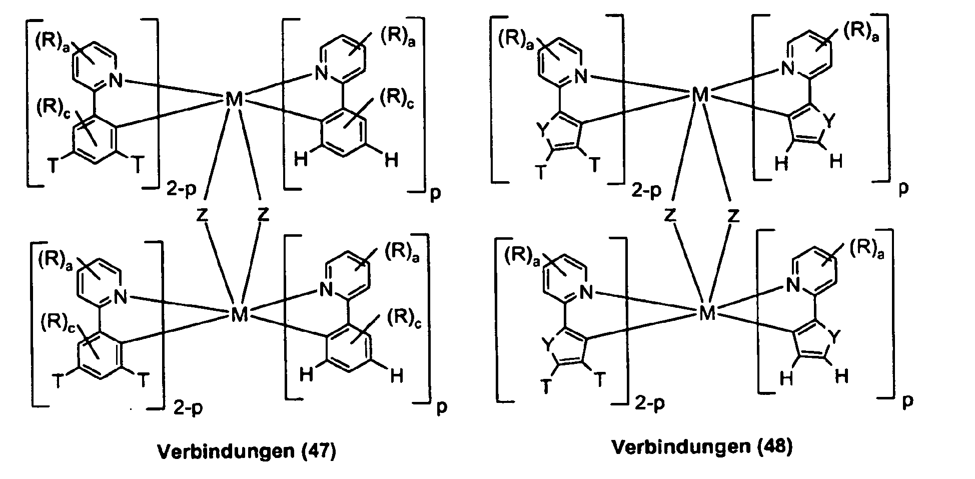 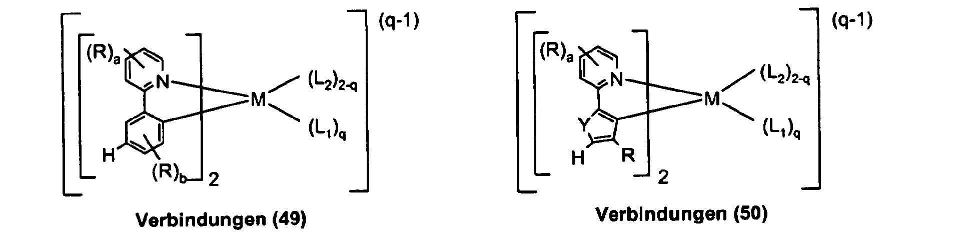 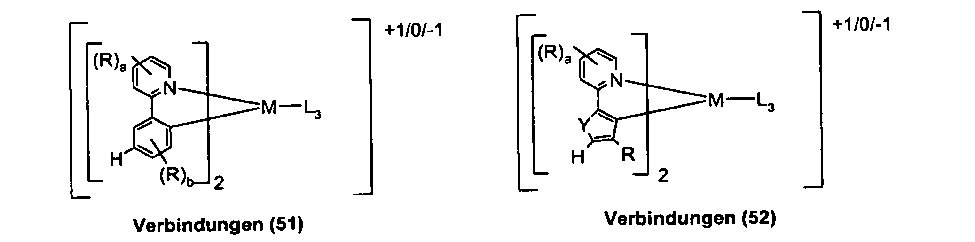 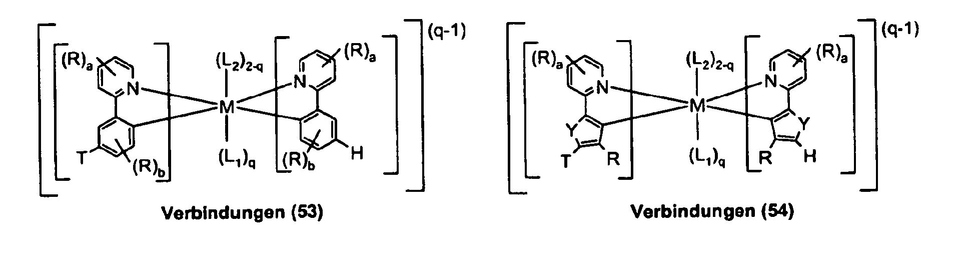 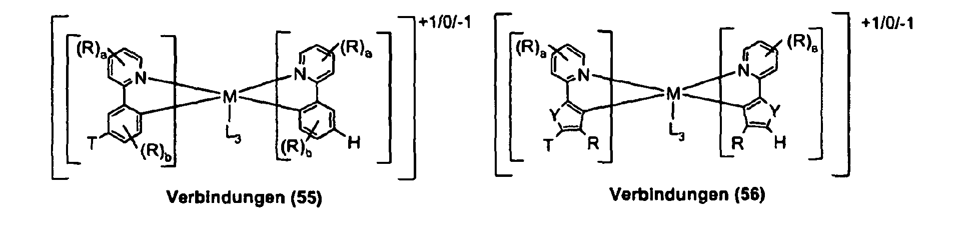 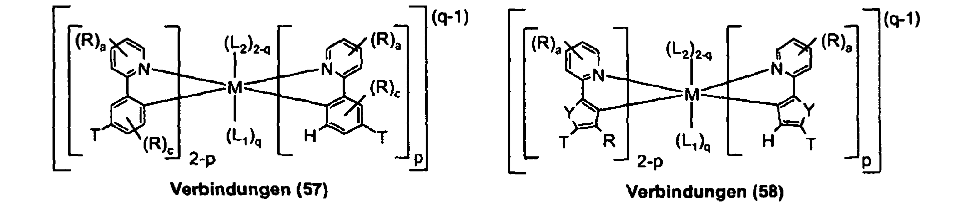 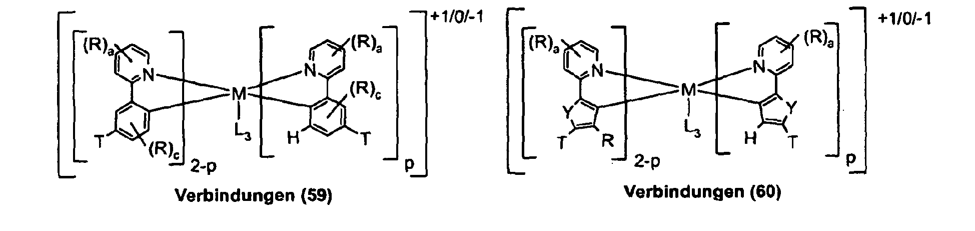 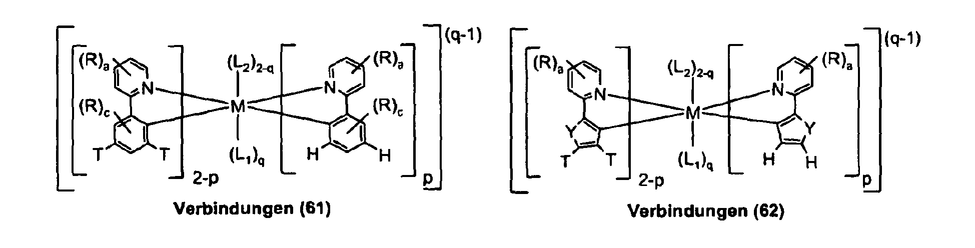 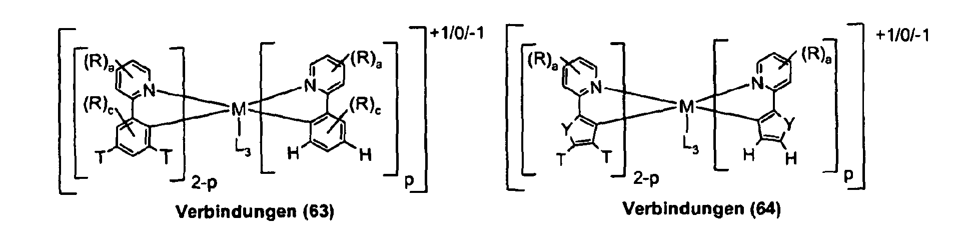 worin M und die Reste und Indizes Y, Z, R, T, R¹, L₁, L₂, L₃, a, b, m, n, p und q die oben genannten Bedeutungen haben, mit Nitrierungsagentien.

2. Verfahren gemäß Anspruch 1, **dadurch gekennzeichnet, dass** als Nitrierungsagens Salpetersäure, gegebenenfalls in Kombination mit einer weiteren Säure wie z.B. Schwefelsäure oder Phosphorsäure, verwendet wird.

3. Verfahren gemäß Anspruch 1, **dadurch gekennzeichnet, dass** als Nitrierungsagens Distickstofftetroxid oder Distickstoffpentoxid verwendet wird.

4. Verfahren gemäß Anspruch 1, **dadurch gekennzeichnet, dass** als Nitrierungsagens Nitroniumsalze des Typs NO₂A, wobei A ein geeignetes inertes Anion wie BF₄⁻, PF₆⁻, SbF₆⁻ oder CF₃SO₃⁻ ist, verwendet werden.

5. Verfahren gemäß Anspruch 1, **dadurch gekennzeichnet, dass** als Nitrierungsagens Alkali- oder Erdalkalinitrate wie Lithium-, Natrium-, Kalium- oder Magnesiumnitrat oder Übergangsmetallnitrate wir Eisen(II)-, Eisen(III)-, Kobalt(II)-, Kobalt(III)-, Nickel(II)- oder Kupfer(II)nitrat, gegebenfalls in Gegenwart einer Säure wie Schwefelsäure, Phosphorsäure, Essigsäure, Propionsäure oder Trifluoressigsäure und/oder eines Carbonsäureanhydrids wie Essigsäureanhydrid oder Propionsäureanhydrid oder Gemischen aus diesen verwendet werden.

6. Verbindung gemäß Formel (6), (7), (8), (5a), (6a), (7a), (8a), (13), (14), (15), (16), (25), (26), (27), (28), (29), (30), (31) und (32): 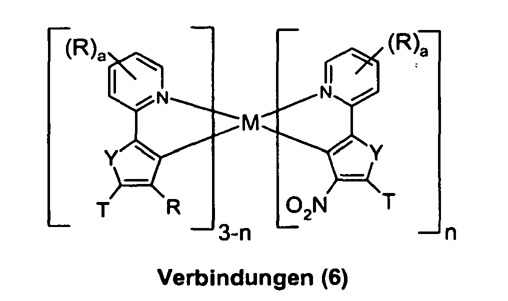 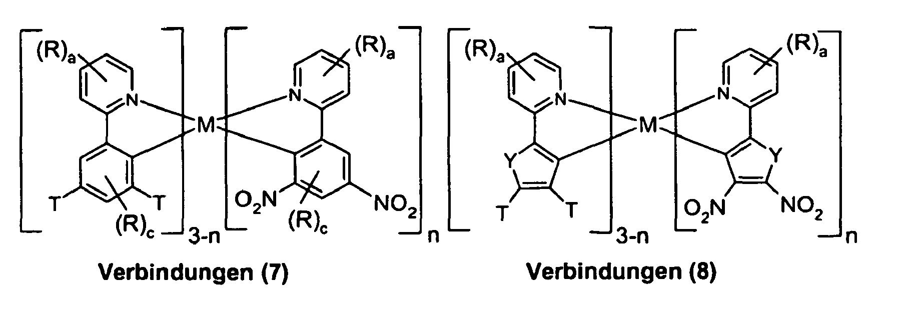 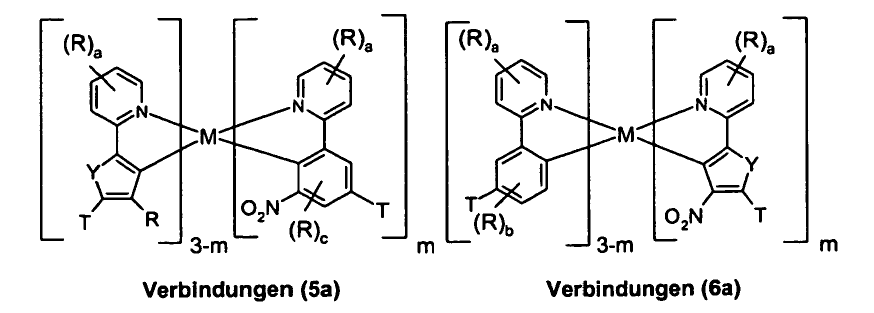 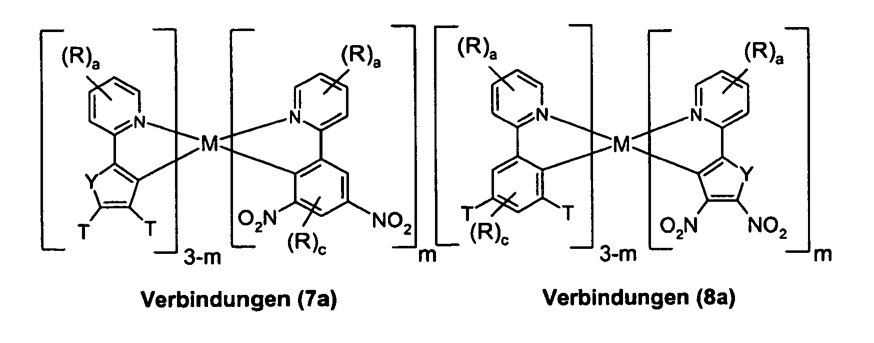 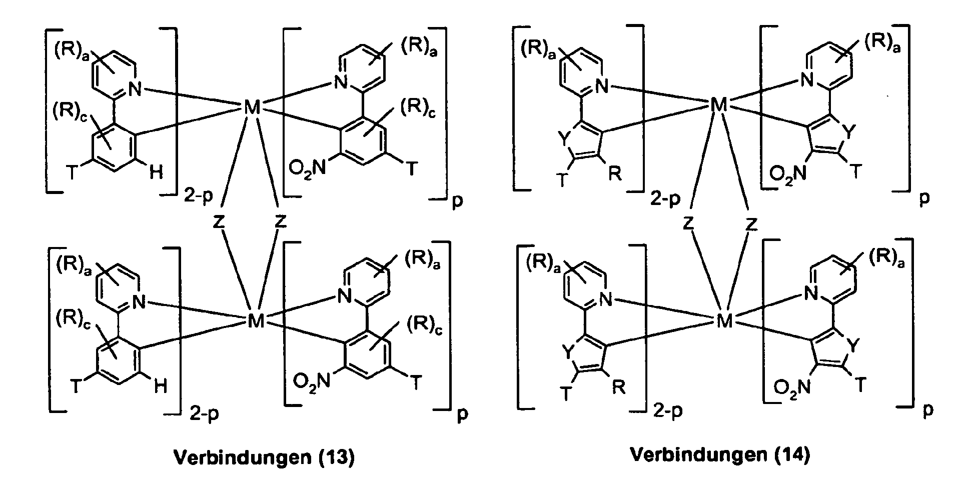 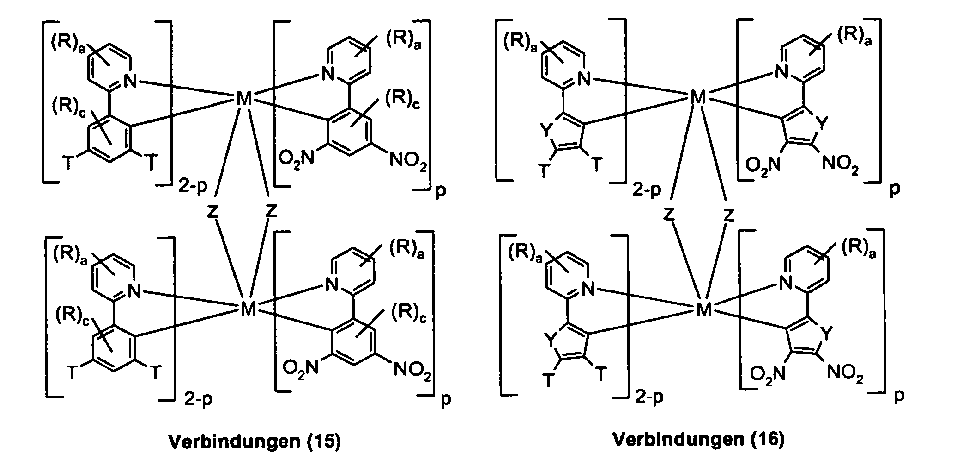 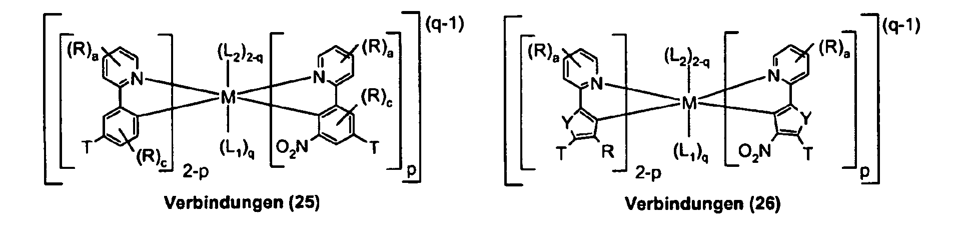 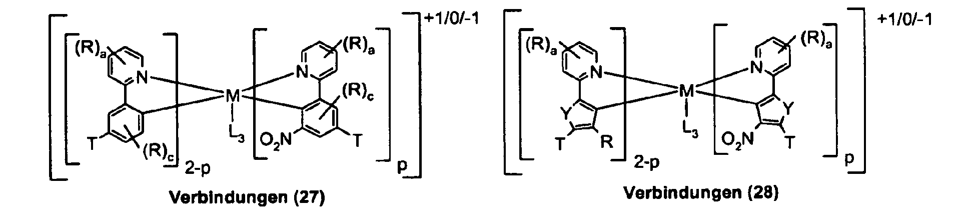 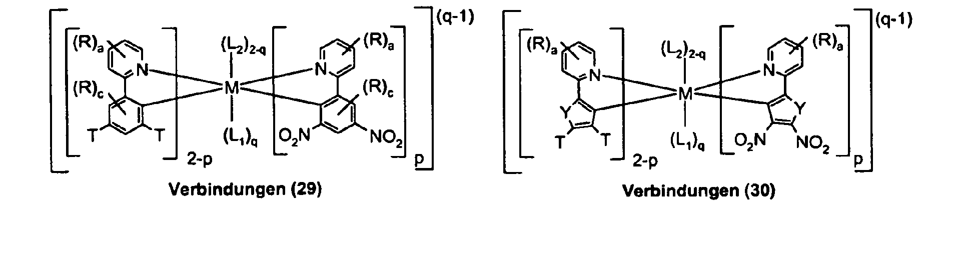 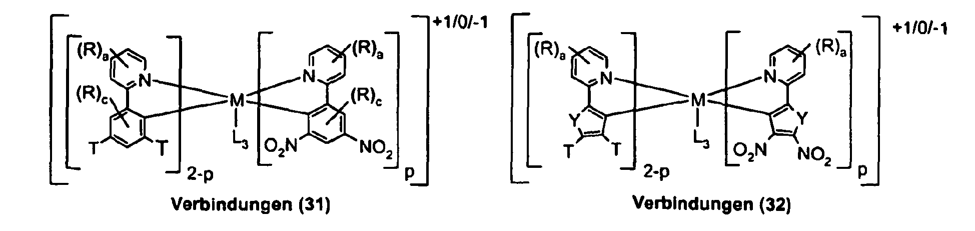 wobei die Symbole und Indizes die in Anspruch 1 genannten Bedeutungen haben.

7. Verbindungen gemäß Anspruch 6, **dadurch gekennzeichnet, daß** ihre Reinheit (mittels 1 H-NMR bzw. HPLC bestimmt) mehr als 99% beträgt.

8. Elektronisches Bauteil enthaltend mindestens eine Verbindung gemäß Anspruch 6 oder 7.

9. Elektronisches Bauteil gemäß Anspruch 8, **dadurch gekennzeichnet, daß** es sich um organische Leuchtdioden (OLEDs), organische integrierte Schaltungen (O-Ics), organische Feld-Effekt-Transistoren (OFETs), organische Dünnfilmtransistoren (OTFTs), organische Solarzellen (O-SCs) oder auch organische Laserdioden (O-Laser) handelt.

## Claims

1. Process for the preparation of the compounds of the formulae (1) to (32) and (1 a) to (8a): 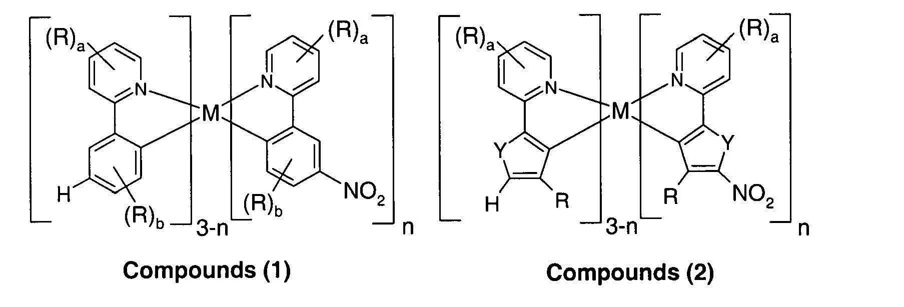 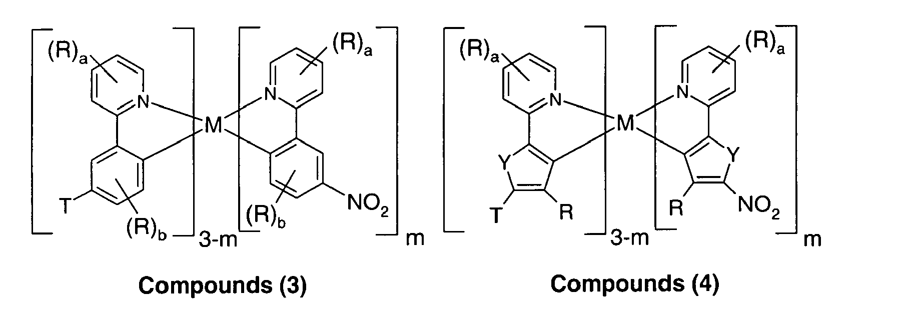 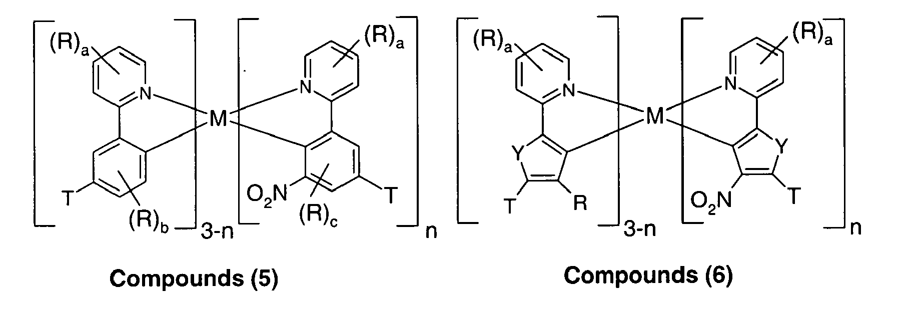 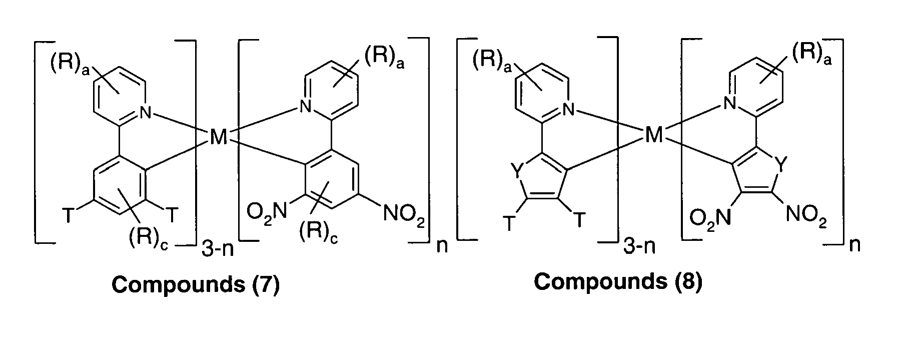 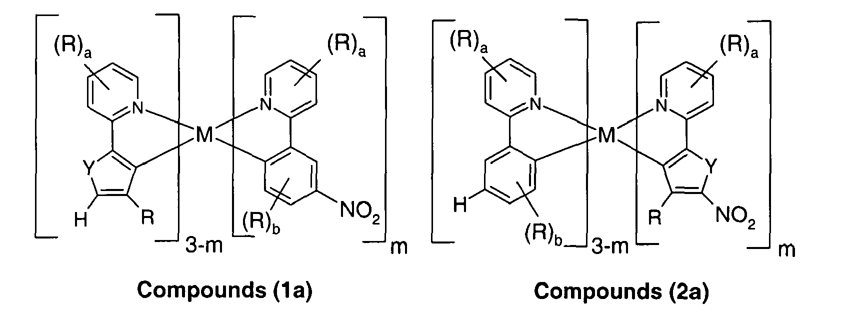 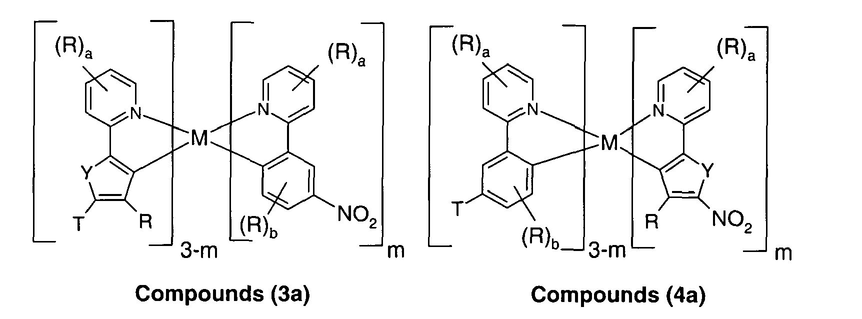 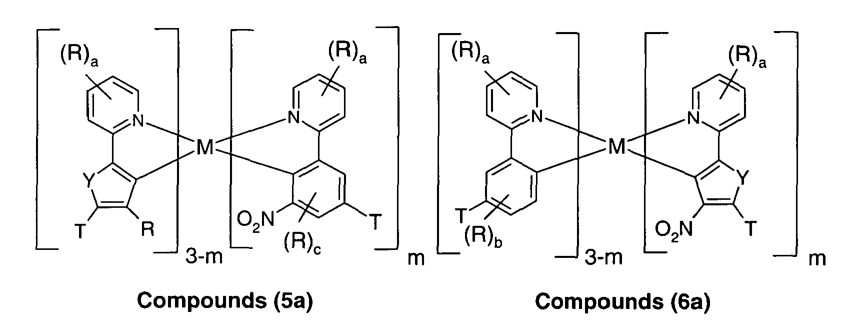 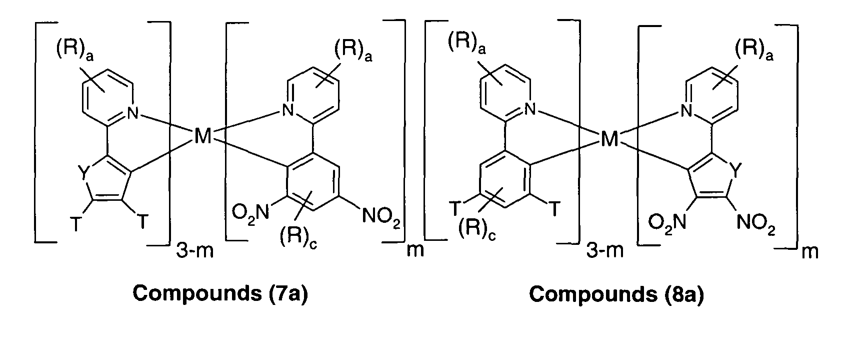 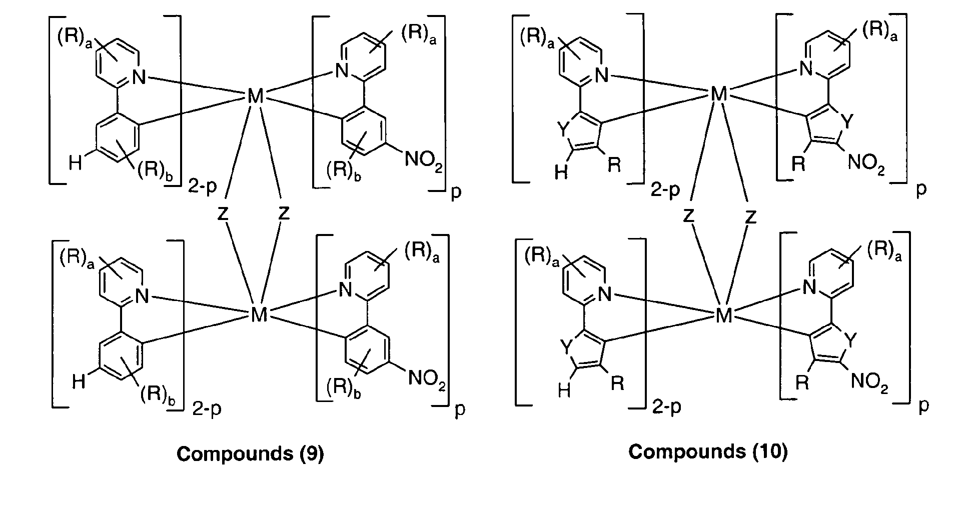 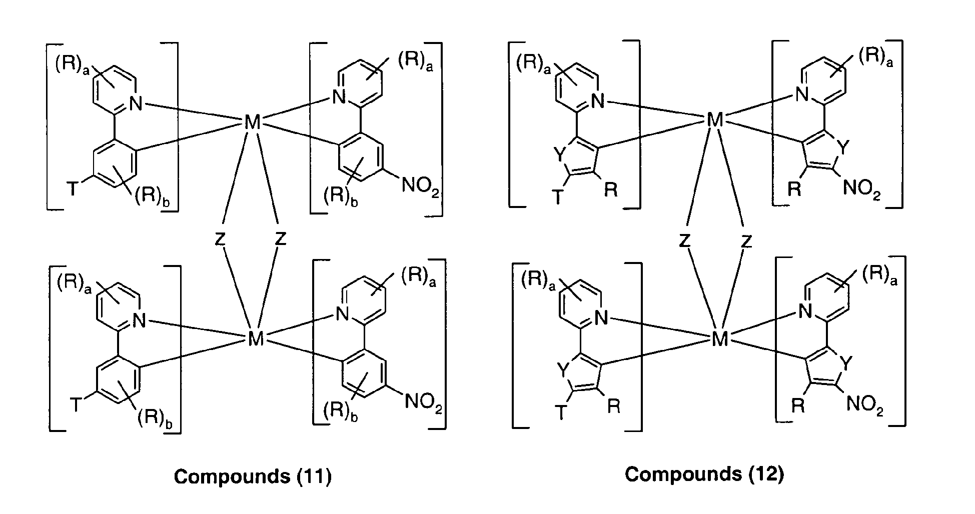 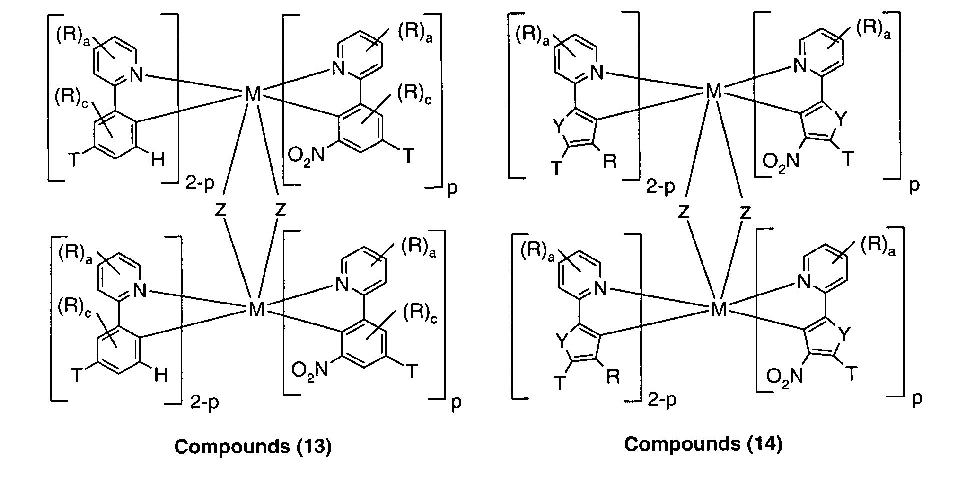 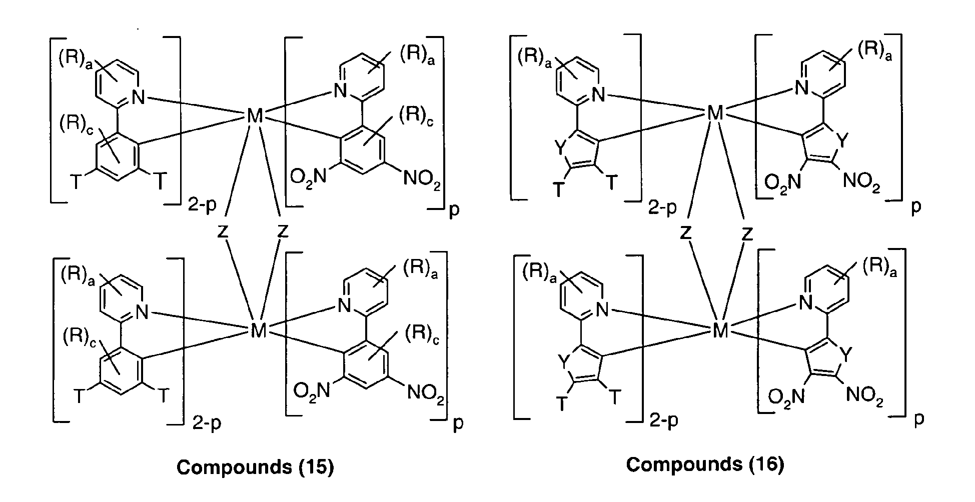 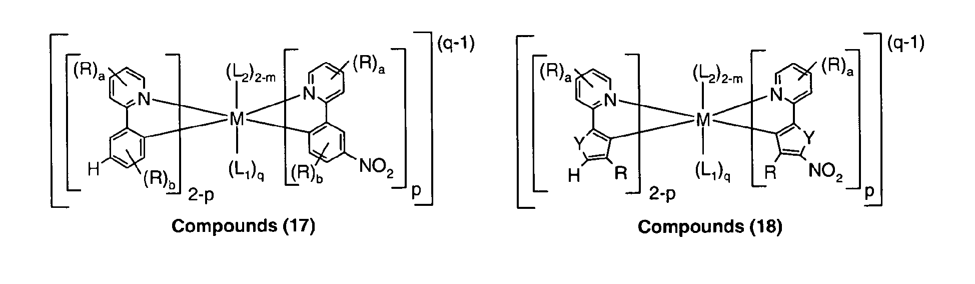 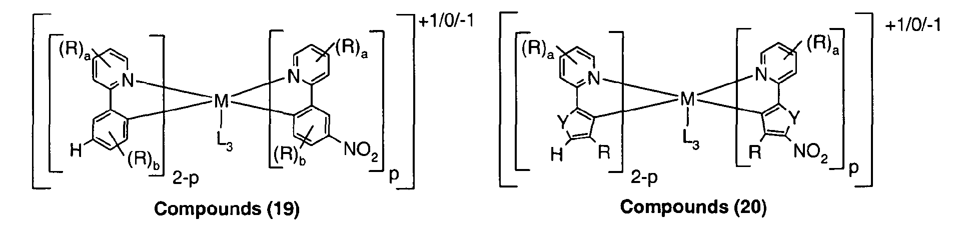 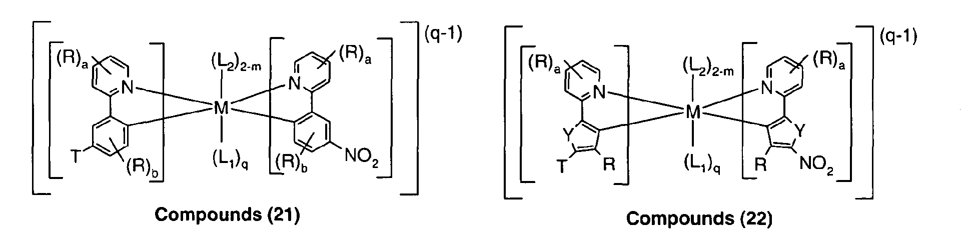 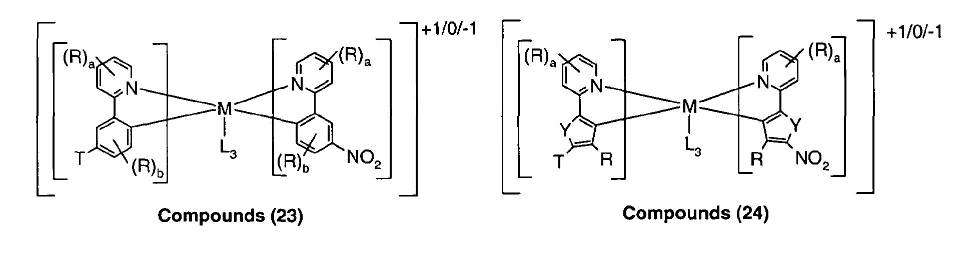 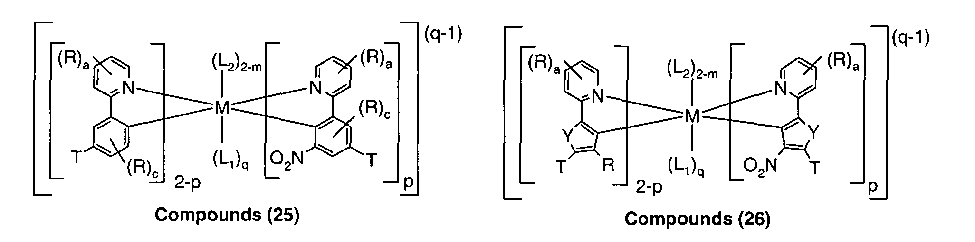 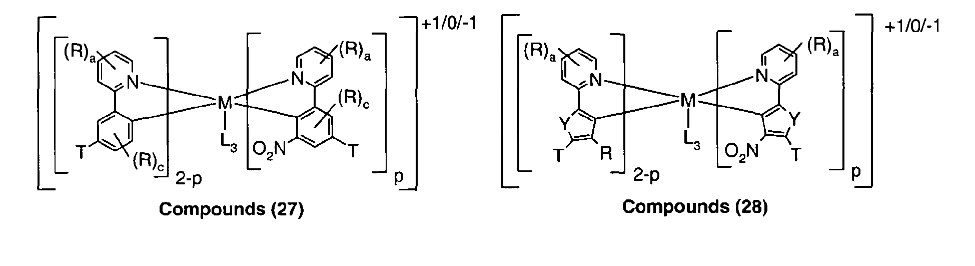 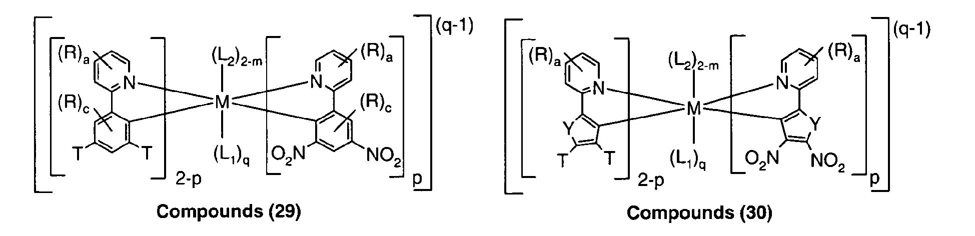 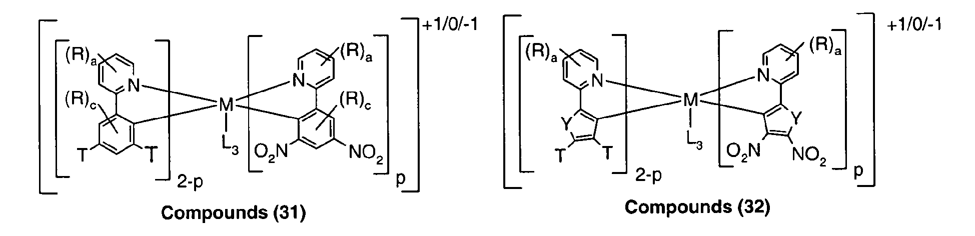 where the symbols and indices have the following meaning:
M denotes Rh, Ir;
Y denotes O, S, Se, NR¹;
Z is equal to F, Cl, Br, I, O-R¹, S-R¹, N(R¹)₂;
R is, identically or differently on each occurrence, H, F, Cl, Br, CN, a straight-chain or branched or cyclic alkyl or alkoxy group having 1 to 20 C atoms, where one or more non-adjacent CH₂ groups may be replaced by -O-, -SiR¹₂-, -S-, -NR¹- or -CONR¹- and where one or more H atoms may be replaced by F, or an aryl or heteroaryl group having 4 to 14 C atoms, which may be substituted by one or more non-aromatic radicals R, where a plurality of substituents R, both on the same ring and also on the two different rings, may together in turn define a further aliphatic or aromatic, mono- or polycyclic ring system;
T is, identically or differently on each occurrence, F, Cl, Br, CN, a straight-chain or branched or cyclic alkyl or alkoxy group having 1 to 20 C atoms, where one or more non-adjacent CH₂ groups may be replaced by -O-, -SiR¹₂-, -S-, -NR¹- or -CONR¹- and where one or more H atoms may be replaced by F, or an aryl or heteroaryl group having 4 to 14 C atoms, which may be substituted by one or more non-aromatic radicals R, where a plurality of substituents R, both on the same ring and also on the two different rings, may together in turn define a further aliphatic or aromatic, mono- or polycyclic ring system;
R¹ is, identically or differently on each occurrence, H or an aliphatic or aromatic hydrocarbon radical having 1 to 20 C atoms;
L₁ is a neutral, monodentate ligand;
L₂ is a monoanionic, monodentate ligand;
L₃ is a neutral or mono- or dianionic bidentate ligand;
a is 0, 1, 2, 3 or 4;
b is 0, 1, 2 or 3;
c is 0, 1 or 2;
m is 1 or 2;
n is 1, 2 or 3;
p is 1 or 2;
q is 0, 1 or 2;
by reaction of compounds (33) to (64): 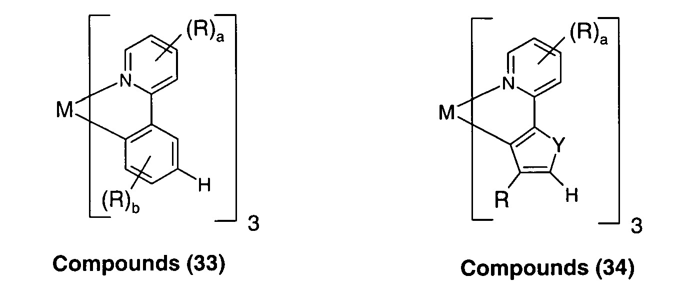 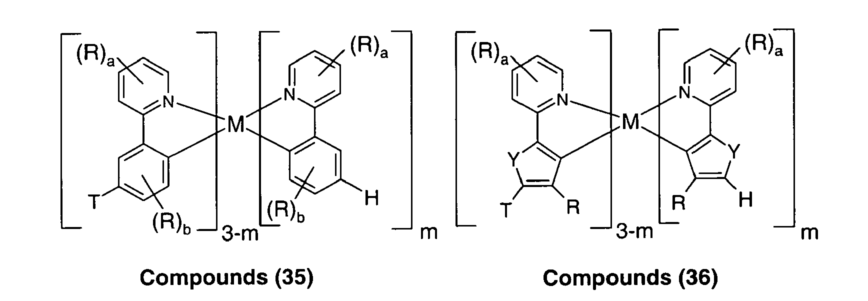 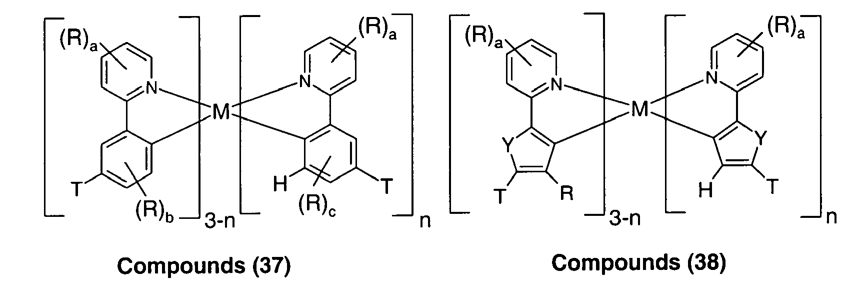 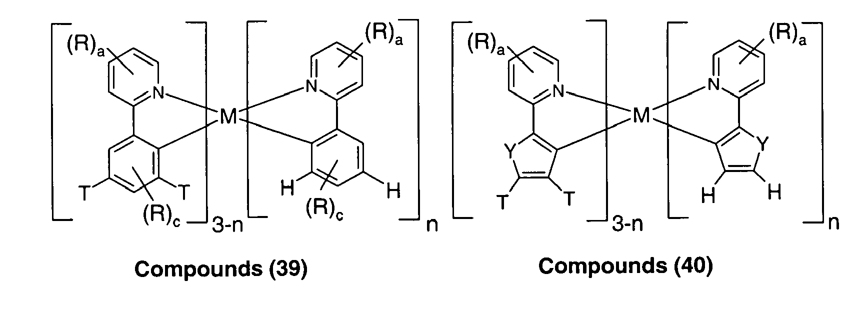 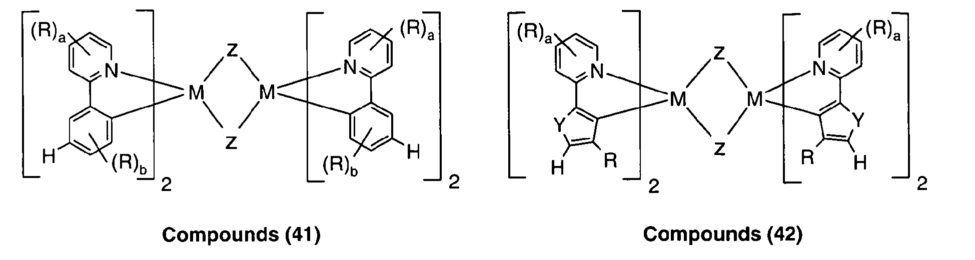 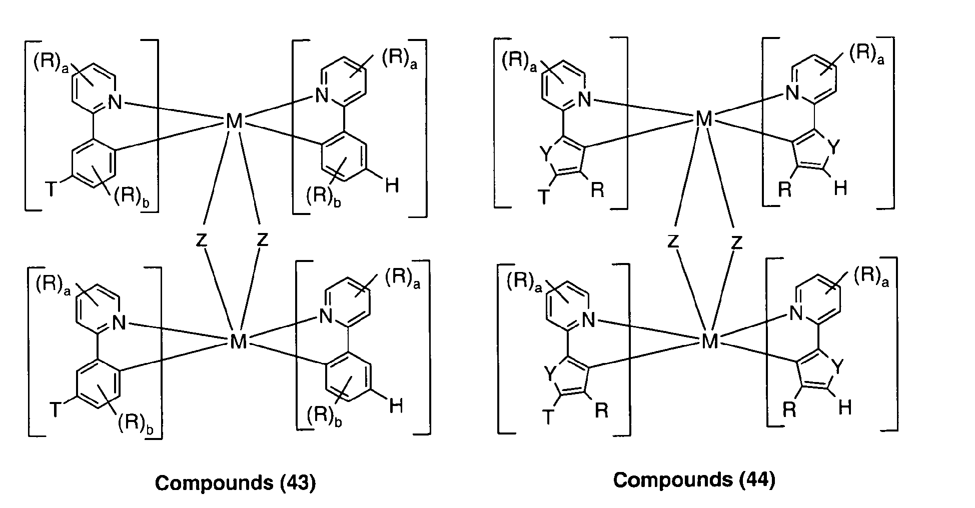 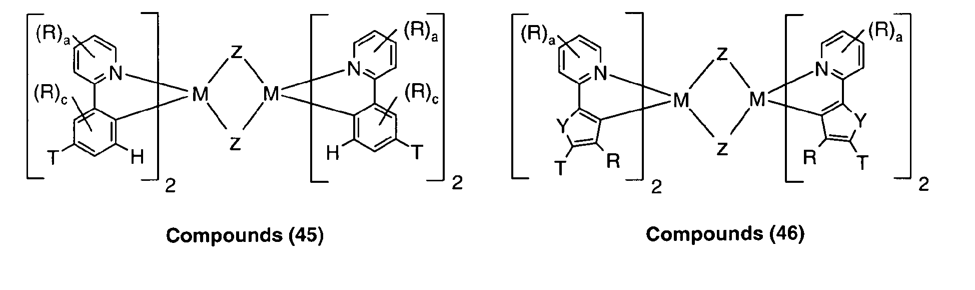 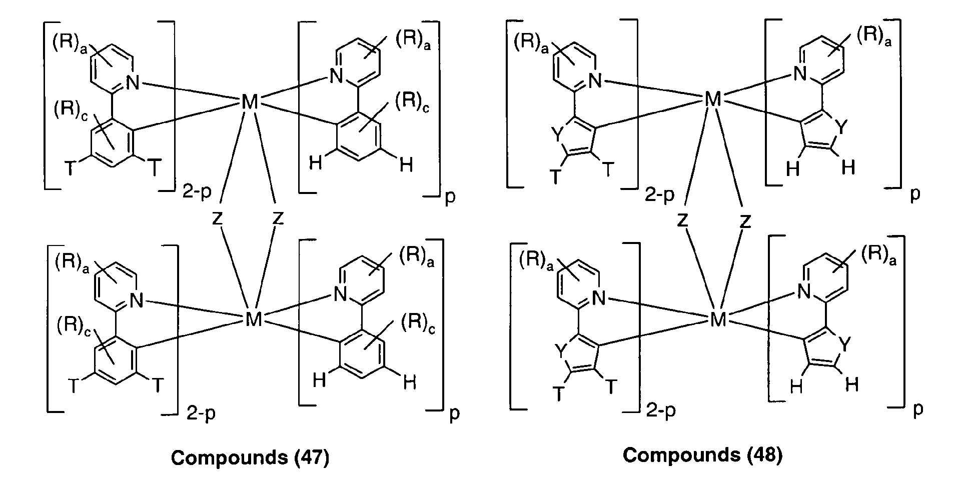 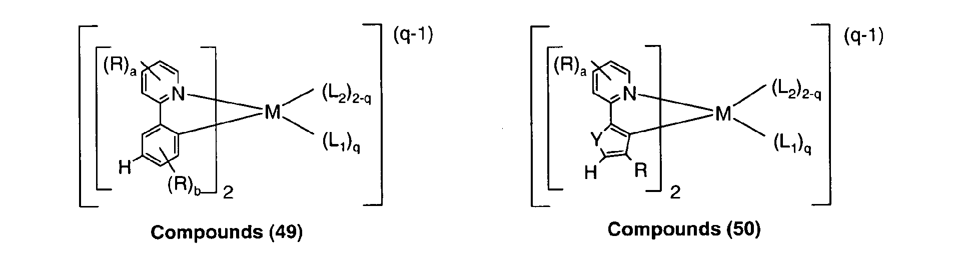 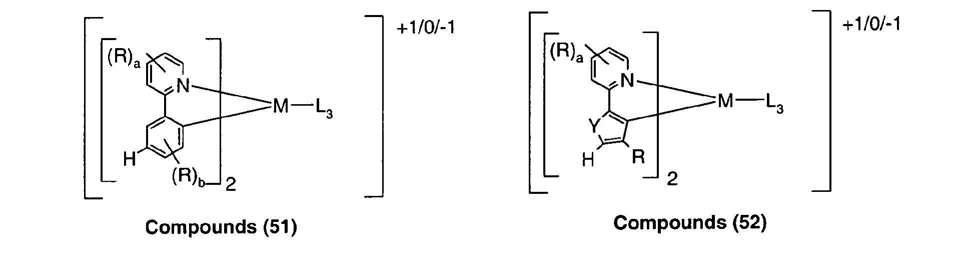 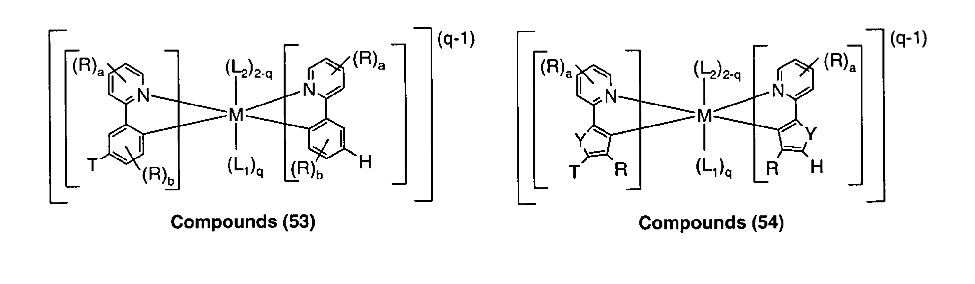 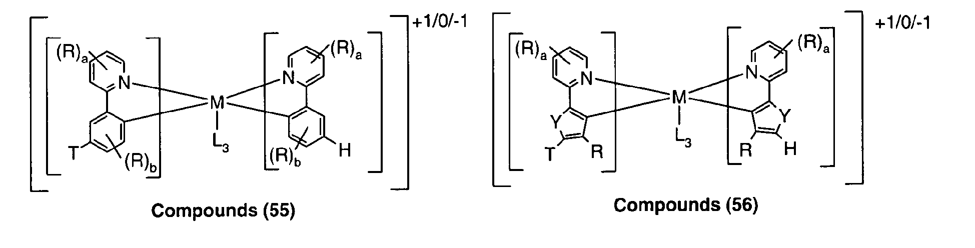 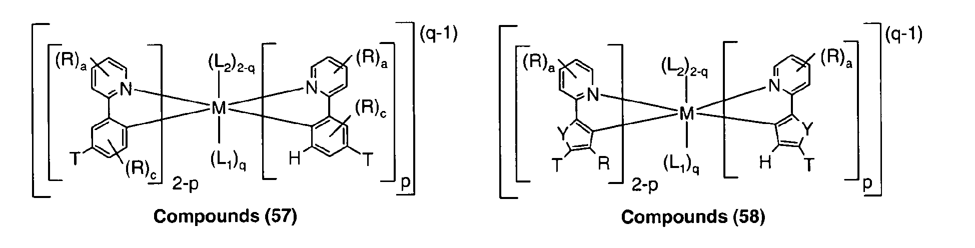 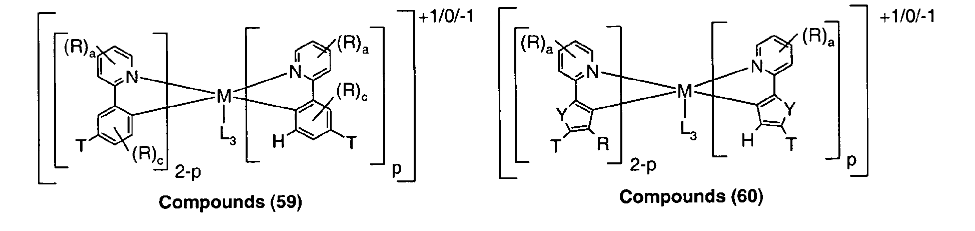 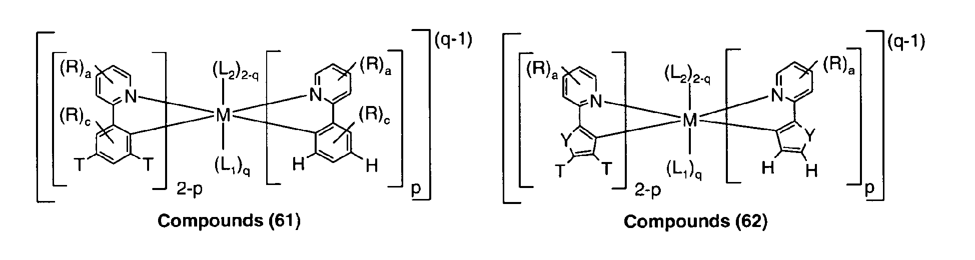 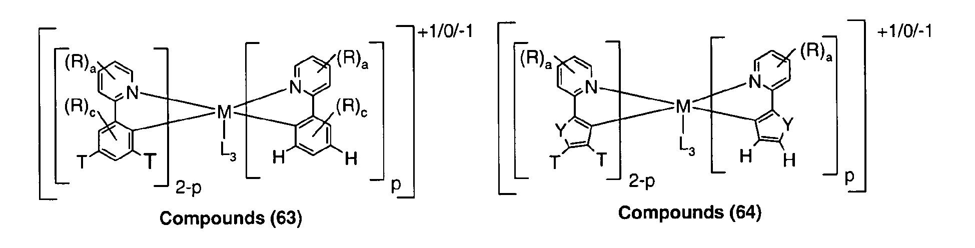 in which M and the radicals and indices Y, Z, R, T, R¹, L₁, L₂, L₃, a, b, m, n, p and q have the meanings mentioned above, with nitrating agents.

2. Process according to Claim 1, **characterised in that** the nitrating agent used is nitric acid, optionally in combination with a further acid, such as, for example, sulfuric acid or phosphoric acid.

3. Process according to Claim 1, **characterised in that** the nitrating agent used is dinitrogen tetroxide or dinitrogen pentoxide.

4. Process according to Claim 1, **characterised in that** the nitrating agent used is nitronium salts of the NO₂A type, where A is a suitable inert anion, such as BF₄⁻, PF₆⁻, SbF₆⁻ or CF₃SO₃⁻.

5. Process according to Claim 1, **characterised in that** the nitrating agent used is alkali or alkaline earth metal nitrates, such as lithium, sodium, potassium or magnesium nitrate, or transition-metal nitrates, such as iron(II), iron(III), cobalt(II), cobalt(III), nickel(II) or copper(II) nitrate, optionally in the presence of an acid, such as sulfuric acid, phosphoric acid, acetic acid, propionic acid or trifluoroacetic acid, and/or of a carboxylic anhydride, such as acetic anhydride or propionic anhydride, or mixtures thereof.

6. Compound of the formulae (6), (7), (8), (5a), (6a), (7a), (8a), (13), (14), (15), (16), (25), (26), (27), (28), (29), (30), (31) and (32): 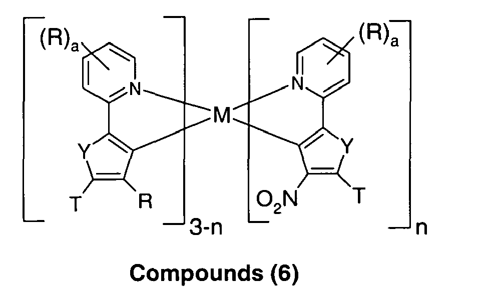 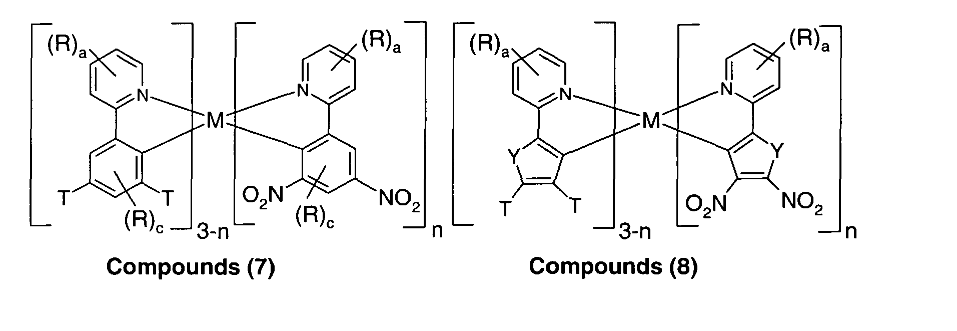 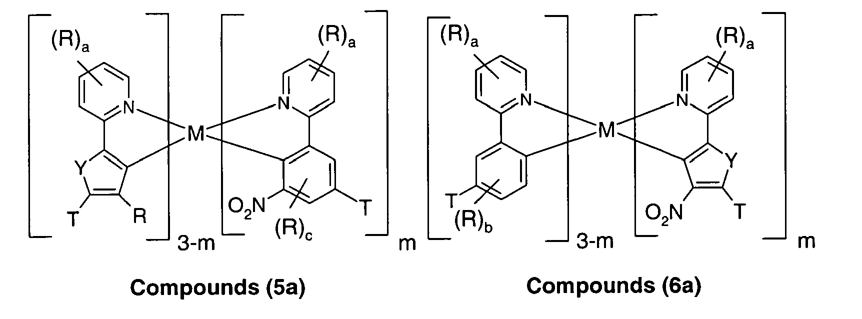 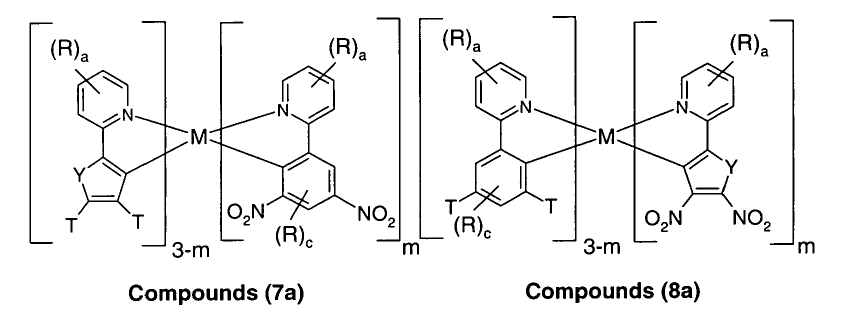 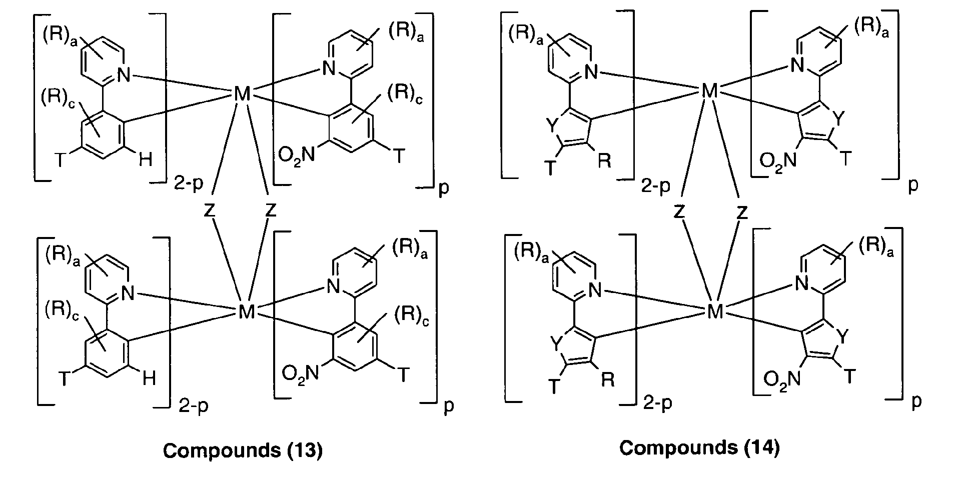 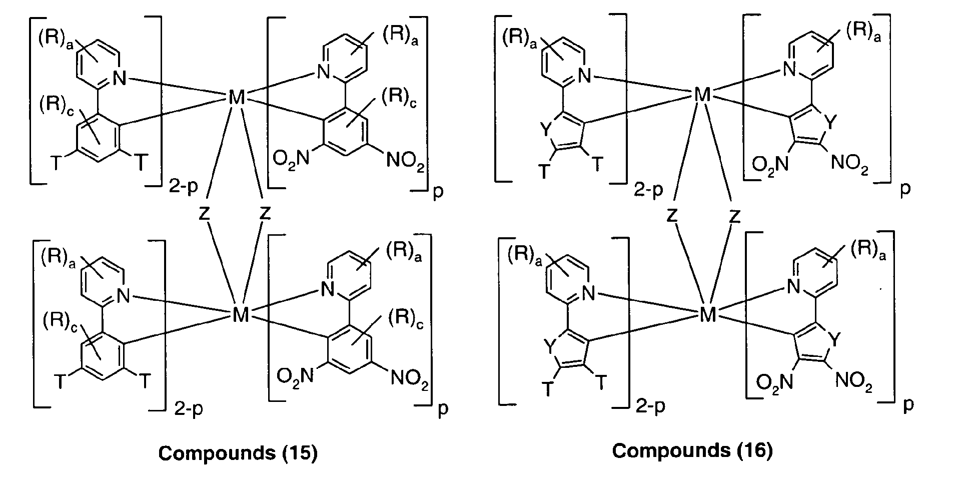 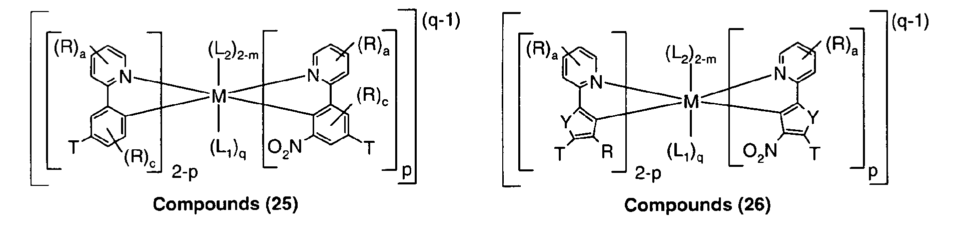 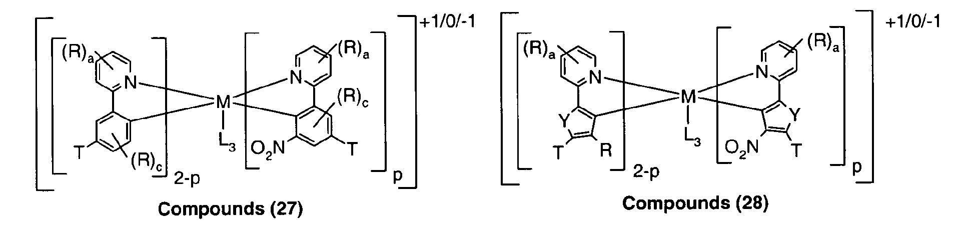 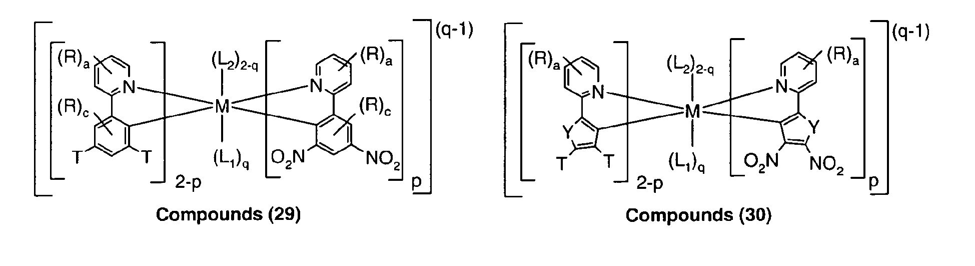 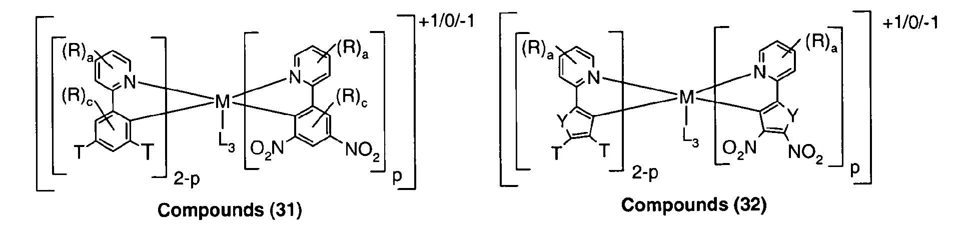 where the symbols and indices have the meanings mentioned in Claim 1.

7. Compounds according to Claim 6, **characterised in that** their purity (determined by means of 1 H-NMR or HPLC) is greater than 99%.

8. Electronic component comprising at least one compound according to Claim 6 or 7.

9. Electronic component according to Claim 8, **characterised in that** it is an organic light-emitting diode (OLED), organic integrated circuit (O-IC), organic field-effect transistor (OFET), organic thin-film transistor (OTFT), organic solar cell (O-SC) or organic laser diode (O-laser).

## Revendications

1. Procédé pour la préparation des composés des formules (1) à (32) et (1 a) à (8a): 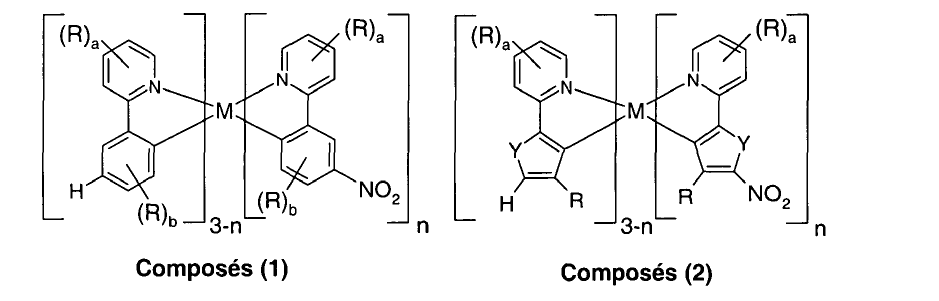 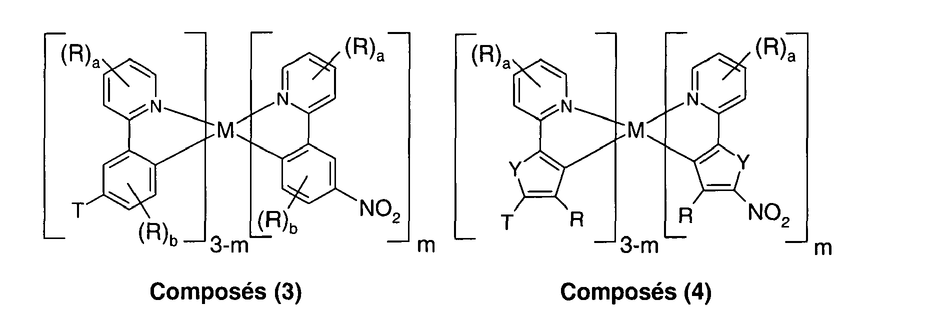 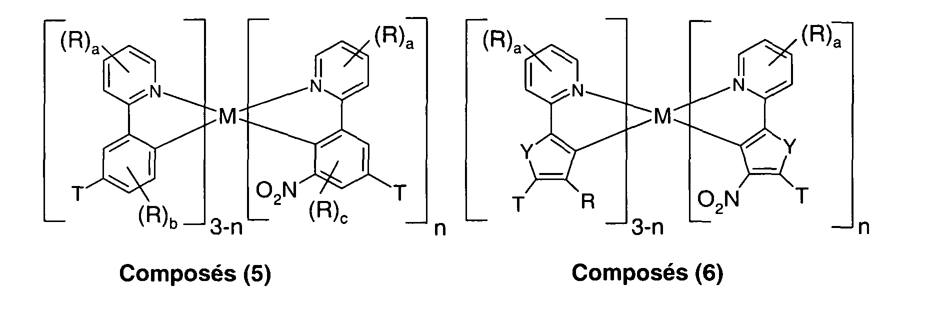 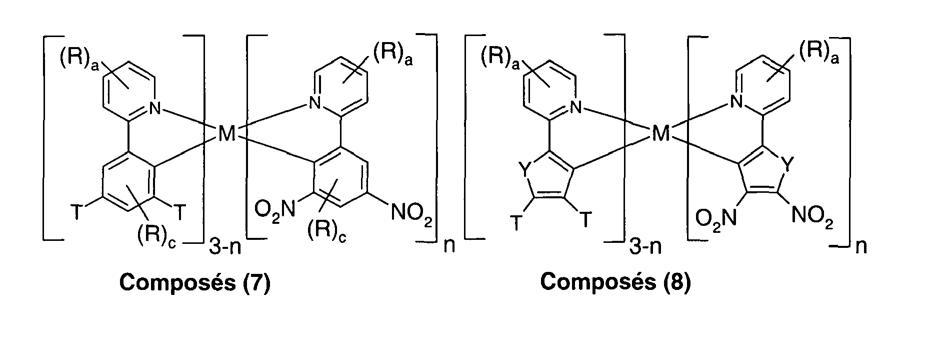 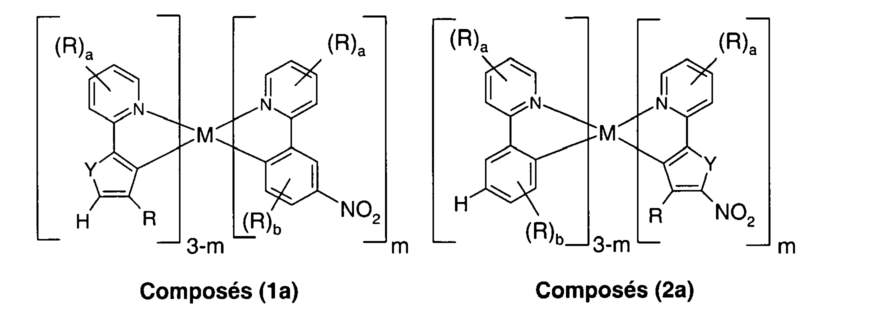 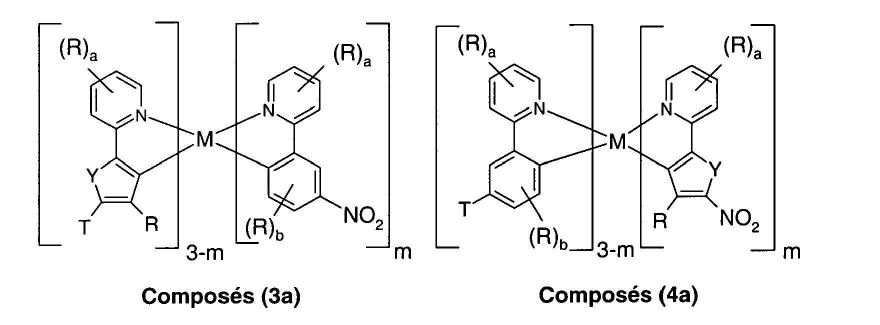 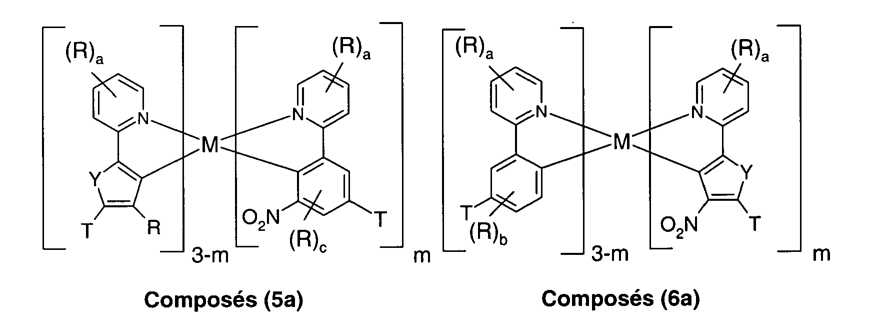 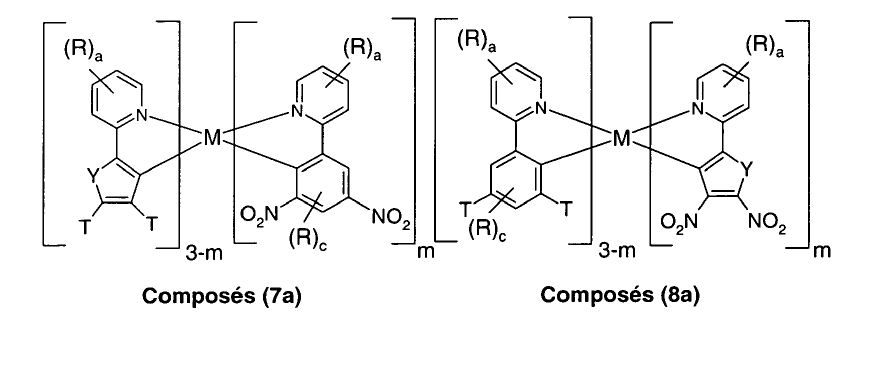 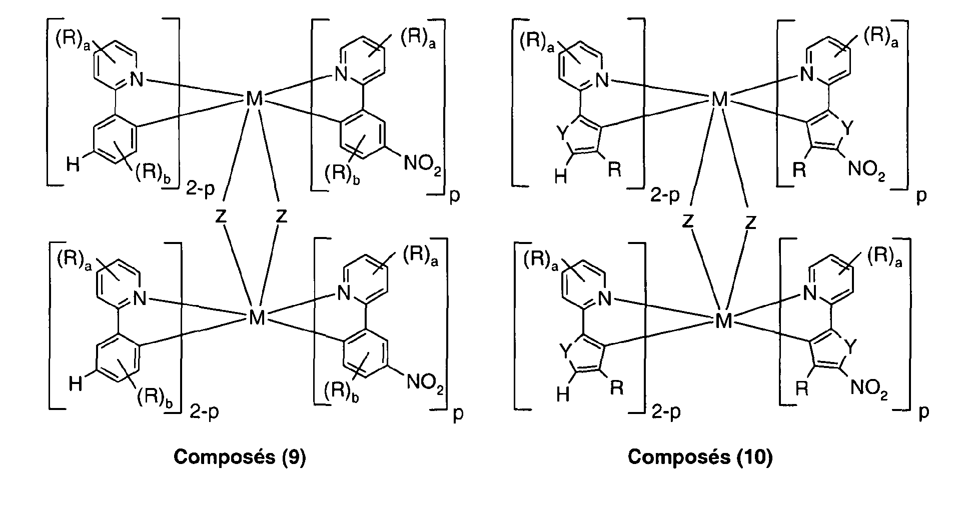 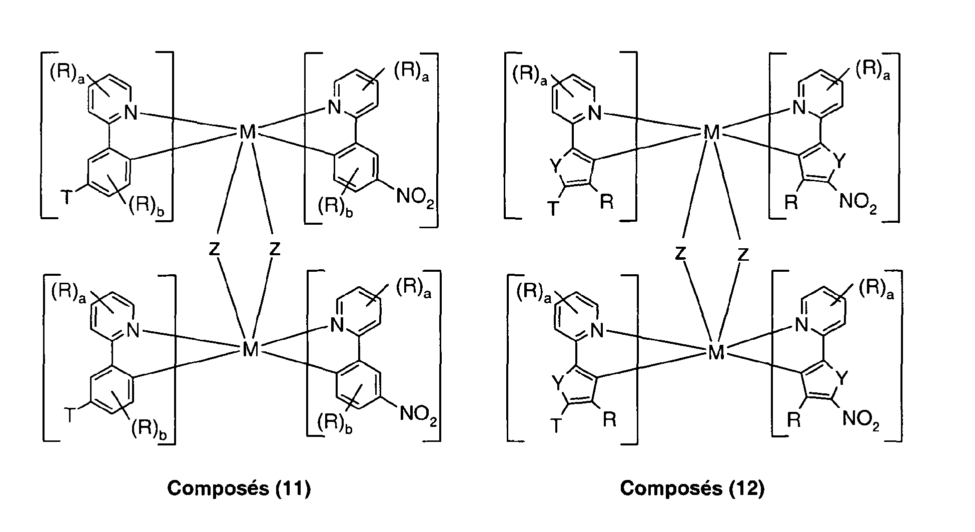 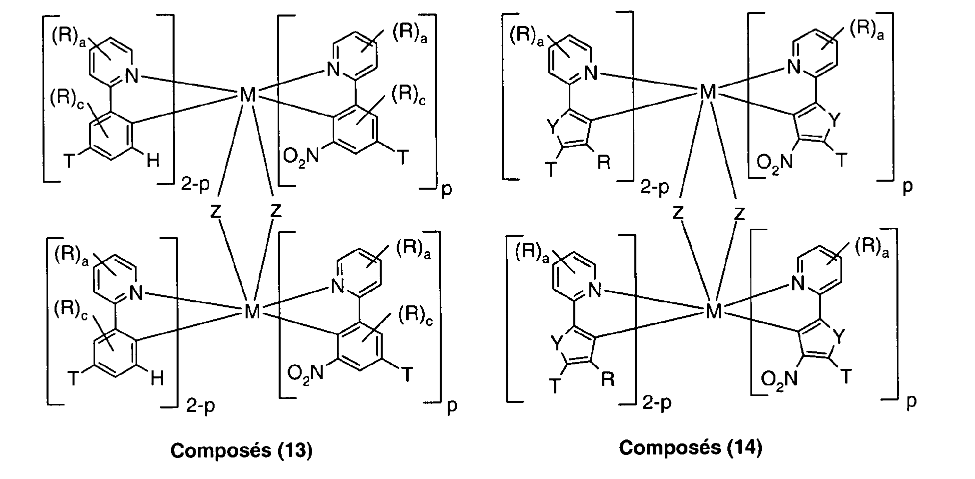 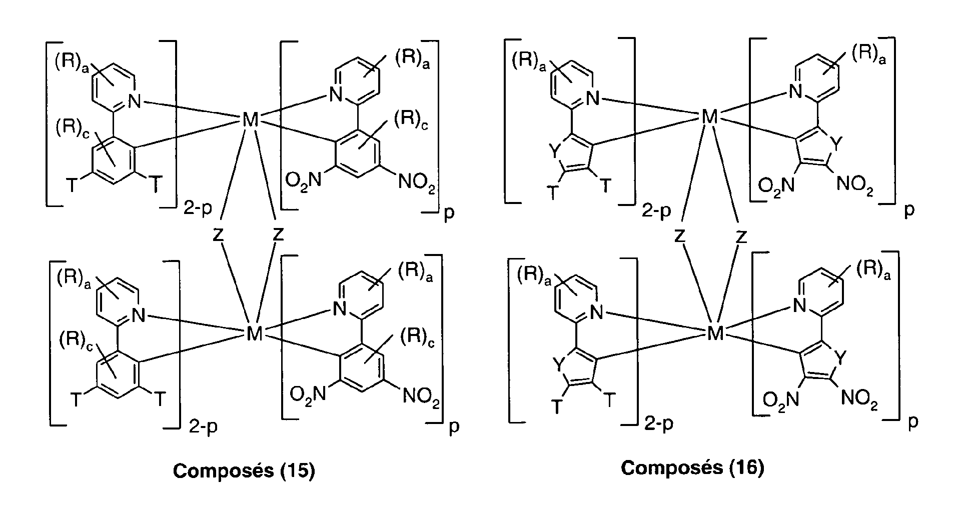 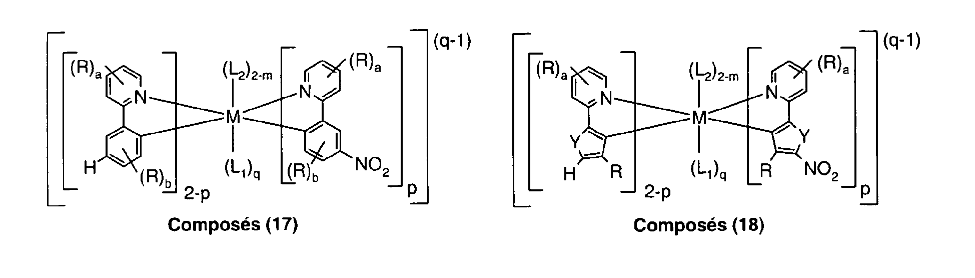 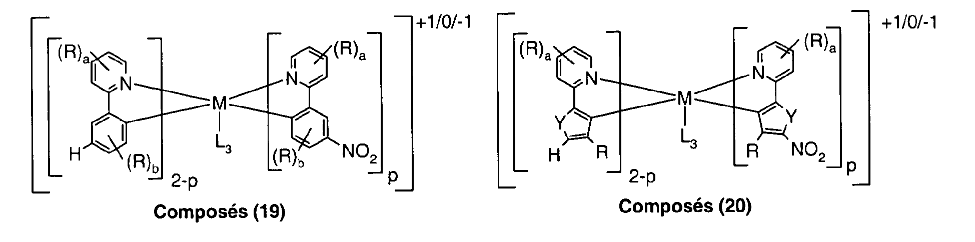 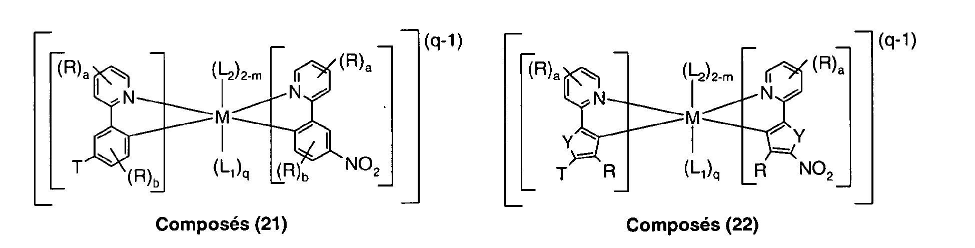 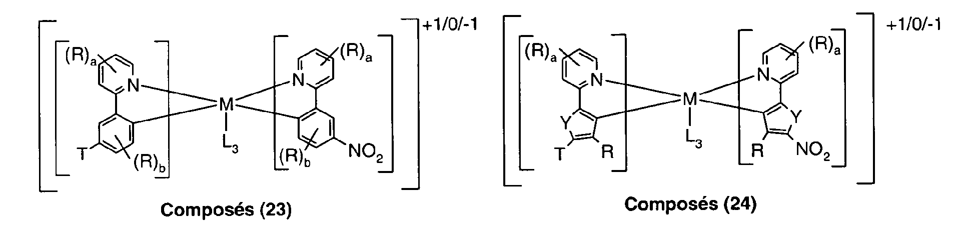 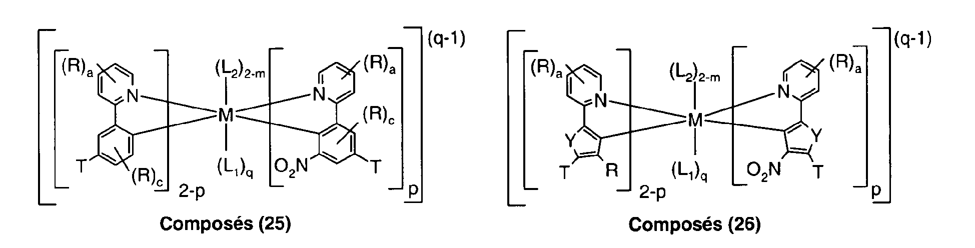 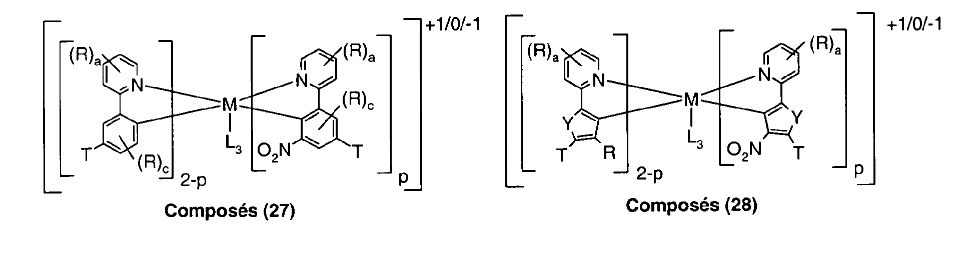 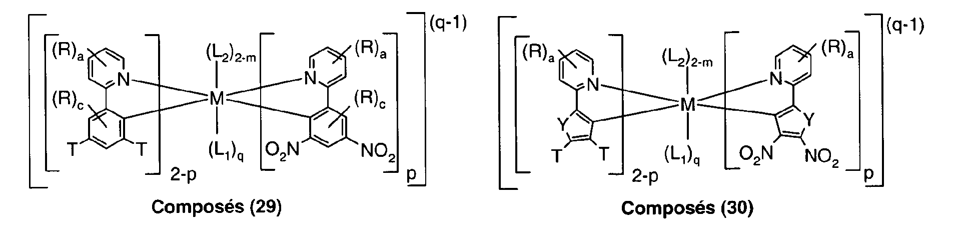 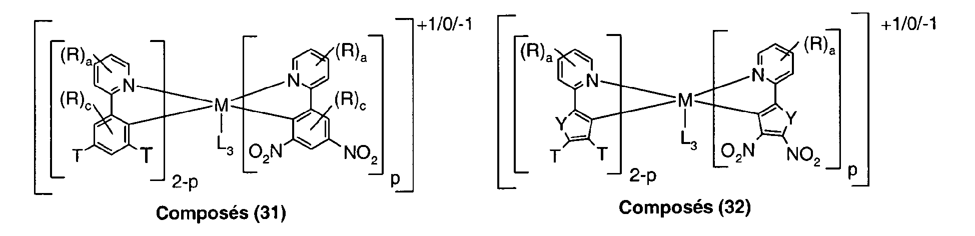 dans lesquelles les symboles et indices présentent la signification qui suit:
M représente Rh, Ir;
Y représente O, S, Se, NR¹;
Z est égal à F, CI, Br, I, O-R¹, S-R¹, N(R¹)₂;
R est, de manière identique ou différente lors de chaque occurrence, H, F, Cl, Br, CN, un groupe alkyle ou alcoxy en chaîné droite ou ramifié ou cyclique comportant de 1 à 20 atomes de C, où un ou plusieurs groupes CH₂ non adjacents peuvent être remplacés par -O-, -SiR¹₂-, -S-, -NR¹- ou -CONR¹- et où un ou plusieurs atomes de H peuvent être remplacés par F, ou un groupe aryle ou hétéroaryle comportant de 4 à 14 atomes de C, qui peuvent être substitués par un ou plusieurs radicaux non aromatiques R, où une pluralité de substituants R, à la fois sur le même cycle et également sur les deux cycles différents, peuvent définir ensemble à leur tour un autre système de cycles aliphatiques ou aromatiques, mono- ou polycycliques;
T est, de manière identique ou différente lors de chaque occurrence, F, CI, Br, CN, un groupe alkyle ou alcoxy en chaîné droite ou ramifié ou cyclique comportant de 1 à 20 atomes de C, où un ou plusieurs groupes CH₂ non adjacents peuvent être remplacés par -O-, -SiR¹₂-, -S-, -NR¹- ou -CONR¹- et où un ou plusieurs atomes de H peuvent être remplacés par F, ou un groupe aryle ou hétéroaryle comportant de 4 à 14 atomes de C, qui peuvent être substitués par un ou plusieurs radicaux non aromatiques R, où une pluralité de substituants R, à la fois sur le même cycle et également sur les deux cycles différents, peuvent définir ensemble à leur tour un autre système de cycles aliphatiques ou aromatiques, mono- ou polycycliques;
R¹ est, de manière identique ou différente lors de chaque occurrence, H ou un radical hydrocarbure aliphatique ou aromatique comportant de 1 à 20 atomes de C;
L₁ est un ligand monodenté neutre;
L₂ est un ligand monodenté monoanionique;
L₃ est un ligand bidenté neutre ou mono- ou dianionique;
a est 0, 1, 2, 3 ou 4;
b est 0, 1, 2 ou 3;
c est 0, 1 ou 2;
m est 1 ou 2;
n est 1, 2 ou 3;
p est 1 ou 2;
q est 0, 1 ou 2;
par réaction de composés (33) à (64): 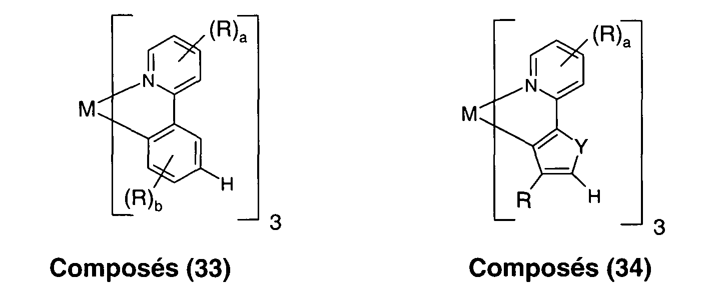 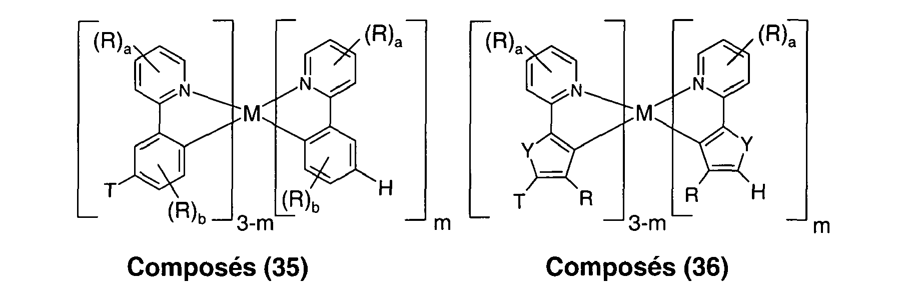 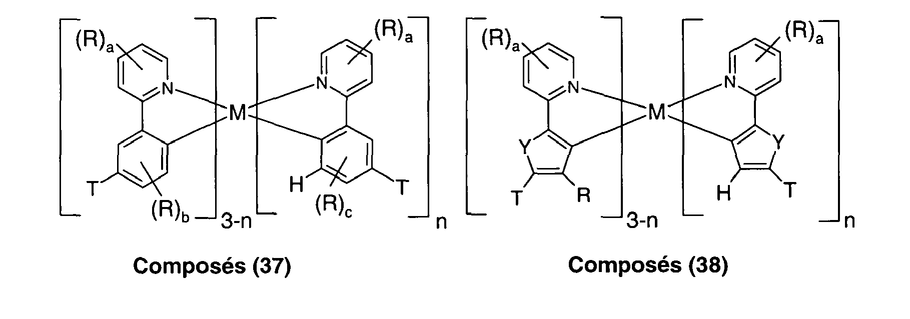 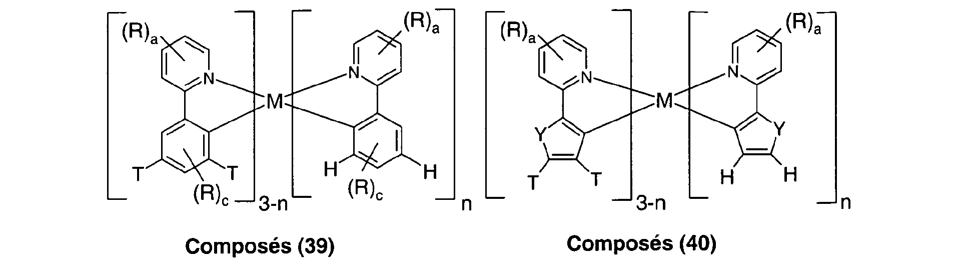 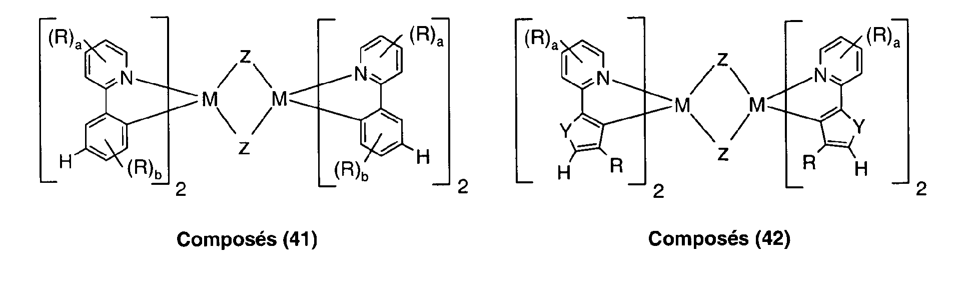 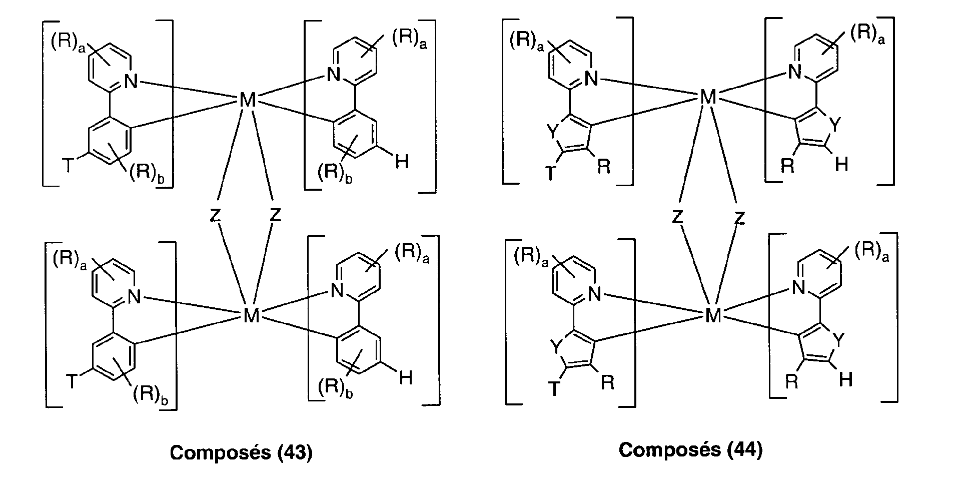 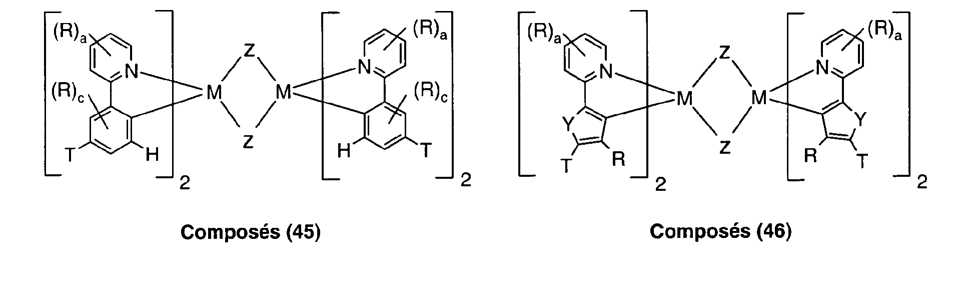 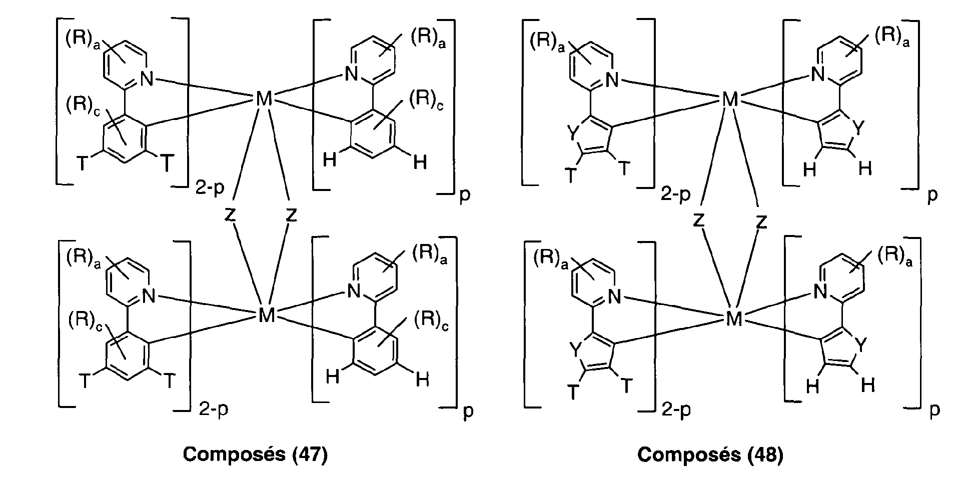 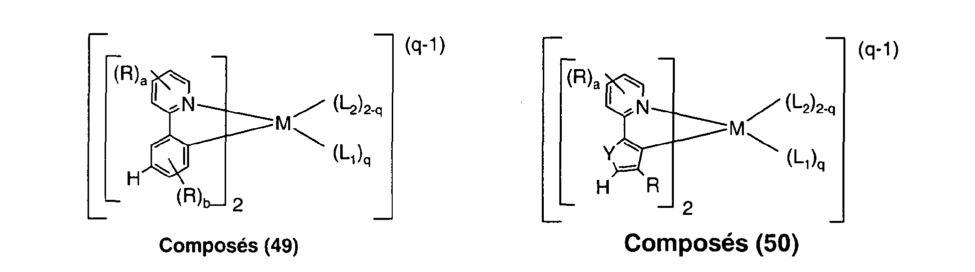 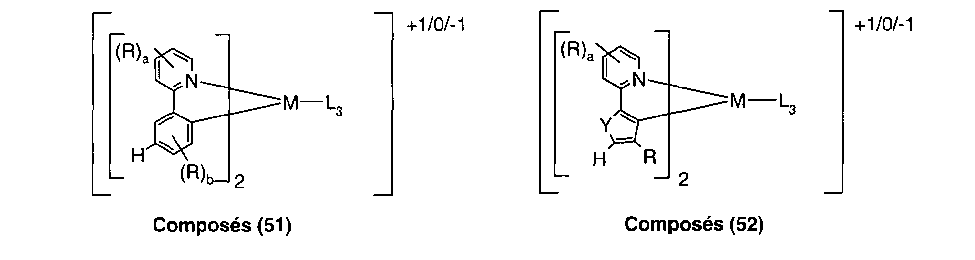 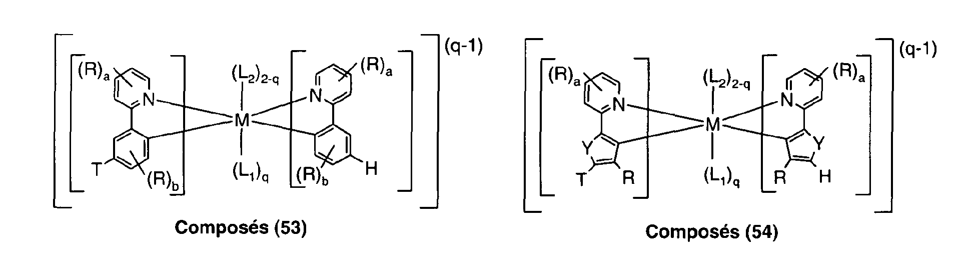 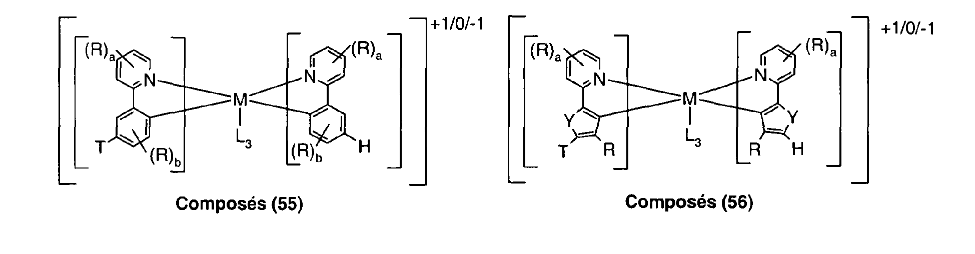 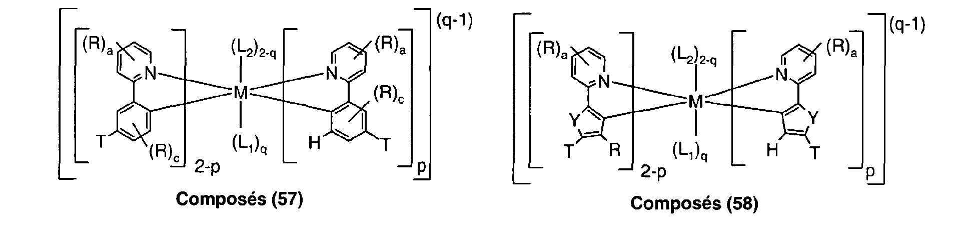 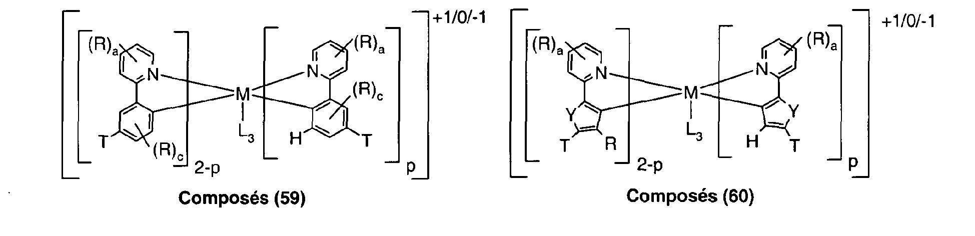 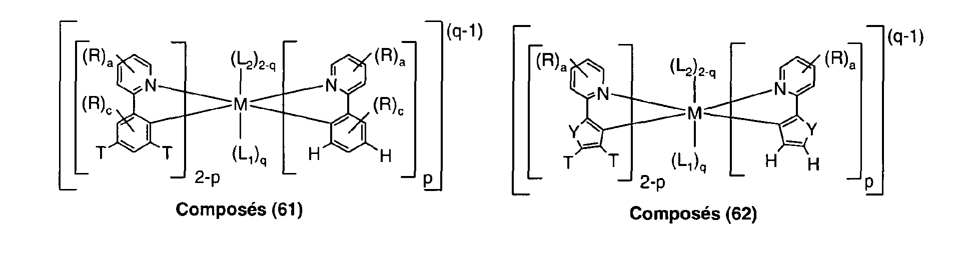 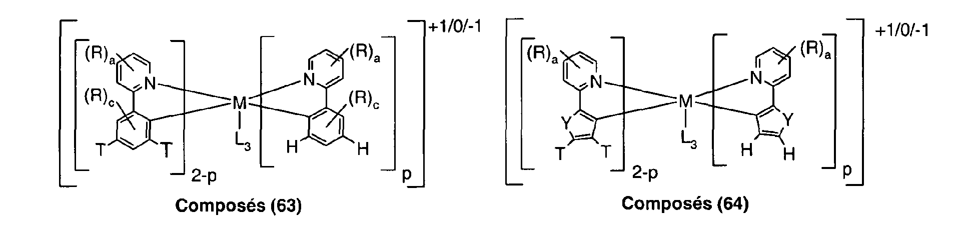 dans lesquelles M et les radicaux et indices Y, Z, R, T, R¹, L₁, L₂, L₃, a, b, m, n, p et q présentent les significations mentionnées ci avant, avec des agents de nitrification.

2. Procédé selon la revendication 1, **caractérisé en ce que** l'agent de nitrification utilisé est acide nitrique, en option en combinaison avec un autre acide, tel que, par exemple, acide sulfurique ou acide phosphorique.

3. Procédé selon la revendication 1, **caractérisé en ce que** l'agent de nitrification utilisé est tétroxyde de diazote ou pentoxyde de diazote.

4. Procédé selon la revendication 1, **caractérisé en ce que** l'agent de nitrification utilisé est constitué par des sels de nitronium du type NO₂A, où A est un anion inerte approprié, tel que BF₄⁻, PF₆⁻, SbF₆⁻ ou CF₃SO₃⁻.

5. Procédé selon la revendication 1, **caractérisé en ce que** l'agent de nitrification utilisé est constitué par des nitrates de métaux alcalins ou alcalinoterreux, tels que nitrate de lithium, de sodium, de potassium ou de magnésium, ou par des nitrates de métaux de transition, tels que nitrate de fer(II), de fer(III), de cobalt(II), de cobalt(III), de nickel(II) ou de cuivre(II), en option en présence d'un acide, tel que acide sulfurique, acide phosphorique, acide acétique, acide propionique ou acide trifluoroacétique, et/ou d'un anhydride carboxylique, tel que anhydride acétique ou anhydride propionique, ou des mélanges afférents.

6. Composé des formules (6), (7), (8), (5a), (6a), (7a), (8a), (13), (14), (15), (16), (25), (26), (27), (28), (29), (30), (31) et (32): 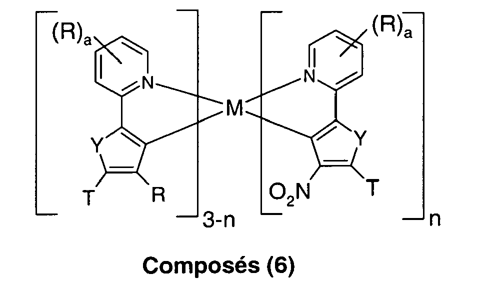 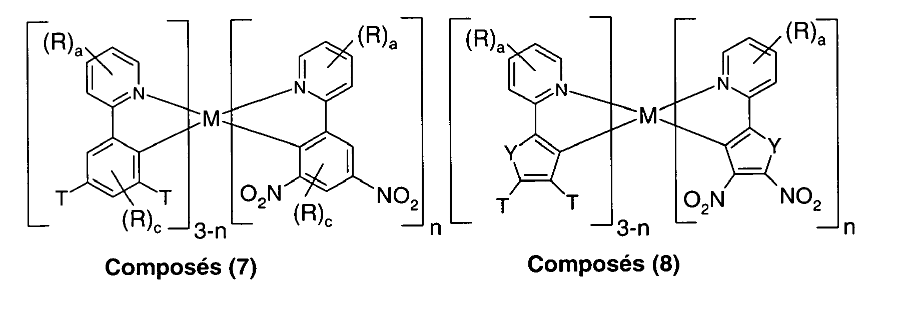 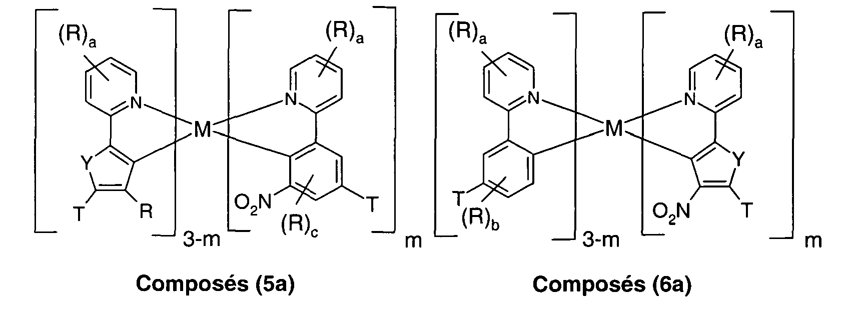 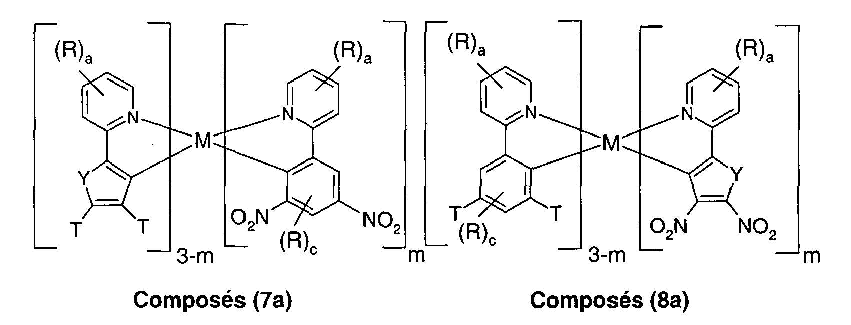 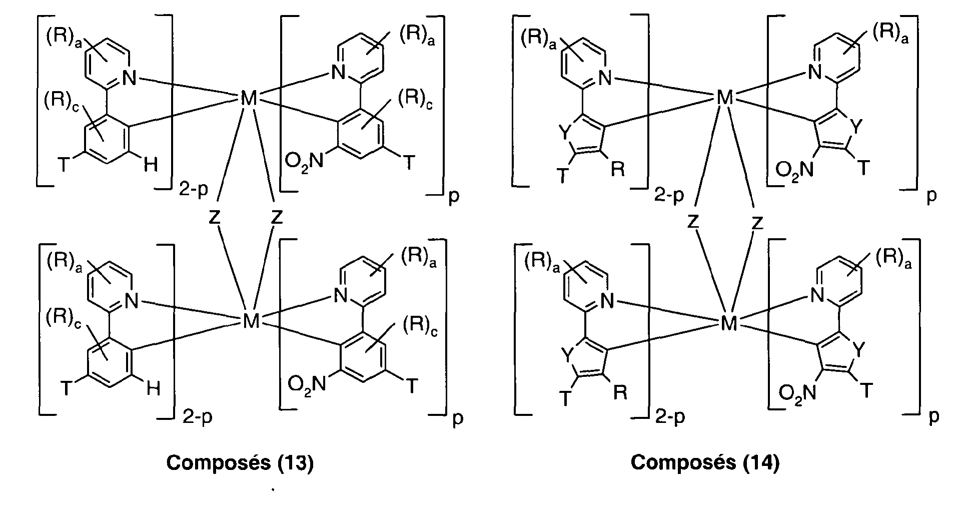 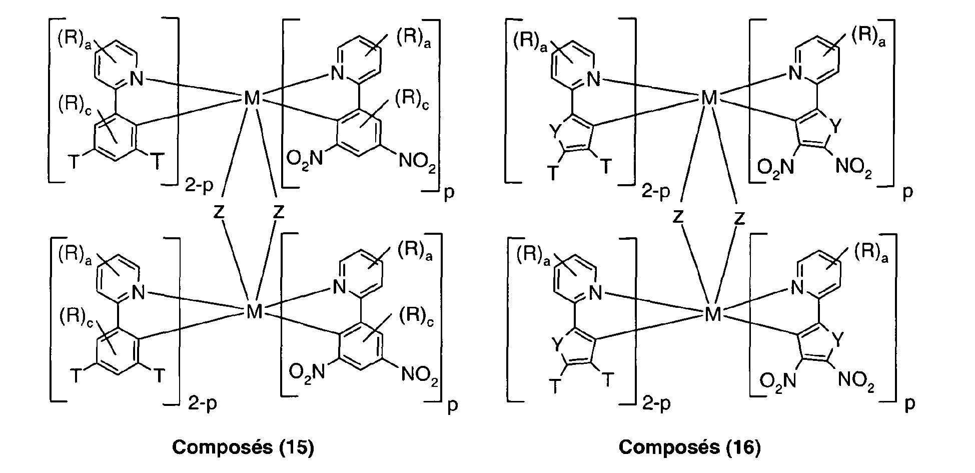 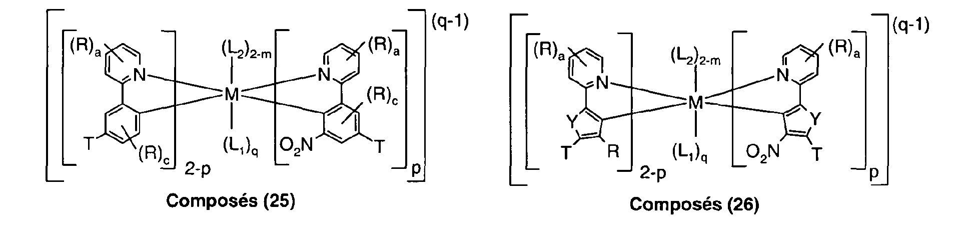 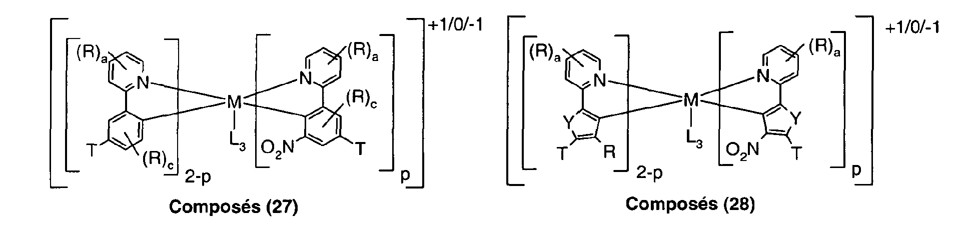 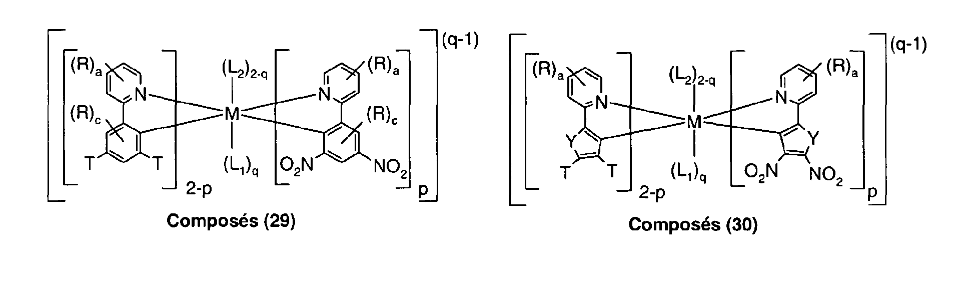 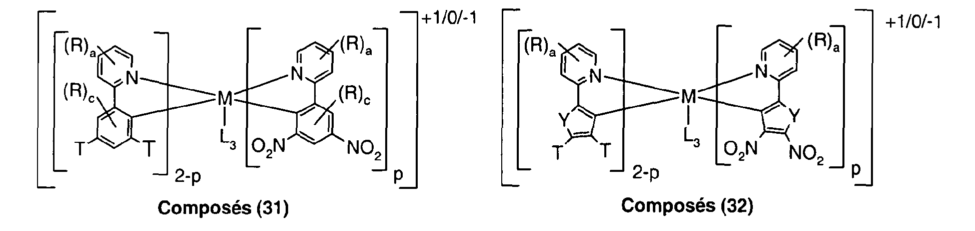 dans lesquelles les symboles et indices présentent les significations mentionnées dans la revendication 1.

7. Composés selon la revendication 6, **caractérisés en ce que** leur pureté (déterminée au moyen d'une 1 H-RMN ou d'une HPLC) est supérieure à 99%.

8. Composant électronique comprenant au moins un composé selon la revendication 6 ou 7.

9. Composant électronique selon la revendication 8, **caractérisé en ce qu'**il s'agit d'une diode émettrice de lumière organique (OLED), d'un circuit intégré organique (O-IC), d'un transistor à effet de champ organique (OFET), d'un transistor à film mince organique (OTFT), d'une cellule solaire organique (O-SC) ou d'une diode laser organique (O-laser).
